# EUROPEAN PATENT APPLICATION

(11) **EP 4 852 589 A1**
(43) Date of publication of application: **09.12.2026**
(21) Application number: 25755291.9
(22) Date of filing: 17.02.2025
(51) Int. Cl.: H04W 72/231, H04W 72/232, H04W 72/1268, H04W 52/14, H04W 52/24

(54) **METHOD AND APPARATUS FOR UPLINK TRANSMISSION IN COOPERATIVE COMMUNICATION NETWORK**

(30) Priority: 15.02.2024 KR 20240021973
(71) Applicant: Samsung Electronics Co., Ltd., Suwon-si, Gyeonggi-do 16677 (KR)
(72) Inventor: JANG, Youngrok, Suwon-si, Gyeonggi-do 16677 (KR); ABEBE, Ameha Tsegaye, Suwon-si, Gyeonggi-do 16677 (KR); LIM, Seongmok, Suwon-si, Gyeonggi-do 16677 (KR); JI, Hyoungju, Suwon-si, Gyeonggi-do 16677 (KR); CHOI, Kyungjun, Suwon-si, Gyeonggi-do 16677 (KR)
(74) Representative: Nederlandsch Octrooibureau
(86) International application number: PCT/KR2025/002262
(87) International publication number: WO 2025/174149

(57) **Abstract**

The present disclosure relates to a 5G or 6G communication system for supporting a higher data transmission rate. A method for uplink transmission in a wireless communication system may comprise the operations of: receiving, from a base station, upper layer signaling including information related to a method for determining uplink transmission power related to a plurality of TRPs; transmitting uplink signals to the plurality of TRPs on the basis of the upper layer signaling; receiving, from the base station, signaling indicating an update of information related to the amount of path loss; and on the basis of the signaling, transmitting an uplink for an uplink-only TRP from among the TRPs.

## Description

### [Technical Field]

The disclosure relates to a wireless communication system, and more particularly, to an uplink transmission method considering path loss in network cooperative communication and a device capable of scheduling the same.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

Disclosed embodiments provide a device and method for effectively providing a service in a mobile communication system.

The disclosed embodiment relates to an uplink transmission method considering path loss in network cooperative communication and a device capable of scheduling the same.

The disclosed embodiment relates to a method and device for determining a transmission configuration indicator (TCI) considering a TRP supporting only uplink reception.

The disclosed embodiment relates to a method and device for configuring a cell list including a cell to which a transmission configuration indicator is indicated.

The disclosed embodiment relates to a method and device for determining a transmission configuration indicator for a cell list including a cell including a TRP supporting only uplink reception and a cell including only TRPs supporting both uplink and downlink.

### [Technical Solution]

A method for uplink transmission in a wireless communication system according to an embodiment of the disclosure may include an operation of receiving, from a base station, higher layer signaling including information related to a method for determining uplink transmit power related to a plurality of transmit/receive points (TRPs), an operation of transmitting uplink signals to the plurality of TRPs based on the higher layer signaling, an operation of receiving, from the base station, signaling indicating update of path loss related information, and an operation of performing uplink transmission to an uplink-only TRP among the TRPs based on the signaling.

A method for scheduling uplink transmission in a wireless communication system according to an embodiment of the disclosure may include an operation of transmitting, to a UE, higher layer signaling including information related to a method for determining uplink transmit power related to a plurality of transmit/receive points (TRPs), an operation of receiving uplink signals from the UE through the plurality of TRPs based on the higher layer signaling, an operation of transmitting, to the UE, signaling indicating update of path loss related information after receiving the uplink signals, and an operation of receiving an uplink signal from the UE through an uplink-only TRP among the TRPs based on the signaling.

A user equipment (UE) performing uplink transmission in a wireless communication system according to an embodiment of the disclosure includes a transceiver and a processor coupled to the transceiver, and the processor may be configured to perform an operation of receiving, from a base station, higher layer signaling including information related to a method for determining uplink transmit power related to a plurality of transmit/receive points (TRPs), an operation of transmitting uplink signals to the plurality of TRPs based on the higher layer signaling, an operation of receiving, from the base station, signaling indicating update of path loss related information, and an operation of performing uplink transmission to an uplink-only TRP among the TRPs based on the signaling.

A base station for scheduling uplink transmission in a wireless communication system according to an embodiment of the disclosure includes a transceiver and a processor coupled to the transceiver, and the processor may be configured to perform an operation of transmitting, to a UE, higher layer signaling including information related to a method for determining uplink transmit power related to a plurality of transmit/receive points (TRPs), an operation of receiving uplink signals from the UE through the plurality of TRPs based on the higher layer signaling, an operation of transmitting, to the UE, signaling indicating update of path loss related information after receiving the uplink signals, and an operation of receiving an uplink signal from the UE through an uplink-only TRP among the TRPs based on the signaling.

### [Advantageous Effects]

The disclosed embodiment may effectively provide a service in a mobile communication system.

The disclosed embodiment may provide an efficient uplink transmission method considering path loss in network cooperative communication.

### [Brief Description of Drawings]

FIG. 1 is a view illustrating a basic structure of a time-frequency domain in a wireless communication system according to an embodiment of the disclosure.
FIG. 2 is a view illustrating the structures of a frame, a subframe, and a slot in a wireless communication system according to an embodiment of the disclosure.
FIG. 3 is a view illustrating an example of bandwidth part configuration in a wireless communication system according to an embodiment of the disclosure.
FIGS. 4A, 4B, and 4C are views illustrating a radio protocol structure of a base station and a UE in a single cell, carrier aggregation (CA), and dual connectivity (DC) in a wireless communication system according to an embodiment of the disclosure.
FIGS. 5A and 5B are views illustrating a beam application time that may be considered when using a unified transmission configuration indicator (TCI) scheme in a wireless communication system according to an embodiment of the disclosure.
FIG. 6 is a view illustrating another MAC-CE structure for activation and indication of a joint TCI state or separate DL or UL TCI state in a wireless communication system according to an embodiment of the disclosure.
FIG. 7 is a view illustrating an example configuration of a control region of a downlink control channel in a wireless communication system according to an embodiment of the disclosure.
FIG. 8 is a view illustrating a structure of a downlink control channel in a wireless communication system according to an embodiment of the disclosure.
FIGS. 9A and 9B are views illustrating a process for beam configuration and activation of a physical downlink shared channel (PDSCH) according to an embodiment of the disclosure.
FIGS. 10A, 10B, and 10C are views illustrating an example of antenna port configuration and resource allocation for cooperative communication in a wireless communication system according to an embodiment of the disclosure.
FIGS. 11A, 11B, 11C, and 11D are views illustrating an example of downlink control information (DCI) configuration for cooperative communication in a wireless communication system according to an embodiment of the disclosure.
FIG. 12 is a view illustrating an Enhanced PDSCH TCI state activation/deactivation MAC-
CE structure according to an embodiment of the disclosure.
FIG. 13 is a view illustrating an operation example of a base station and a UE operating as multi-TRP including a TRP supporting only an uplink reception function according to an embodiment of the disclosure.
FIG. 14 is a view illustrating a method for calculating and updating a path loss difference value according to an embodiment of the disclosure.
FIG. 15 is a view illustrating another method for calculating and updating a path loss difference value according to an embodiment of the disclosure.
FIG. 16 is a view illustrating operation of a UE for uplink transmit power control according to an embodiment of the disclosure.
FIG. 17 is a view illustrating an operation of a base station for uplink transmit power control according to an embodiment of the disclosure.
FIG. 18 is a view illustrating operation of a UE for determining uplink transmission scheme according to an embodiment of the disclosure.
FIG. 19 is a view illustrating operation of a base station for determining uplink transmission scheme according to an embodiment of the disclosure.
FIG. 20 is a view illustrating a MAC-CE structure for activation and indication of a separate DL or UL TCI state based on a unified TCI framework for multi-TRP support according to an embodiment of the disclosure.
FIG. 21 is a view illustrating a MAC-CE structure for activation and indication of a joint TCI state based on a unified TCI framework for multi-TRP support according to an embodiment of the disclosure.
FIGS. 22A, 22B, and 22C are views illustrating a MAC-CE structure for activation and indication of a separate DL or UL TCI state based on a unified TCI framework for multi-TRP support including a UL-only TRP according to an embodiment of the disclosure.
FIG. 23 is a view illustrating a MAC-CE structure for activation and indication of joint TCI state and UL TCI state based on a unified TCI framework for multi-TRP support including a UL-only TRP according to an embodiment of the disclosure.
FIG. 24 is a view illustrating operation of a UE for applying TCI state activation and indication according to an embodiment of the disclosure.
FIG. 25 is a view illustrating an operation of a base station for applying TCI state activation and indication according to an embodiment of the disclosure.
FIG. 26 is a view illustrating a structure of a UE according to an embodiment of the disclosure.
FIG. 27 is a view illustrating a structure of a base station according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the disclosure is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skill in the art of the category of the present disclosure. The present invention is defined only by the appended claims. The same reference numeral denotes the same element throughout the specification. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

Hereinafter, the base station may be an entity allocating resource to terminal and may be at least one of gNode B, eNode B, Node B, base station (BS), wireless access unit, base station controller, or node over network. The terminal may include a user equipment (UE), a mobile station (MS), a cellular phone, a smartphone, a computer, or a multimedia system capable of performing communication functions. In the disclosure, downlink (DL) refers to a wireless transmission path of signal transmitted from the base station to the terminal, and uplink (UL) refers to a wireless transmission path of signal transmitted from the terminal to the base station. Further, although LTE- or LTE-A-based system is described in connection with embodiments of the present invention, as an example, embodiments of the present invention may also apply to other communication systems with similar technical background or channel form. For example, 5G mobile communication technology (5G, new radio, NR) developed after LTE-A may be included therein, and 5G below may be a concept including legacy LTE, LTE-A and other similar services. Further, the embodiments may be modified in such a range as not to significantly depart from the scope of the present invention under the determination by one of ordinary skill in the art and such modifications may be applicable to other communication systems.

In this case, it may be understood that each block of processing flowchart drawings and combinations of flowchart drawings may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

Wireless communication systems evolve beyond voice-centered services to broadband wireless communication systems to provide high data rate and high-quality packet data services, such as 3rd generation partnership project (3GPP) high speed packet access (HSPA), long term evolution (LTE) or evolved universal terrestrial radio access (E-UTRA)), LTE-advanced (LTE-A), LTE-pro, 3GPP2 high rate packet data (HRPD), ultra mobile broadband (UMB), and institute of electrical and electronics engineers (IEEE) 802.16e communication standards.

As a representative example of such broadband wireless communication system, the LTE system adopts orthogonal frequency division multiplexing (OFDM) for downlink and single carrier frequency division multiple access (SC-FDMA) for uplink. Uplink means a wireless link where the user equipment (UE) (or mobile station (MS) transmits data or control signals to the base station (BS, or eNode B), and downlink means a wireless link where the base station transmits data or control signals to the UE. Such multiple access scheme may typically allocate and operate time-frequency resources carrying data or control information per user not to overlap, i.e., to maintain orthogonality, to thereby differentiate each user's data or control information.

Post-LTE communication systems, e.g., 5G communication systems, are required to freely reflect various needs of users and service providers and thus to support services that simultaneously meet various requirements. Services considered for 5G communication systems include, e.g., enhanced mobile broadband (eMBB), massive machine type communication (MMTC), and ultra reliability low latency communication (URLLC).

eMBB aims to provide a further enhanced data transmission rate as compared with LTE, LTE-A, or LTE-pro. For example, eMBB for 5G communication systems needs to provide a peak data rate of 20Gbps on downlink and a peak data rate of 10Gbps on uplink in terms of one base station. 5G communication systems also need to provide an increased user perceived data rate while simultaneously providing such peak data rate. To meet such requirements, various transmit (TX)/receive (RX) techniques, as well as multiple input multiple output (MIMO), need to further be enhanced. While LTE adopts a TX bandwidth up to 20MHz in the 2GHz band to transmit signals, the 5G communication system employs a broader frequency bandwidth in a frequency band ranging from 3GHz to 6GHz or more than 6GHz to meet the data rate required for 5G communication systems.

mMTC is also considered to support application services, such as internet of things (IoT) in the 5G communication system. To efficiently provide IoT, mMTC is required to support massive UEs in the cell, enhance the coverage of the UE and the battery time, and reduce UE costs. IoT terminals are attached to various sensors or devices to provide communication functionality, and thus, it needs to support a number of UEs in each cell (e.g., 1,000,000 UEs/km²). Since mMTC-supportive UEs, by the nature of service, are highly likely to be located in shadow areas not covered by the cell, such as the underground of a building, it may require much broader coverage as compared with other services that the 5G communication system provides. mMTC-supportive UEs, due to the need for being low cost and difficulty in frequently exchanging batteries, may be required to have a very long battery life, e.g., 10 years to 15years.

URLLC is a mission-critical, cellular-based wireless communication service. For example, URLLC may be considered for use in remote control for robots or machinery, industrial automation, unmanned aerial vehicles, remote health care, or emergency alert. This requires that URLLC provide very low-latency and very high-reliability communication. For example, URLLC-supportive services need to meet an air interface latency of less than 0.5 milliseconds simultaneously with a packet error rate of 10⁻⁵ or less. Thus, for URLLC-supportive services, the 5G communication system may be required to provide a shorter transmit time interval (TTI) than those for other services while securing reliable communication links by allocating a broad resource in the frequency band.

The three 5G services, i.e., eMBB, URLLC, and mMTC, may be multiplexed in one system and be transmitted. The services may adopt different TX/RX schemes and TX/RX parameters to meet their different requirements. Of course, 5G is not limited to the above-described three services.

Hereinafter, a/b may be understood as at least one of a or b.

### [NR time-frequency resource]

The frame structure of the 5G system is described below in more detail with reference to the drawings.

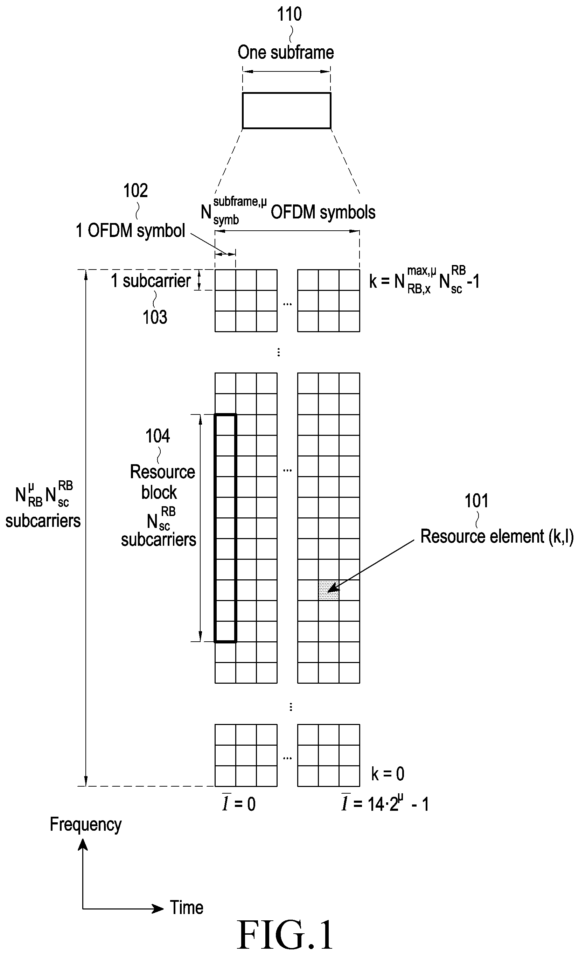

FIG. 1 is a view illustrating a basic structure of a time-frequency domain, which is a radio resource region in which data or control channels are transmitted in a 5G system.

In FIG. 1, the horizontal axis refers to the time domain, and the vertical axis refers to the frequency domain. A basic unit of a resource in the time and frequency domain is a resource element (RE) 101, which may be defined by one OFDM symbol 102 on the time axis, and by one subcarrier 103 on the frequency axis. In the frequency domain. ${N}_{sc}^{RB}$ (e.g., 12) consecutive REs may constitute one resource block (RB) 104. On the time axis, one subframe 110 may include a plurality of OFDM symbols 102. For example, the length of one subframe may be 1 ms.

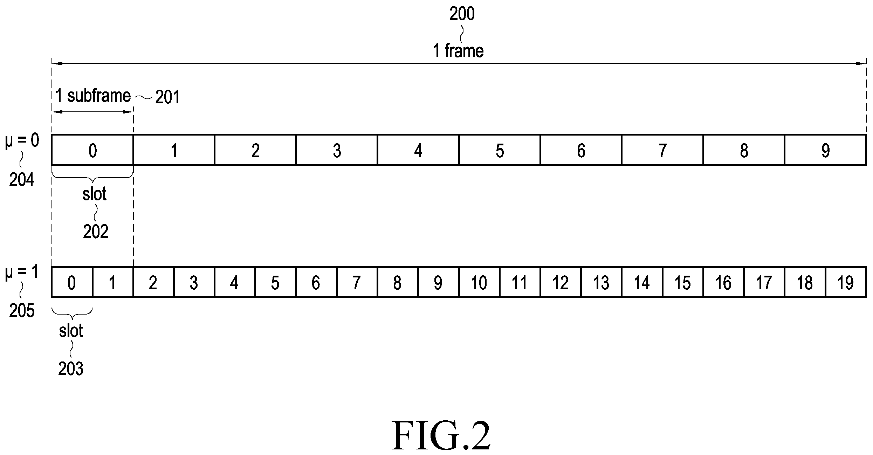

FIG. 2 is a view illustrating the structures of a frame, a subframe, and a slot in a wireless communication system according to an embodiment of the disclosure.

FIG. 2 illustrates an example structure of a frame 200, a subframe 201, and a slot 202. One frame 200 may be defined as 10 ms. One subframe 201 may be defined as 1 ms, and thus, one frame 200 may consist of a total of 10 subframes 201. One slot 202 or 203 may be defined as 14 OFDM symbols (that is, the number ( ${N}_{symb}^{slot}$) of symbols per slot=14). One subframe 201 may be composed of one or more slots 202 and 203, and the number of slots 202 and 203 per subframe 201 may differ depending on µ (204 or 205), which is a set value for the subcarrier spacing.

FIG. 2 illustrates an example in which the subcarrier spacing setting value µ=0 (204) and an example in which the subcarrier spacing setting value µ=1 (205). When µ = 0 (204), one subframe 201 may consist of one slot 202, and when µ = 1 (205), one subframe 201 may consist of two slots (203). In other words, according to the set subcarrier spacing value µ, the number ( ${N}_{slot}^{subframe , μ}$) of slots per subframe may vary, and accordingly, the number ( ${N}_{slot}^{frame , μ}$) of slots per frame may differ. According to each subcarrier spacing µ, ${N}_{slot}^{subframe , μ}$ and ${N}_{slot}^{frame , μ}$ may be defined in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [Bandwidth part (BWP)]

A configuration of a bandwidth part (BWP) in a 5G communication system is described below in detail with reference to the drawings.

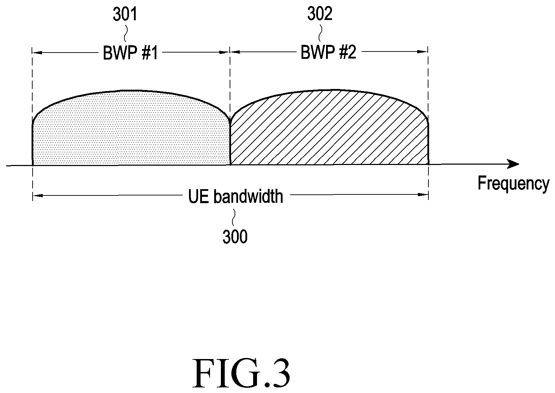

FIG. 3 is a view illustrating an example of a bandwidth part configuration in a wireless communication system according to an embodiment of the disclosure.

FIG. 3 illustrates an example in which a UE bandwidth 300 is divided into two bandwidth parts, e.g., bandwidth part #1 (BWP #1) 301 and bandwidth part #2 (BWP #2) 302. The base station may configure one or more bandwidth parts in the UE and, for each bandwidth part, information as illustrated in Table 2 below may be configured.

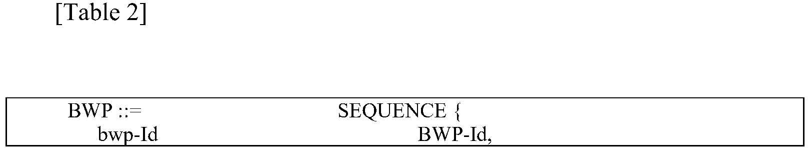

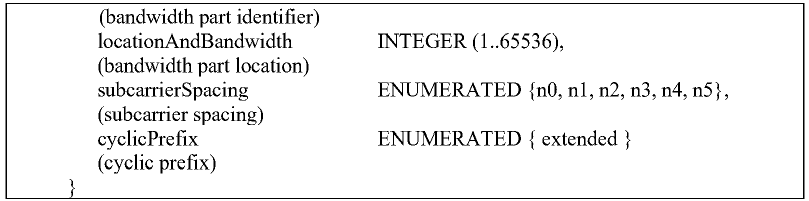

However, without being limited thereto, other various BWP-related parameters than the above-described configuration information may be configured in the UE. The base station may transfer the information to the UE through higher layer signaling, e.g., radio resource control (RRC) signaling. At least one bandwidth part among one or more configured bandwidth parts may be activated. Whether to activate the configured bandwidth part may be transferred from the base station to the UE semi-statically through RRC signaling or dynamically through DCI.

According to an embodiment, before RRC connection, the UE may be configured with an initial bandwidth part (BWP) for initial access by the base station via a master information block (MIB). More specifically, the UE may receive configuration information for a search space and control region (CORESET) in which physical downlink control channel (PDCCH) may be transmitted to receive system information (remaining system information, RMSI or system information block 1 which may correspond to SIB1) necessary for initial access through the MIB in the initial access phase. Each of the control region and search space configured with the MIB may be regarded as identity (ID) 0.

The base station may provide the UE with configuration information, such as frequency allocation information, time allocation information, and numerology for control region #0, via the MIB. Further, the base station may provide the UE with configuration information for monitoring occasion and monitoring period for control region #0, i.e., configuration information for search space #0, via the MIB. The UE may regard the frequency range set as control region #0 obtained from the MIB, as the initial BWP for initial access. In this case, the identity (ID) of the initial BWP may be regarded as 0.

The configuration of the bandwidth part supported in 5G described above may be used for various purposes.

According to an embodiment, when the bandwidth supported by the UE is smaller than the system bandwidth, this may be supported through the bandwidth part configuration. For example, as the base station configures the UE with the frequency position (configuration information 2) of the bandwidth part, the UE may transmit/receive data in a specific frequency position in the system bandwidth.

According to an embodiment, for the purpose of supporting different numerologies, the base station may configure the UE with a plurality of bandwidth parts. For example, to support data transmission/reception using a subcarrier spacing of 15kHz and a subcarrier spacing of 30kHz for some UE, the base station may configure the UE with two bandwidths, as subcarrier spacings of 15kHz and 30kHz. The different bandwidth parts may be frequency division multiplexed (FDM) and, when data is transmitted/received at a specific subcarrier spacing, the bandwidth part configured as the corresponding subcarrier spacing may be activated.

According to an embodiment, for the purpose of reducing power consumption of the UE, the base station may configure the UE with bandwidth parts having different sizes of bandwidths. For example, when the UE supports a bandwidth exceeding a very large bandwidth, e.g., a bandwidth of 100MHz, and transmits/receives data always using the bandwidth, significant power consumption may occur. In particular, it is very inefficient in terms of power consumption to monitor an unnecessary downlink control channel using a large bandwidth of 100 MHz in a situation where there is no traffic. For the purpose of reducing power consumption of the UE, the base station may configure a bandwidth part of a relatively small bandwidth to the UE, e.g., a bandwidth part of 20 MHz, in the UE. In a no-traffic situation, the UE may perform monitoring in the 20MHz bandwidth and, if data occurs, the UE may transmit/receive data in the 100MHz bandwidth according to an instruction from the base station.

In a method for configuring a bandwidth part, UEs before RRC connected may receive configuration information for an initial bandwidth (BWP) via a MIB in the initial access phase. More specifically, the UE may be configured with a control region (CORESET) for the downlink control channel where the DCI scheduling the system information block (SIB) may be transmitted from the MIB of the physical broadcast channel (PBCH). The bandwidth of the configured by the MIB may be regarded as the initial BWP, and the UE may receive the physical downlink shared channel (PDSCH), which transmits the SIB, via the configured initial BWP. The initial BWP may be utilized for other system information (OSI), paging, and random access as well as for receiving SIB.

### [Bandwidth part (BWP) change]

If the UE is configured with one or more BWPs, the base station may indicate, to the UE, a change (or switching or transition) in BWP using the BWP indicator in the DCI. As an example, when the currently activated bandwidth part of the UE is bandwidth part#1 301 in FIG. 3, the base station may indicate, to the UE, bandwidth part#2 302 with the bandwidth part indicator in the DCI, and the UE may change the bandwidth part to bandwidth part#2 302, indicated with the bandwidth part indicator in the received DCI.

As described above, since DCI-based bandwidth part changing may be indicated by the DCI scheduling physical downlink shared channel (PDSCH) or physical uplink shared channel (PUSCH), the UE, if receiving a bandwidth part change request, is supposed to be able to receive or transmit the PDSCH or PUSCH, scheduled by the DCI, in the changed bandwidth part without trouble. To that end, the standard specified requirements for delay time T_{BWP} required upon changing bandwidth part, which may be defined as shown in Table 3 below.

**[Table 3]**

| ***µ*** | **NR Slot length (ms)** | **BWP switch delay T_{BWP} (slots)** | |
|---|---|---|---|
| | | **Type 1^{Note 1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirement for delay of bandwidth part change supports type 1 or type 2 according to the capability of the UE. The UE may report a supportable bandwidth part delay time type to the base station.

If the UE receives, in slot n, DCI including a bandwidth part change indicator according to the above-described requirements for bandwidth part change delay time, the UE may complete a change to the new bandwidth part, indicated by the bandwidth part change indicator, at a time not later than slot n+TBWP, and may perform transmission/reception on the data channel (e.g., PUSCH or PDSCH) scheduled by the DCI in the changed, new bandwidth part.

Upon scheduling data channel in the new bandwidth part, the base station may determine time domain resource allocation for data channel considering the UE's bandwidth part change delay time TBWP. In other words, in determining the time domain resource allocation for a data channel when scheduling data channel with the new bandwidth part, the base station may schedule a time after the bandwidth part change delay time, for the data channel. Thus, the UE may not expect that the DCI indicating the bandwidth part change indicates a slot offset (K0 or K2) smaller than the bandwidth part change delay time TBWP..

If the UE has received the DCI (e.g., DCI format 1_1 or 0_1) indicating the bandwidth part change, the UE may perform no transmission or reception during the time period from the third symbol of the slot in which the PDCCH including the DCI has been received to the start point of the slot indicated by the slot offset (K0 or K2) value indicated by the time domain resource allocation indicator field in the DCI. For example, if the UE receives the DCI indicating a bandwidth part change in slot n, and the slot offset value indicated by the DCI is K, the UE may perform no transmission or reception from the third symbol of slot n to a symbol before a previous symbol of slot n+K (i.e., the last symbol of slot n+K-1).

### [CA/DC related]

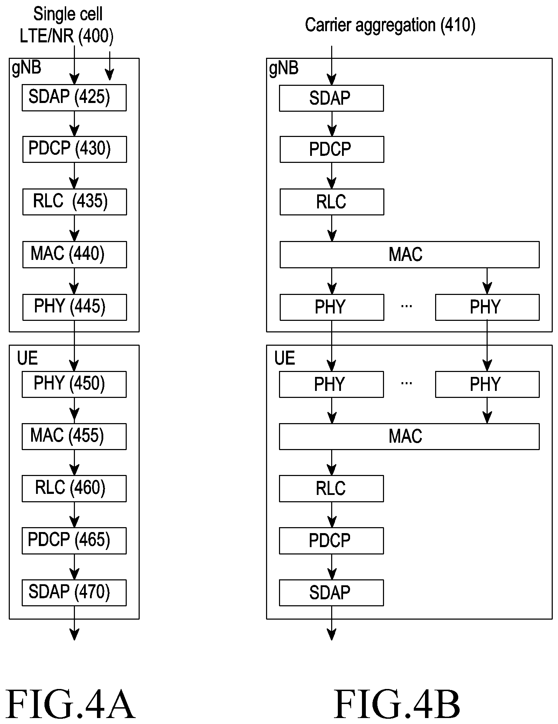

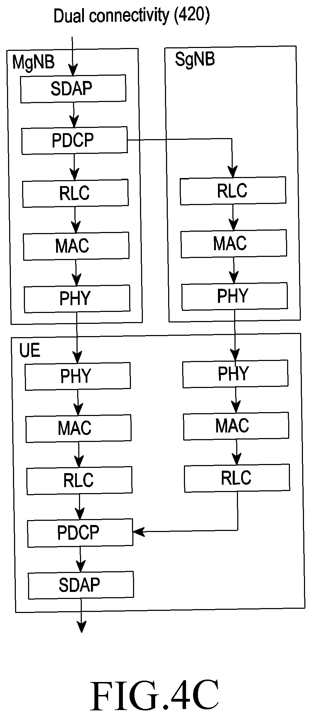

FIGS. 4A, 4B, and 4C are views illustrating a radio protocol structure of a base station and a UE in a single cell, carrier aggregation (CA), and dual connectivity (DC) according to an embodiment of the disclosure.

Referring to FIGS. 4A, 4B, and 4C, a radio protocol of a next-generation mobile communication system is constituted of NR service data adaptation protocol (SDAP) 425, 470, NR packet data convergence protocol (PDCP) 430, 465, NR radio link control (RLC) 435, 460, and NR medium access control (MAC) 440, 455 in the UE and the NR base station, respectively.

The main functions of the NR SDAPs 425 and 470 may include at least some of the following functions.
- Transfer of user plane data
- Mapping between a QoS flow and a DRB for both DL and UL
- marking QoS flow ID in both DL and UL packets
- reflective QoS flow to DRB mapping for the UL SDAP PDUs

For the SDAP layer device, the UE may be set, via an RRC message, for whether to use the functions of the SDAP layer or the header of the SDAP layer device per PDCP layer device, per bearer, or per logical channel. If an SDAP header has been set, the UE may be instructed to update or reset mapping information for the data bearer and QoS flow of uplink and downlink, by a one-bit NAS reflective QoS indicator and a one-bit AS reflective QoS indicator. The SDAP header may include QoS flow ID information indicating QoS. The QoS information may be used as data priority handling or scheduling information for seamlessly supporting a service.

The main functions of the NR PDCPs 430 and 465 may include at least some of the following functions.
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the foregoing, the reordering by the NR PDCP device refers to the function of reordering PDCP PDUs received from a lower layer in order based on the PDCP sequence number (SN) and may include the function of transferring data to a higher layer in the reordered order. The reordering by the NR PDCP device may include transferring immediately without considering order, recording PDCP PDUs missed by reordering, reporting the state of the missing PDCP PDUs to the transmit part, and requesting to retransmit the missing PDCP PDUs.

The main functions of the NR RLCs 435 and 460 may include at least some of the following functions.
- Transfer of upper layer PDUs
- In-sequence delivery of upper layer PDUs
- Out-of-sequence delivery of upper layer PDUs
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the foregoing, the in-sequence delivery of the NR RLC device refers to a function of sequentially delivering RLC SDUs received from a lower layer to an upper layer. The in-sequence delivery of the NR RLC device may include a function of reassembling and transferring several RLC SDUs to which one RLC SDU has been divided and received and may include a function of reordering the received RLC PDUs based on an RLC sequence number (SN) or a PDCP sequence number (SN), a function of reordering and recording the lost RLC PDUs, a function of reporting the status of the lost RLC PDUs to the transmitting side, and a function of requesting retransmission of the lost RLC PDUs.

The in-sequence delivery of the NR RLC device may include a function of transferring, in sequence, only the RLC SDUs before a missed RLC SDU, if any, or may include a function of transferring, in sequence, to the higher layer, all RLC SDUs received before a predetermined timer starts, if the timer has expired although there is a missed RLC SDU. The in-sequence delivery of the NR RLC device may include a function of sequentially delivering all RLC SDUs received so far to the upper layer if the predetermined timer expires even when there is a lost RLC SDU.

Further, the RLC PDUs may be processed in order of reception (in order of arrival regardless of the sequence number order) and delivered to the PDCP device regardless of order (out-of-sequence delivery). For segments, segments which are stored in a buffer or are to be received later may be received and reconstructed into a single whole RLC PDU, and then, the whole RLC PDU is processed and transferred to the PDCP device. The NR RLC layer may not include the concatenation function, and the function may be performed by the NR MAC layer or replaced with a multiplexing function of the NR MAC layer.

The out-of-sequence delivery by the NR RLC device refers to immediately transferring the RLC SDUs received from the lower layer to the higher layer regardless of order and, if one original RLC SDU is split into several RLC SDUs that are then received, the out-of-sequence delivery may include reassembling and transferring them and storing the RLC SNs or PDCP SNs of the received RLC PDUs, ordering them, and recording missing RLC PDUs.

The NR MACs 440 and 455 may be connected to several NR RLC layer devices configured in one UE, and the major functions of the NR MAC may include at least some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layers 445 and 450 may channel-code and modulate higher layer data into OFDM symbols, transmit the OFDM symbols through a wireless channel or demodulates OFDM symbols received through a wireless channel, channel-decodes and transfers the same to a higher layer.

The detailed structure of the radio protocol structure may be varied depending on the carrier (or cell) operating scheme.

Referring to FIG. 4A, when a base station transmits data to a UE based on a single carrier (or cell), the base station and the UE use a protocol structure 400 having a single structure for each layer.

Referring to FIG. 4B, when a base station transmits data to a UE based on carrier aggregation (CA) using multiple carriers in a single TRP, the base station and the UE use a protocol structure 410 multiplexing SDAP, PDCP, and RLC to a plurality of PHY layers through a MAC layer.

Referring to FIG. 4C, when a base station transmits data to a UE based on dual connectivity (DC) using multiple carriers in multiple TRPs, the base station and the UE use a protocol structure 420 multiplexing SDAP and PDCP to a plurality of lower layers (e.g., RLC, MAC, and PHY layers).

### [Unified TCI (transmission configuration indicator) state]

Hereinafter, a single TCI state indication and activation method based on a unified TCI scheme is described. The unified TCI scheme may refer to a scheme that integrates and manages beam management schemes for transmission/reception that were divided into a TCI state scheme used in downlink reception and a spatial relation info scheme used in uplink transmission of the UE in existing Rel-15 and 16 into a TCI state. Therefore, when the UE is indicated based on the unified TCI scheme from the base station, the UE may perform beam management using the TCI state for uplink transmission as well. If the UE is configured with TCI-State, which is higher layer signaling having tci-stateId-r17, which is higher layer signaling, from the base station, the UE may perform an operation based on the unified TCI scheme using the TCI-State. The TCI-State may be present in two forms: a joint TCI state or a separate TCI state.

The first form is the joint TCI state, and the UE may be indicated a TCI state to be applied to uplink transmission and downlink reception through one TCI-State from the base station. If the UE is indicated with TCI-State based on the joint TCI state, the UE may be indicated a parameter to be used for downlink channel estimation using an RS corresponding to qcl-Type1 in the joint TCI state-based TCI-State, and a parameter to be used as a downlink reception beam or reception filter using an RS corresponding to qcl-Type2. If the UE is indicated with TCI-State based on the joint TCI state, the UE may be indicated a parameter to be used as an uplink transmission beam or transmission filter using an RS corresponding to qcl-Type2 in the joint DL/UL TCI state-based TCI-State. If the UE is indicated with the joint TCI state, the UE may apply the same beam to both uplink transmission and downlink reception.

The second form is the separate TCI state, and the UE may be separately indicated a UL TCI state to be applied to uplink transmission and a DL TCI state to be applied to downlink reception from the base station. If the UE is indicated with the UL TCI state, the UE may be indicated a parameter to be used as an uplink transmission beam or transmission filter using a reference RS or source RS configured in the UL TCI state. If the UE is indicated with the DL TCI state, the UE may be indicated a parameter to be used for downlink channel estimation using an RS corresponding to qcl-Type1 configured in the DL TCI state, and a parameter to be used as a downlink reception beam or reception filter using an RS corresponding to qcl-Type2.

If the UE is indicated with the DL TCI state and the UL TCI state together, the UE may be indicated a parameter to be used as an uplink transmission beam or transmission filter using a reference RS or source RS configured in the UL TCI state, and a parameter to be used for downlink channel estimation using an RS corresponding to qcl-Type1 configured in the DL TCI state, and a parameter to be used as a downlink reception beam or reception filter using an RS corresponding to qcl-Type2. If the reference RS or source RS configured in the indicated DL TCI state and UL TCI state is different, the UE may apply beams individually to uplink transmission and downlink reception based on the indicated UL TCI state and DL TCI state, respectively.

The UE may be configured with up to 128 joint TCI states per specific bandwidth part within a specific cell through higher layer signaling from the base station, the DL TCI state among separate TCI states may be configured with up to 64 or 128 per specific bandwidth part within a specific cell through higher layer signaling based on a UE capability report, and the DL TCI state among separate TCI states and the joint TCI state may use the same higher layer signaling structure. As an example, if 128 joint TCI states are configured and 64 DL TCI states among separate TCI states are configured, the 64 DL TCI states may be included in the 128 joint TCI states.

The UL TCI state among separate TCI states may be configured with up to 32 or 64 per specific bandwidth part within a specific cell through higher layer signaling based on a UE capability report, and like the relationship between the DL TCI state among separate TCI states and the joint TCI state, the UL TCI state among separate TCI states and the joint TCI state may also use the same higher layer signaling structure, or the UL TCI state among separate TCI states may use a different higher layer signaling structure from the joint TCI state and the DL TCI state among separate TCI states.

Using different or identical higher layer signaling structures in this way may be defined in the specification, or may be distinguished through another higher layer signaling configured by the base station based on a UE capability report including information on whether the UE may support which of the two usage methods.

The UE may receive transmission/reception beam related indication in a unified TCI scheme using one of the joint TCI state and separate TCI state configured from the base station. The UE may be configured whether to use one of the joint TCI state and separate TCI state from the base station through higher layer signaling.

The UE receives transmission/reception beam related indication using one scheme selected from the joint TCI state and separate TCI state through higher layer signaling, and there may be two indication methods from the base station: a MAC-CE based indication method and a MAC-CE based activation and DCI based indication method.

If the UE receives transmission/reception beam related indication using the joint TCI state scheme through higher layer signaling, the UE may receive a MAC-CE indicating the joint TCI state from the base station and perform a transmission/reception beam application operation, and the base station may schedule reception of PDSCH including the MAC-CE to the UE through PDCCH.

If the MAC-CE includes one joint TCI state, the UE may determine an uplink transmission beam or transmission filter and a downlink reception beam or reception filter using the indicated joint TCI state from 3 ms after PUCCH transmission including HARQ-ACK information indicating success or failure of reception of the PDSCH including the MAC-CE. If the MAC-CE includes two or more joint TCI states, the UE may identify that a plurality of joint TCI states indicated by the MAC-CE correspond to each codepoint of the TCI state field of DCI format 1_1 or 1_2 and activate the indicated joint TCI state from 3 ms after PUCCH transmission including HARQ-ACK information indicating success or failure of reception of the PDSCH including the MAC-CE.

Thereafter, the UE may receive DCI format 1_1 or 1_2 and apply one joint TCI state indicated by the TCI state field in the DCI to uplink transmission and downlink reception beams. DCI format 1_1 or 1_2 may include downlink data channel scheduling information (with DL assignment), or may not include it (without DL assignment).

If the UE receives transmission/reception beam related indication using the separate TCI state scheme through higher layer signaling, the UE may receive a MAC-CE indicating the separate TCI state from the base station and perform a transmission/reception beam application operation, and the base station may schedule reception of PDSCH including the MAC-CE to the UE through PDCCH.

If the MAC-CE includes one separate TCI state set, the UE may determine an uplink transmission beam or transmission filter and a downlink reception beam or reception filter using separate TCI states included in the indicated separate TCI state set from 3 ms after PUCCH transmission including HARQ-ACK information indicating success or failure of reception of the PDSCH. The separate TCI state set may refer to single or multiple separate TCI states that one codepoint of the TCI state field in DCI format 1_1 or 1_2 may have, and one separate TCI state set may include one DL TCI state, or include one UL TCI state, or include one DL TCI state and one UL TCI state. If the MAC-CE includes two or more separate TCI state sets, the UE may identify that a plurality of separate TCI state sets indicated by the MAC-CE correspond to each codepoint of the TCI state field of DCI format 1_1 or 1_2 and activate the indicated separate TCI state set from 3 ms after PUCCH transmission including HARQ-ACK information indicating success or failure of reception of the PDSCH.

Each codepoint of the TCI state field of DCI format 1_1 or 1_2 may indicate one DL TCI state, or indicate one UL TCI state, or indicate one DL TCI state and one UL TCI state each. The UE may receive DCI format 1_1 or 1_2 and apply the separate TCI state set indicated by the TCI state field in the DCI to uplink transmission and downlink reception beams. DCI format 1_1 or 1_2 may include downlink data channel scheduling information (with DL assignment), or may not include it (without DL assignment).

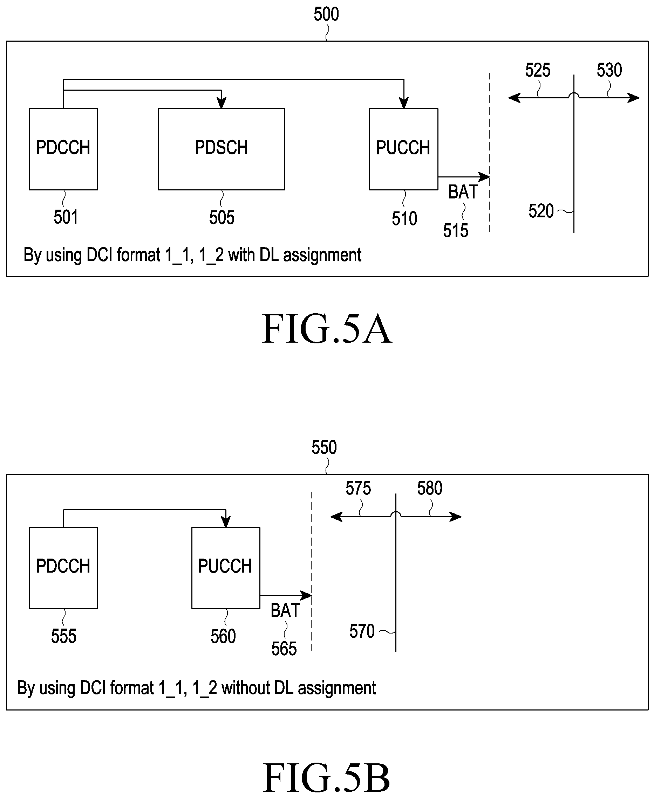

FIGS. 5A and 5B are views illustrating a beam application time that may be considered when using a unified TCI scheme in a wireless communication system according to an embodiment of the disclosure. As described above, the UE may receive DCI format 1_1 or 1_2 including or not including downlink data channel scheduling information (with DL assignment or without DL assignment) from the base station and apply one joint TCI state or separate TCI state set indicated by the TCI state field in the DCI to uplink transmission and downlink reception beams.

FIG. 5A illustrates DCI format 1_1 or 1_2 with DL assignment 500. If the UE receives DCI format 1_1 or 1_2 including downlink data channel scheduling information from the base station 501 and one joint TCI state or separate TCI state set based on the unified TCI scheme is indicated, the UE receives PDSCH scheduled based on the received DCI 505 and may transmit PUCCH including HARQ-ACK indicating success or failure of reception of the DCI and PDSCH 510. The HARQ-ACK may include both meanings of success or failure of reception of the DCI and PDSCH, and if at least one of the DCI and PDSCH is not received, the UE may transmit NACK, and if reception of both is successful, the UE may transmit ACK.

FIG. 5B illustrates DCI format 1_1 or 1_2 without DL assignment 550. If the UE receives DCI format 1_1 or 1_2 not including downlink data channel scheduling information from the base station 555 and one joint TCI state or separate TCI state set based on the unified TCI scheme is indicated, the UE may assume at least one combination of the following for the DCI.
■ Including CRC scrambled using CS-RNTI.
■ The value of all bits allocated to all fields used as an RV (Redundancy Version) field is 1.
■ The value of all bits allocated to all fields used as an MCS (Modulation and Coding Scheme) field is 1.
■ The value of all bits allocated to all fields used as an NDI (New Data Indication) field is 0.
■ In the case of FDRA (Frequency Domain Resource Allocation) Type 0, the value of all bits allocated to the FDRA field is 0, in the case of FDRA Type 1, the value of all bits allocated to the FDRA field is 1, and in the case of the FDRA scheme being dynamicSwitch, the value of all bits allocated to the FDRA field is 0.

The UE may transmit PUCCH including HARQ-ACK indicating success or failure of reception for DCI format 1_1 or 1_2 assuming the above-described items (560).
- For both DCI format 1_1 or 1_2 with DL assignment 500 and without DL assignment 550, if the new TCI state indicated through DCI 501, 555 is the same as the TCI state that has already been indicated and applied to uplink transmission and downlink reception beams, the UE may maintain the previously applied TCI state, and if the new TCI state is different from the previously indicated TCI state, the UE may determine the application timing of the joint TCI state or separate TCI state set that may be indicated from the TCI state field included in the DCI as a slot 530, 580 after the first slot 520, 570 after BAT (beam application time) 515, 565 time after PUCCH transmission, and the previously indicated TCI-state may be used until the slot 525, 575 before the slot 520, 570.
- For both DCI format 1_1 or 1_2 with DL assignment 500 and without DL assignment 550, BAT may be configured as a specific number of OFDM symbols through higher layer signaling based on UE capability report information, and the numerology for BAT and the first slot after BAT may be determined based on the smallest numerology among all cells to which the joint TCI state or separate TCI state set indicated through DCI is applied.

The UE may apply one joint TCI state indicated through MAC-CE or DCI to reception of control resource sets connected to all UE-specific search spaces, reception of PDSCH scheduled by PDCCH transmitted from the control resource set and transmission of PUSCH, and transmission of all PUCCH resources.

If one separate TCI state set indicated through MAC-CE or DCI includes one DL TCI state, the UE may apply one separate TCI state set to reception of control resource sets connected to all UE-specific search spaces and reception of PDSCH scheduled by PDCCH transmitted from the control resource set, and may apply the previously indicated UL TCI state to all PUSCH and PUCCH resources.

If one separate TCI state set indicated through MAC-CE or DCI includes one UL TCI state, the UE may apply it to all PUSCH and PUCCH resources, and may apply the previously indicated DL TCI state to reception of control resource sets connected to all UE-specific search spaces and reception of PDSCH scheduled by PDCCH transmitted from the control resource set.

If one separate TCI state set indicated through MAC-CE or DCI includes one DL TCI state and one UL TCI state, the UE may apply the DL TCI state to reception of control resource sets connected to all UE-specific search spaces and reception of PDSCH scheduled by PDCCH transmitted from the control resource set, and may apply the UL TCI state to all PUSCH and PUCCH resources.

### [Unified TCI state MAC-CE]

Hereinafter, a single TCI state indication and activation method based on a unified TCI scheme is described. The UE may be scheduled to receive PDSCH including the following MAC-CE from the base station, transmit HARQ-ACK for the PDSCH to the base station, and from 3 slots after, interpret each codepoint of the TCI state field in DCI format 1_1 or 1_2 based on information in the MAC-CE received from the base station. In other words, the UE may activate each entry of the MAC-CE received from the base station to each codepoint of the TCI state field in DCI format 1_1 or 1_2.

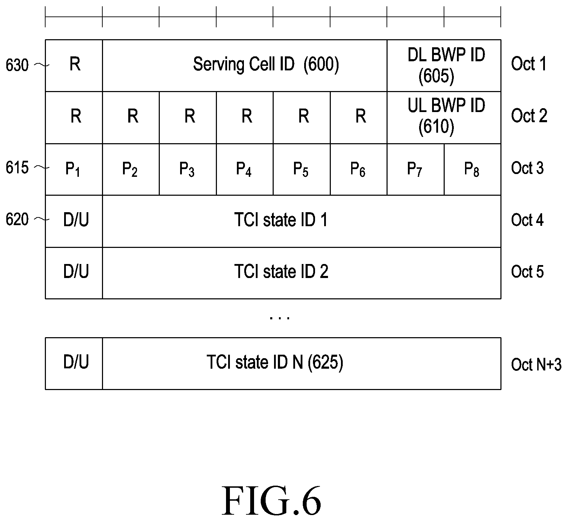

FIG. 6 is a view illustrating another MAC-CE structure for activation and indication of a joint TCI state or separate DL or UL TCI state in a wireless communication system according to an embodiment of the disclosure. Referring to FIG. 6, the meaning of each field in the MAC-CE structure may be as follows.
- Serving Cell ID 600: This field may indicate to which serving cell the MAC-CE is to be applied. The length of this field may be 5 bits. If the serving cell indicated by this field is included in one or more of simultaneousU-TCI-UpdateList1, simultaneousU-TCI-UpdateList2, simultaneousU-TCI-UpdateList3, or simultaneousU-TCI-UpdateList4, which is higher layer signaling, the MAC-CE may be applied to all serving cells included in one or more of simultaneousU-TCI-UpdateList1, simultaneousU-TCI-UpdateList2, simultaneousU-TCI-UpdateList3, simultaneousU-TCI-UpdateList4 that include the serving cell indicated by this field.
- DL BWP ID 605: This field may indicate to which DL BWP the MAC-CE is to be applied, and the meaning of each codepoint of this field may correspond to each codepoint of the bandwidth part indicator in DCI. The length of this field may be 2 bits.
- UL BWP ID 610: This field may indicate to which UL BWP the MAC-CE is to be applied, and the meaning of each codepoint of this field may correspond to each codepoint of the bandwidth part indicator in DCI. The length of this field may be 2 bits.
- Pi 615: This field may indicate whether each codepoint of the TCI state field in DCI format 1_1 or 1_2 has a plurality of TCI states or has one TCI state. If the value of Pi is 1, it means that the corresponding ith codepoint has a plurality of TCI states, which may mean that the codepoint may include a separate DL TCI state and a separate UL TCI state. If the value of Pi is 0, it means that the corresponding ith codepoint has a single TCI state, which may mean that the codepoint may include one of a joint TCI state or a separate DCI TCI state or a separate UL TCI state.
- D/U 620: This field may indicate whether the TCI state ID field in the same octet is a joint TCI state or a separate DL TCI state, or a separate UL TCI state. If this field is 1, the TCI state ID field in the same octet may be a joint TCI state or a separate DL TCI state, and if this field is 0, the TCI state ID field in the same octet may be a separate UL TCI state.
- TCI state ID 625: This field may indicate a TCI state that may be identified by TCI-StateId, which is higher layer signaling. If the D/U field is set to 1, this field may be used to represent TCI-StateId that may be represented by 7 bits. If the D/U field is set to 0, the MSB (most significant bit) of this field may be regarded as a reserved bit, and the remaining 6 bits may be used to represent UL-TCIState-Id, which is higher layer signaling. The maximum number of TCI states that may be activated may be 8 for the joint TCI state and 16 for the separate DL or UL TCI state.
- R: It means a reserved bit and may be set to 0.

For the MAC-CE structure of FIG. 6 described above, the UE may include the 3rd octet including P1, P2, ..., P8 fields in FIG. 6 in the MAC-CE structure regardless of whether unifiedTCI-StateType-r17 in MIMOparam-r17 in ServingCellConfig, which is higher layer signaling, is set to joint or separate. In this case, the UE may perform TCI state activation using a fixed MAC-CE structure regardless of higher layer signaling configured from the base station.

As another example, for the MAC-CE structure of FIG. 6 described above, the UE may omit the 3rd octet including P1, P2, ..., P8 fields in FIG. 6 when unifiedTCI-StateType-r17 in MIMOparam-r17 in ServingCellConfig, which is higher layer signaling, is set to joint. In this case, the UE may save up to 8 bits of the payload of the MAC-CE according to higher layer signaling configured from the base station. Further, the D/U field located in the first bit from the fourth octet in FIG. 6 may all be regarded as an R field, and the corresponding R fields may all be set to 0 bits.

### [PDCCH: DCI related]

Next, downlink control information (DCI) in the 5G system is described in detail.

In a 5G system, scheduling information for uplink data (e.g., physical uplink shared channel (PUSCH)) or downlink data (e.g., physical downlink shared channel (PDSCH)) is transmitted from the base station to the UE through DCI. The UE may monitor the DCI format for fallback and the DCI format for non-fallback for PUSCH or PDSCH. The fallback DCI format may be composed of fixed fields predetermined between the base station and the UE, and the non-fallback DCI format may include configurable fields.

DCI may be transmitted through the PDCCH, which is a physical downlink control channel, via channel coding and modulation. A cyclic redundancy check (CRC) is added to the DCI message payload, and the CRC is scrambled with the radio network temporary identifier (RNTI) that is the identity of the UE. Different RNTIs may be used according to the purpose of the DCI message, e.g., UE-specific data transmission, power control command, or random access response. In other words, the RNTI is not explicitly transmitted, but the RNTI is included in the CRC calculation process and transmitted. Upon receiving the DCI message transmitted on the PDCCH, the UE identifies the CRC using the allocated RNTI, and when the CRC is correct, the UE may be aware that the message has been transmitted to the UE.

For example, DCI scheduling a PDSCH for system information (SI) may be scrambled to SI-RNTI. The DCI scheduling a PDSCH for a random access response (RAR) message may be scrambled to RA-RNTI. DCI scheduling a PDSCH for a paging message may be scrambled with P-RNTI. The DCI providing a slot format indicator (SFI) may be scrambled to SFI-RNTI. The DCI providing transmit power control (TPC) may be scrambled to TPC-RNTI. The DCI for scheduling a UE-specific PDSCH or PUSCH may be scrambled with cell RNTI (C-RNTI).

DCI format 0_0 may be used as fallback DCI for scheduling PUSCH, and CRC may be scrambled to C-RNTI. DCI format 0_0 in which CRC is scrambled to C-RNTI may include, e.g., the information shown in Table 4 below.

**[Table 4]**

| | |
|---|---|
| | - Identifier for DCI formats (DCI format identifier) - [1] bit |
| | - Frequency domain resource assignment (frequency domain resource assignment) $- \left[\left⌈{log}_{2}\left({N}_{RB}^{UL , BWP}\left({N}_{RB}^{UL , BWP}+1\right)/2\right)\right⌉\right]$ bits |
| - Time domain resource assignment (time domain resource assignment) - X bits | |
| - Frequency hopping flag (frequency hopping flag) - 1 bit. | |
| - Modulation and coding scheme (modulation and coding scheme) - 5 bits | |
| - New data indicator (new data indicator) - 1 bit | |
| - Redundancy version (redundancy version) - 2 bits | |
| - HARQ process number (HARQ process number) - 4 bits | |
| - TPC command for scheduled PUSCH (transmit power control command for scheduled PUSCH) - [2] bits | |
| - UL/SUL indicator (uplink/supplementary uplink indicator) - 0 or 1 bit | |

DCI format 0_1 may be used as non-fallback DCI for scheduling PUSCH, and CRC may be scrambled to C-RNTI. DCI format 0_1 in which CRC is scrambled to C-RNTI may include, e.g., the information shown in Table 5 below.

**[Table 5]**

| Carrier indicator (carrier indicator) - 0 or 3 bits | | | |
|---|---|---|---|
| - UL/SUL indicator - 0 or 1 bit | | | |
| - Identifier for DCI formats - [1] bits | | | |
| - Bandwidth part indicator (bandwidth part indicator) - 0, 1 or 2 bits | | | |
| - Frequency domain resource assignment | | | |
| | | | • For resource allocation type 0 (for resource allocation type 0), $\left⌈{N}_{RB}^{UL , BWP}/P\right⌉$ bits |
| | | | • For resource allocation type 1 (for resource allocation type 1), $\left⌈{log}_{2}\left({N}_{RB}^{UL , BWP}\left({N}_{RB}^{UL , BWP}+1\right)/2\right)\right⌉$ bits |
| - Time domain resource assignment -1, 2, 3, or 4 bits | | | |
| - VRB-to-PRB mapping (virtual resource block-to-physical resource block mapping) - 0 or 1 bit, only for resource allocation type 1. | | | |
| | | | • 0 bit if only resource allocation type 0 is configured; |
| | | | • 1 bit otherwise. |
| - Frequency hopping flag - 0 or 1 bit, only for resource allocation type 1. | | | |
| | | | • 0 bit if only resource allocation type 0 is configured; |
| | | | • 1 bit otherwise. |
| - Modulation and coding scheme - 5 bits | | | |
| - New data indicator - 1 bit | | | |
| - Redundancy version - 2 bits | | | |
| - HARQ process number - 4 bits | | | |
| - 1st downlink assignment index (first downlink assignment index)- 1 or 2 bits | | | |
| | | | • 1 bit for semi-static HARQ-ACK codebook (for semi-static HARQ-ACK codebook); |
| | | | • 2 bits for dynamic HARQ-ACK codebook with single HARQ-ACK codebook (when a dynamic HARQ-ACK codebook is used with a single HARQ-ACK codebook). |
| - 2nd downlink assignment index (second downlink assignment index) - 0 or 2 bits | | | |
| | | | • 2 bits for dynamic HARQ-ACK codebook with two HARQ-ACK sub-codebooks (when a dynamic HARQ-ACK codebook is used with two HARQ-ACK sub-codebooks); |
| | | | • 0 bit otherwise. |
| - TPC command for scheduled PUSCH - 2 bits | | | |
| - SRS resource indicator (SRS resource indicator) - $\left⌈{log}_{2}\left({\sum }_{k = 1}^{{L}_{max}} \left(\begin{matrix}{N}_{SRS} \\ k\end{matrix}\right)\right)\right⌉$ or $\left⌈{log}_{2}\left({N}_{SRS}\right)\right⌉$ bits | | | |
| | • $\left⌈{log}_{2}\left({\sum }_{k = 1}^{{L}_{max}} \left(\begin{matrix}{N}_{SRS} \\ k\end{matrix}\right)\right)\right⌉$ bits for non-codebook based PUSCH transmission (if PUSCH transmission is non-codebook based); | | |
| | | • $\left⌈{log}_{2}\left({N}_{SRS}\right)\right⌉$ bits for codebook based PUSCH transmission (if PUSCH transmission is codebook based). | |
| | | | - Precoding information and number of layers (precoding information and number of layers)-up to 6 bits |
| | | | - Antenna ports (antenna ports)- up to 5 bits |
| | | | - SRS request (SRS request)- 2 bits |
| | | | - CSI request (channel state information request) - 0, 1, 2, 3, 4, 5, or 6 bits |
| | | | - CBG transmission information (code block group transmission information)- 0, 2, 4, 6, or 8 bits |
| | | | - PTRS-DMRS association (phase tracking reference signal-demodulation reference signal association)- 0 or 2 bits. |
| | | | - beta_offset indicator (beta offset indicator)- 0 or 2 bits |
| | | | - DMRS sequence initialization (demodulation reference signal sequence initialization)- 0 or 1 bit |

DCI format 1_0 may be used as fallback DCI for scheduling PDSCH, and CRC may be scrambled to C-RNTI. DCI format 1_0 in which CRC is scrambled to C-RNTI may include, e.g., the information shown in Table 6 below.

**[Table 6]**

| |
|---|
| - Identifier for DCI formats - [1] bit |
| - Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - PUCCH resource indicator (physical uplink control channel (PUCCH) resource indicator)- 3 bits |
| - PDSCH-to-HARQ feedback timing indicator (PDSCH-to-HARQ feedback timing indicator)- [3] bits |

DCI format 1_1 may be used as non-fallback DCI for scheduling PDSCH, and CRC may be scrambled to C-RNTI. DCI format 1_1 in which CRC is scrambled to C-RNTI may include, e.g., the information shown in Table 7 below.

**[Table 7]**

| | | | |
|---|---|---|---|
| - Carrier indicator - 0 or 3 bits | | | |
| - Identifier for DCI formats - [1] bits | | | |
| - Bandwidth part indicator - 0, 1 or 2 bits | | | |
| - Frequency domain resource assignment | | | |
| | • For resource allocation type 0, $\left⌈{N}_{RB}^{DL , BWP}/P\right⌉$ bits | | |
| | | • For resource allocation type 1, $\left⌈{log}_{2}\left({N}_{RB}^{DL , BWP}\left({N}_{RB}^{DL , BWP}+1\right)/2\right)\right⌉$ bits | |
| | | | - Time domain resource assignment -1, 2, 3, or 4 bits |
| | | | - VRB-to-PRB mapping - 0 or 1 bit, only for resource allocation type 1. |
| | | | • 0 bit if only resource allocation type 0 is configured; |
| | | | • 1 bit otherwise. |
| | | | - PRB bundling size indicator (physical resource block bundling size indicator) - 0 |
| | | | or 1 bit |
| | | | - Rate matching indicator (rate matching indicator) - 0, 1, or 2 bits |
| | | | - ZP CSI-RS trigger (zero-power channel state information reference signal trigger) - 0, 1, or 2 bits |
| | | | For transport block 1(for the first transport block): |
| | | | - Modulation and coding scheme - 5 bits |
| | | | - New data indicator - 1 bit |
| | | | - Redundancy version - 2 bits |
| For transport block 2 (for the second transport block): | | | |
| - Modulation and coding scheme - 5 bits | | | |
| - New data indicator - 1 bit | | | |
| - Redundancy version - 2 bits | | | |
| - HARQ process number - 4 bits | | | |
| - Downlink assignment index - 0 or 2 or 4 bits | | | |
| - TPC command for scheduled PUCCH - 2 bits | | | |
| - PUCCH resource indicator - 3 bits | | | |
| - PDSCH-to-HARQ_feedback timing indicator - 3 bits | | | |
| - Antenna ports - 4, 5 or 6 bits | | | |
| - Transmission configuration indication (transmission configuration indication)- 0 or 3 bits | | | |
| - SRS request - 2 bits | | | |
| - CBG transmission information - 0, 2, 4, 6, or 8 bits | | | |
| - CBG flushing out information (code block group flushing out information) - 0 or 1 bit | | | |
| - DMRS sequence initialization - 1 bit | | | |

### [PDCCH: CORESET, REG, CCE, Search Space]

A downlink control channel in the 5G communication system is described below in greater detail with reference to the drawings.

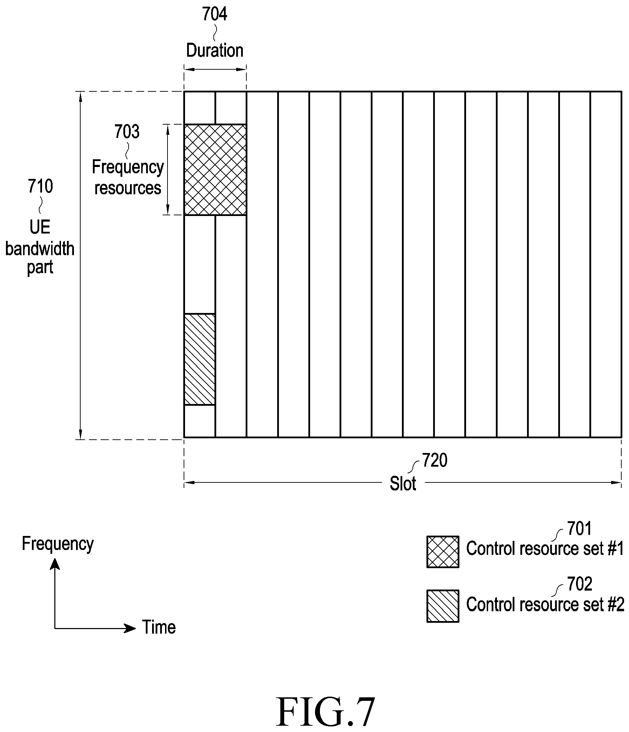

FIG. 7 is a view illustrating an example of a control region (control resource set (CORESET)) where the download control channel is transmitted in the 5G wireless communication system. FIG. 7 illustrates an example in which a plurality of control regions (e.g., control region #1 701 and control region #2 702) are configured in one slot 720 on the time axis, and a UE bandwidth part 710 is configured on the frequency axis. The control regions 701 and 702 may be configured to a particular frequency resource 703 in the overall system bandwidth part 710 on the frequency axis. One or more OFDM symbols may be configured on the time axis, which may be defined as control resource set duration 704. Referring to the illustrated example, control region #1 701 is configured as a control region length of two symbols, and control region #2 702 is configured as a control region length of one symbol.

The control region in 5G described above may be configured in the UE by the base station through higher layer signaling (e.g., system information, master information block (MIB), and/or radio resource control (RRC) signaling). Configuring a UE with a control region means providing the UE with such information as the identifier (ID) of the control region, the frequency position of the control region, and symbol length of the control region. For example, the information shown in Table 8 may be included.

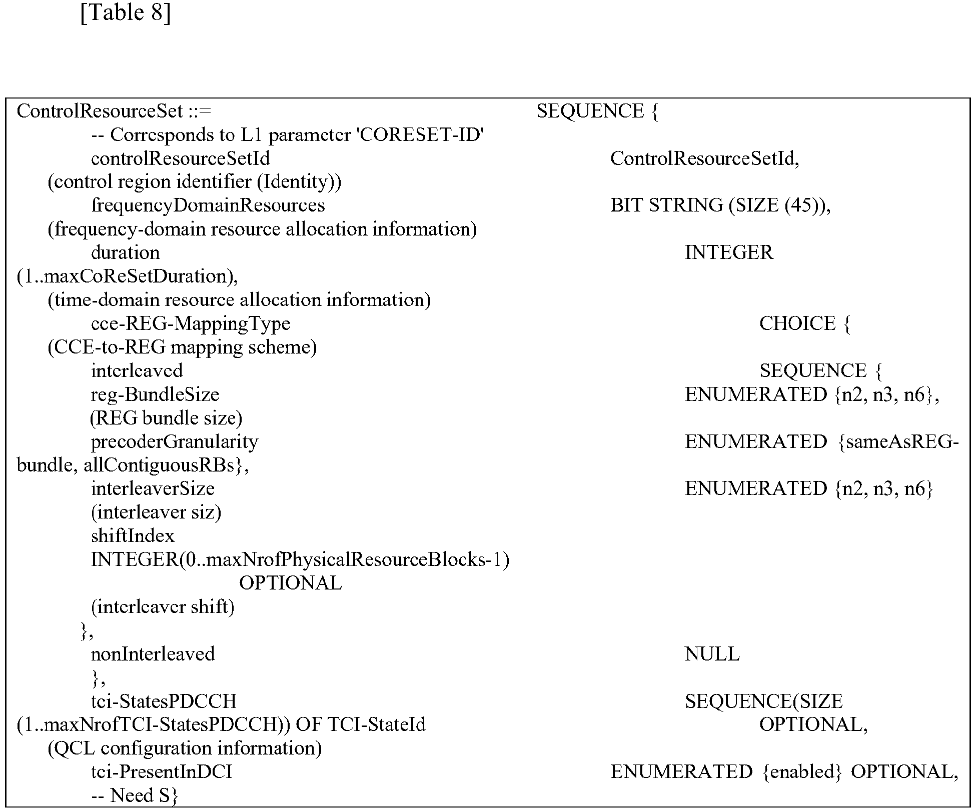

In Table 8 above, tci-StatesPDCCH (simply referred to as transmission configuration indication (TCI) state) configuration information may include information for one or more synchronization signal (SS)/physical broadcast channel (PBCH) block indexes or channel state information reference signal (CSI-RS) index quasi-co-located (QCLed) with the DMRS transmitted in the corresponding control region.

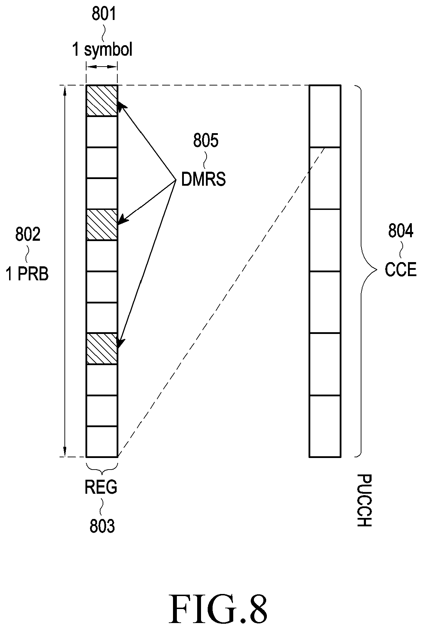

FIG. 8 is a view illustrating an example of a basic unit of time and frequency resource constituting a download control channel available in 5G according to an embodiment of the disclosure. Referring to FIG. 8, the basic unit of time and frequency resources constituting the downlink control channel may be referred to as a resource element group (REG) 803, and the REG 803 may be defined with one OFDM symbol 801 on the time axis and with one physical resource block (PRB) 802, i.e., 12 subcarriers, on the frequency axis. The base station may configure a downlink control channel allocation unit by concatenating REGs 803.

In 5G, when the basic unit in which the downlink control channel is allocated is a control channel element (CCE) 804, one CCE 804 may be constituted of a plurality of REGs 803. The REG 803 may be constituted of 12 REs, and if one CCE 804 is constituted of six REGs 803, one CCE 804 may be constituted of 72 REs. When the download control region is set, the downlink control region may be constituted of multiple CCEs 804, and a download control channel may be mapped to one or more CCEs 804 according to the aggregation level (AL) in the control region and be transmitted. The CCEs 804 in the control region are distinguished with numbers, and the numbers of the CCEs 804 may be assigned according to a logical mapping scheme.

A basic unit of the downlink control channel (e.g., REG 803) may include a region to which REs to which DCI is mapped and DMRS 805, which is a reference signal for decoding the same, are mapped. In an embodiment, three DMRSs 805 may be transmitted in one REG 803. The number of CCEs necessary to transmit a PDCCH may be, e.g., 1, 2, 4, 8, or 16 depending on the aggregation level (AL), and different numbers of CCEs may be used to implement link adaptation of downlink control channel.

For example, if AL=L, one downlink control channel may be transmitted via L CCEs. The UE needs to detect a signal while being unaware of information for downlink control channel and, for blind decoding, a search space is defined which indicates a set of CCEs. The search space is a set of candidate control channels constituted of CCEs that the UE needs to attempt to decode on the given aggregation level, and since there are several aggregation levels to bundle up 1, 2, 4, 8, or 16 CCEs, the UE has a plurality of search spaces. A search space set (Set) may be defined as a set of search spaces at all set aggregation levels.

Search spaces may be classified into a common search space and a UE-specific search space. A predetermined group of UEs or all the UEs may search for the common search space of the PDCCH to receive cell-common control information, e.g., paging message, or dynamic scheduling for system information. For example, PDSCH scheduling allocation information for transmitting an SIB containing, e.g., cell service provider information may be received by investigating the common search space of the PDCCH. In the case of the common search space, since a certain group of UEs or all the UEs need receive the PDCCH, it may be defined as a set of CCEs previously agreed on. Scheduling allocation information for the UE-specific PDSCH or PUSCH may be received by inspecting the UE-specific search space of PDCCH. The UE-specific search space may be UE-specifically defined with a function of various system parameters and the identity of the UE.

In 5G, the parameters for the search space for the PDCCH may be configured in the UE by the base station through higher layer signaling (e.g., SIB, MIB, or RRC signaling). For example, the base station may configure the UE with, e.g., the number of PDCCH candidates at each aggregation level L, monitoring period for search space, monitoring occasion of symbol unit in slot for search space, search space type (common search space or UE-specific search space), combination of RNTI and DCI format to be monitored in the search space, and control region index to be monitored in the search space. For example, the information shown in Table 9 may be included.

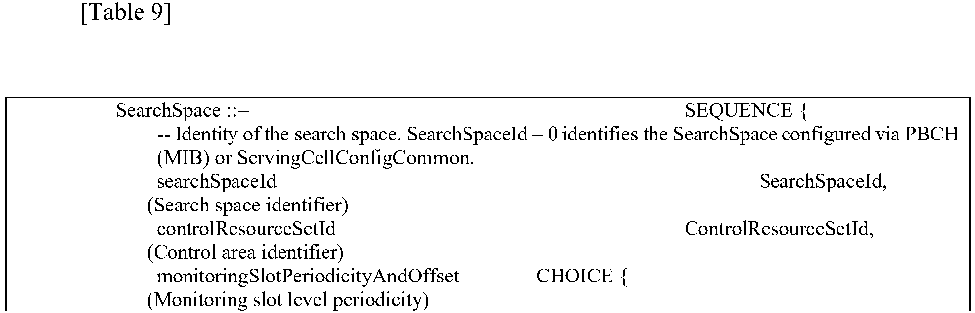

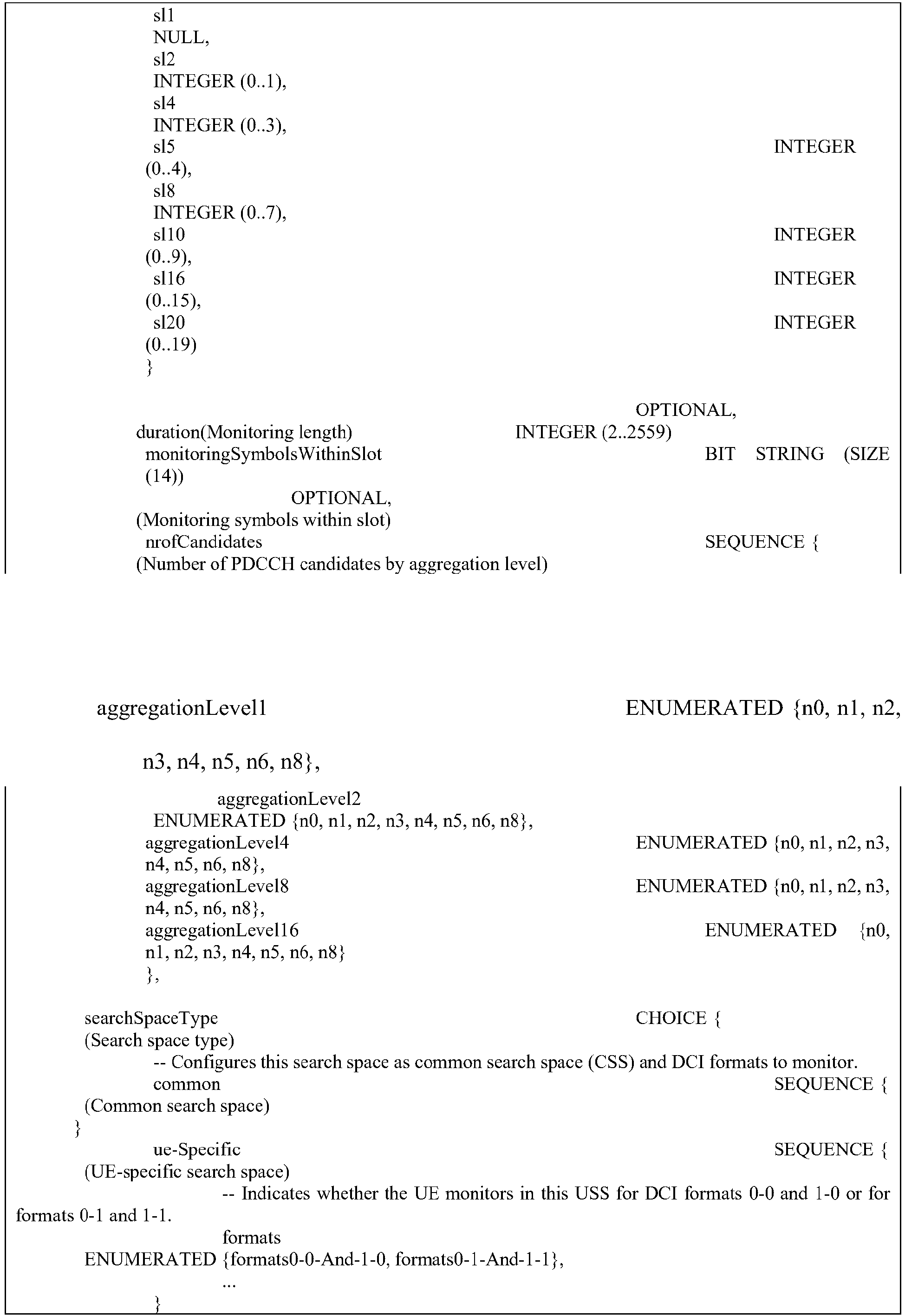

According to the configuration information, the base station may configure one or more search space sets to the terminal. According to an embodiment, the base station may configure the UE with search space set 1 and search space set 2 and configure it to monitor DCI format A, scrambled to X-RNTI in search space set 1, in the common search space and to monitor DCI format B, scrambled to Y-RNTI in search space set 2, in the UE-specific search space.

According to the above-described configuration information, one or more search space sets may be present in the common search space or the UE-specific search space. For example, search space set#1 and search space set#2 may be configured as the common search space, and search space set#3 and search space set#4 may be configured as the UE-specific search space.

In the common search space, a combination of DCI format and RNTI as follows may be monitored. Of course, it is not limited to the examples described below.
- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, a combination of DCI format and RNTI as follows may be monitored. Of course, it is not limited to the examples described below.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may be defined and used as follows.
- C-RNTI (Cell RNTI): UE-specific PDSCH scheduling
- TC-RNTI (Temporary Cell RNTI): UE-specific PDSCH scheduling
- CS-RNTI (Configured Scheduling RNTI): Semi-statically configured UE-specific PDSCH scheduling
- RA-RNTI (Random Access RNTI): PDSCH scheduling in a random access stage
- P-RNTI (Paging RNTI): PDSCH scheduling in which paging is transmitted
- SI-RNTI (System Information RNTI): PDSCH scheduling in which system information is transmitted
- INT-RNTI (Interruption RNTI): Indicates whether puncturing for PDSCH
- TPC-PUSCH-RNTI (Transmit Power Control for PUSCH RNTI): Power control command indication for PUSCH
- TPC-PUCCH-RNTI (Transmit Power Control for PUCCH RNTI): Power control command indication for PUCCH
- TPC-SRS-RNTI (Transmit Power Control for SRS RNTI): Power control command indication for SRS (sounding reference signal)

The DCI formats designated above may follow the definition of [Table 10] below.

**[Table 10]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sy mbol(s) where UE may assume no transmission is inten ded for the UE |
| 2_2 | Transmission of TPC commands for PUCCH and PUSC H |
| 2_3 | Transmission of a group of TPC commands for SRS tra nsmissions by one or more UEs |

In 5G, the search space of the aggregation level L in the control region p and the search space set s may be expressed by [Equation 1] below. [Equation 1] $L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$
- *L*: aggregation level
- *n_{CI}*: carrier index
- *N_{CCE,p}*: total number of CCEs existing within control region p
- ${n}_{s , f}^{μ}$: slot index
- ${M}_{s , max}^{\left(L\right)}$: number of PDCCH candidates of aggregation level L
- ${m}_{s , {n}_{CI}} = 0 , … , {M}_{s , max}^{\left(L\right)} - 1$: PDCCH candidate index of aggregation level L
- *i* = 0, ..., *L* -1
- ${Y}_{p , {n}_{s , f}^{μ}} = \left({A}_{p}⋅{Y}_{p , {n}_{s , f}^{μ} - 1}\right) mod D$*, Y*_{*p,*-1} *= n_{RNTI}* ≠ 0, *Aₚ* = 39827 *f or pmod*3 = 0, *Aₚ* = 39829 *f or pmod*3 = 1, *Aₚ* = 39839 *f or pmod*3 = 2, *D* = 65537
- *n_{RNTI}* : UE identifier
   ${Y}_{p , {n}_{s , f}^{μ}}$ value may correspond to 0 in case of common search space.
   ${Y}_{p , {n}_{s , f}^{μ}}$ value, in case of UE-specific search space, may correspond to value varying according to identity of UE (C-RNTI or ID configured to UE by base station) and time index.

In 5G, as a plurality of search space sets may be set with different parameters (e.g., parameters in [Table 9]), the set of search space sets monitored by the UE at each point in time may be different. For example, when search space set #1 is set at the X-slot period, search space set #2 is set at the Y-slot period, and X differs from Y, the UE may monitor both search space set #1 and search space set #2 in a specific slot and monitor either search space set #1 or search space set #2 in a specific slot.

### [PUCCH: transmission related]

In the NR system, the UE may transmit control information (UCI) to the base station through PUCCH. The control information may include at least one of the HARQ-ACK indicating whether demodulation/decoding is successful for the transport block (TB) received by the UE through the PDSCH, the scheduling request (SR) for the UE to request resource allocation from the PUSCH base station for uplink data transmission, and channel state information (CSI), which is information for reporting the channel state of the UE.

The PUCCH resource may be largely divided into a long PUCCH and a short PUCCH according to the length of the allocated symbol. In the NR system, a long PUCCH has a length of 4 symbols or more in the slot, and a short PUCCH has a length of 2 symbols or less in the slot.

The long PUCCH is described in detail. The long PUCCH may be used for the purpose of enhancing uplink cell coverage and thus may be transmitted in a DFT-S-OFDM scheme, which is single carrier transmission rather than OFDM transmission. The long PUCCH supports transmission formats, such as PUCCH format 1, PUCCH format 3, and PUCCH format 4 depending on the number of supportable control information bits and whether UE multiplexing is supported through pre-DFT OCC support on the front end of the IFFT.

First, PUCCH format 1 is a DFT-S-OFDM-based long PUCCH format capable of supporting up to 2 bits of control information and uses 1 RB of the frequency resource. The control information may be composed of a combination or each of HARQ-ACK and SR. In PUCCH format 1, an OFDM symbol including a demodulation reference signal (DMRS), which is a demodulation reference signal (or reference signal), and an OFDM symbol including UCI are repeatedly configured.

For example, if the number of transmission symbols in PUCCH format 1 is 8 symbols and include a DMRS symbol, a UCI symbol, a DMRS symbol, a UCI symbol, a DMRS symbol, a UCI symbol, a DMRS symbol, and a UCI symbol in order from the start symbol of the eight symbols. The DMRS symbol may be spread using orthogonal code (or orthogonal sequence or spreading code, wᵢ(m)), in the sequence corresponding to a length of 1RB along the frequency axis in one OFDM symbol and, after IFFTed, transmitted.

A UCI symbol may be generated by the UE modulating 1-bit control information with BPSK and 2-bit control information with QPSK to generate d(0), multiplying the generated d(0) by a sequence having the length of 1 RB on the frequency axis for scrambling, spreading the scrambled sequence using an orthogonal code (or orthogonal sequence or spreading code, wᵢ(m)) on the time axis, performing IFFT, and then transmitting.

The UE generates a sequence based on a group hopping or sequence hopping configuration configured through higher layer signaling from the base station and a configured ID, and cyclically shifts the generated sequence by an initial CS (cyclic shift) value configured through the higher layer signal to generate a sequence having the length of 1 RB.

When the length (NSF) of the spreading code is given, wᵢ(m) is determined as ${w}_{i} \left(m\right) = {e}^{\frac{j 2 πϕ \left(m\right)}{{N}_{SF}}}$, and for example, the spreading code *wᵢ*(*m*) = *e*^{*j*2*πφ*(*m*)/*N*SF} for PUCCH format 1 is given as the following [Table 11]. i means the index of the spreading code itself, and m means the index of elements of the spreading code. Here, the numbers in [ ] in [Table 11] mean Phi(m), and for example, when the length of the spreading code is 2 and the index i=0 of the configured spreading code, the spreading code wi(m) becomes *wᵢ*(0)=e^{*j*2π·0/*NSF*}=1, *wᵢ*(1)=e^{*j*2π·0/*NSF*}=1, and wᵢ(m)=[1 1].

**[Table 11]**

| N_{SF} | ***φ*(*m*)** | | | | | | |
|---|---|---|---|---|---|---|---|
| | i=0 | i=1 | i=2 | i=3 | i=4 | i=5 | i=6 |
| 1 | [0] | - | - | - | - | - | - |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

Next, PUCCH format 3 is a DFT-S-OFDM based long PUCCH format that may support control information exceeding 2 bits, and the number of RBs used may be configured through a higher layer. The control information may be composed of a combination of HARQ-ACK, SR, and CSI or each of them. In PUCCH format 3, the DMRS symbol position is presented in the following Table 12 depending on whether frequency hopping is performed within the slot and whether additional DMRS symbols are configured.

**[Table 12]**

| PUCCH format 3/4 transmission length | DMRS position within PUCCH format 3/4 transmission | | | |
|---|---|---|---|---|
| | additional DMRS not configured | | additional DMRS configured | |
| | frequency hopping not configured | frequency hopping configured | frequency hopping not configured | frequency hopping configured |
| 4 | 1 | 0, 2 | 1 | 0, 2 |
| 5 | 0, 3 | | 0, 3 | |
| 6 | 1, 4 | | 1, 4 | |
| 7 | 1, 4 | | 1, 4 | |
| 8 | 1, 5 | | 1, 5 | |
| 9 | 1, 6 | | 1, 6 | |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

For example, when the number of transmission symbols of PUCCH format 3 is 8 symbols, starting from 0 as the first start symbol of the 8 symbols, DMRS is transmitted in the 1st symbol and the 5th symbol. [Table 12] is also applied in the same manner to the DMRS symbol position of PUCCH format 4.

Next, PUCCH format 4 is a DFT-S-OFDM-based long PUCCH format capable of supporting more than 2 bits of control information and uses 1 RB of the frequency resource. The control information may be composed of a combination of HARQ-ACK, SR, and CSI or each of them. The difference between PUCCH format 4 and PUCCH format 3 is that in the case of PUCCH format 4, PUCCH format 4 of multiple UEs may be multiplexed within one RB. It is possible to multiplex PUCCH format 4 of a plurality of UEs by applying Pre-DFT OCC (Orthogonal Cover Code) to control information at the front end of IFFT. However, the number of control information symbols that may be transmitted by one UE is decreased according to the number of multiplexed UEs. The number of UEs that may be multiplexed, i.e., the number of different OCCs that may be used, may be 2 or 4, and the number of OCCs and the OCC index to be applied may be configured through a higher layer.

Next, the short PUCCH is described. A short PUCCH may be transmitted in both a downlink centric slot and an uplink centric slot, and is generally transmitted in the last symbol of the slot or an OFDM symbol at the rear part (e.g., the last OFDM symbol or the second to last OFDM symbol, or the last 2 OFDM symbols). It is also possible to transmit the short PUCCH in any position within the slot. The short PUCCH may be transmitted using one OFDM symbol or two OFDM symbols. The short PUCCH may be used to reduce delay time compared to a long PUCCH when uplink cell coverage is good, and may be transmitted in a CP-OFDM scheme.

The short PUCCH may support transmission formats such as PUCCH format 0 and PUCCH format 2 according to the number of supportable control information bits. First, PUCCH format 0 is a short PUCCH format capable of supporting up to 2 bits of control information and uses 1 RB of the frequency resource. The control information may be composed of a combination or each of HARQ-ACK and SR. PUCCH format 0 has a structure of transmitting only a sequence mapped to 12 subcarriers on the frequency axis in one OFDM symbol without transmitting DMRS. The UE generates a sequence based on a group hopping or sequence hopping configuration and a configured ID configured through a higher layer signal from the base station, adds a different CS value according to whether it is ACK or NACK to an indicated initial CS (cyclic shift) value, cyclically shifts the generated sequence with the final CS value, maps it to 12 subcarriers, and transmits it.

For example, when HARQ-ACK is 1 bit, as illustrated in [Table 13] below, the UE may generate a final CS by adding 6 to the initial CS value if it is ACK, and may generate a final CS by adding 0 to the initial CS if it is NACK. The CS value of 0 for NACK and the CS value of 6 for ACK are defined in the specification, and the UE may generate PUCCH format 0 according to the value defined in the specification and transmit 1-bit HARQ-ACK.

**[Table 13]**

| 1bit HARQ-ACK | NACK | ACK |
|---|---|---|
| final CS | (initial CS+0) mod 12= initial CS | (initial CS+6) mod 12 |

For example, when HARQ-ACK is 2 bits, as illustrated in [Table 14] below, the UE adds 0 to the initial CS value if it is (NACK, NACK), adds 3 to the initial CS value if it is (NACK, ACK), adds 6 to the initial CS value if it is (ACK, ACK), and adds 9 to the initial CS value if it is (ACK, NACK). The CS value of 0 for (NACK, NACK), the CS value of 3 for (NACK, ACK), the CS value of 6 for (ACK, ACK), and the CS value of 9 for (ACK, NACK) are defined in the specification, and the UE may generate PUCCH format 0 according to the value defined in the specification and transmit 2-bit HARQ-ACK. When the final CS value exceeds 12 due to the CS value added according to ACK or NACK to the initial CS value, modulo 12 may be applied to the final CS value since the length of the sequence is 12.

**[Table 14]**

| 2bit HARQ-ACK | NACK, NACK | NANACK, ACK | ACK, ACK | ACK, NACK |
|---|---|---|---|---|
| final CS | (initial CS+0) mod 12= initial CS | (initial CS+3) mod 12 | (initial CS+6) mod 12 | (initial CS+9) mod 12 |

Next, PUCCH format 2 is a short PUCCH format that supports control information exceeding 2 bits, and the number of RBs used may be configured through a higher layer. The control information may be composed of a combination of HARQ-ACK, SR, and CSI or each of them. When the index of the first subcarrier is #0, in PUCCH format 2, the position of a subcarrier on which DMRS is transmitted within one OFDM symbol may be fixed to subcarriers having indices of #1, #4, #7, and #10. The control information may be mapped to remaining subcarriers except for the subcarrier on which DMRS is located through a channel coding and modulation process.

In summary, configurable values and ranges for each PUCCH format described above may be summarized as [Table 15] below. In [Table 15] below, a case where a value does not need to be configured is indicated as N.A.

**[Table 15]**

| | | PUCCH Format 0 | PUCCH Format 1 | PUCCH Format 2 | PUCCH Format 3 | PUCCH Format 4 |
|---|---|---|---|---|---|---|
| *Starting symbol* | Configurability | √ | √ | √ | √ | √ |
| | Value range | *0-13* | *0 - 10* | *0-13* | *0 - 10* | *0 - 10* |
| *Number of symbols in a slot* | Configurability | √ | √ | √ | √ | √ |
| | Value range | *1, 2* | *4 - 14* | *1, 2* | *4* - *14* | *4* - *14* |
| *Index for identify ing starting PRB* | Configurability | √ | √ | √ | √ | √ |
| | Value range | *0 - 274* | *0 - 274* | *0 - 274* | *0 - 274* | *0* -*274* |
| *Number of PRBs* | Configurability | *N. A.* | *N.A.* | √ | √ | *N.A.* |
| | Value range | *N.A. (Default is 1)* | *N.A. (Default is 1)* | *1 - 16* | *1 - 6, 8* - *10, 12, 15, 16* | *N.A. (Default is 1)* |
| *Enabling a FH* | Configuraility | √ | √ | √ | √ | √ |
| | Value range | *On*/*Off (only for 2 symbol)* | *On*/*Off* | *On*/*Off (only for 2 symbol)* | *On*/*Off* | *On*/*Off* |
| *Freq. cy resource of 2*^{nd} *hop if FH is enabled* | Configurability | √ | √ | √ | √ | √ |
| | Value range | *0 - 274* | *0 - 274* | *0* - *274* | *0 - 274* | *0 - 274* |
| *Index of initial cyclic shift* | Configurability | √ | √ | *N.A.* | *N.A.* | *N.A.* |
| | Value range | *0 - 11* | *0 - 11* | *N.A.* | *0* - *11* | *0* - *11* |
| *Index of time-dom ain OCC* | Configurability | *N.A.* | √ | *N.A.* | *N.A.* | *N.A.* |
| | Value range | *N.A.* | *0* - *6* | *N.A.* | *N. A.* | *N.A.* |
| *length of Pre-DFT OCC* | Configurability | *NA.* | *N.A.* | *N.A.* | *N.A.* | √ |
| | Value range | *N.A*. | *N.A.* | *N.A.* | *N.A.* | *2*, *4* |
| *Index of Pre-DFT OCC* | Configurability | *N.A.* | *N.A.* | *N.A.* | *N.A.* | √ |
| | Value range | *N.A.* | *N.A*. | *N.A.* | *N.A.* | *0, 1, 2, 3* |

Meanwhile, for uplink coverage enhancement, multi-slot repetition may be supported for PUCCH format 1, 3, and 4, and PUCCH repetition may be configured for each PUCCH format. The UE may perform repetition transmission for PUCCH including UCI for the number of slots configured through nrofSlots, which is higher layer signaling. For PUCCH repetition transmission, PUCCH transmission of each slot is performed using the same number of consecutive symbols, and the corresponding number of consecutive symbols may be configured through nrofSymbols in PUCCH-format1 or PUCCH-format3 or PUCCH-format4, which is higher layer signaling.

For PUCCH repetition transmission, PUCCH transmission of each slot is performed using the same start symbol, and the corresponding start symbol may be configured through startingSymbolIndex in PUCCH-format 1 or PUCCH-format 3 or PUCCH-format 4, which is higher layer signaling. For PUCCH repetition transmission, a single PUCCH-spatialRelationInfo may be configured for a single PUCCH resource. For PUCCH repetition transmission, if the UE is configured to perform frequency hopping in PUCCH transmission in different slots, the UE may perform frequency hopping on a slot basis.

Further, if the UE is configured to perform frequency hopping in PUCCH transmission in different slots, the UE may start PUCCH transmission from a first PRB index configured through startingPRB, which is higher layer signaling, in even-numbered slots, and may start PUCCH transmission from a second PRB index configured through secondHopPRB, which is higher layer signaling, in odd-numbered slots. Further, if the UE is configured to perform frequency hopping in PUCCH transmission in different slots, the index of the slot in which the first PUCCH transmission is indicated to the UE is 0, and during the configured total number of PUCCH repetition transmissions, the PUCCH repetition transmission count value may be increased regardless of PUCCH transmission performance in each slot.

If the UE is configured to perform frequency hopping in PUCCH transmission in different slots, the UE does not expect to be configured with frequency hopping within a slot during PUCCH transmission. If the UE is not configured to perform frequency hopping in PUCCH transmission in different slots and is configured with frequency hopping within a slot, the first and second PRB indices may be equally applied within a slot as well. If the number of uplink symbols in which PUCCH transmission is possible is smaller than nrofSymbols configured through higher layer signaling, the UE may not transmit PUCCH. Even when the UE did not perform PUCCH transmission for some reason in a predetermined slot during PUCCH repetition transmission, the UE may increase the PUCCH repetition transmission count.

In NR Release 17, the number of slots in which repetition transmission is performed for each PUCCH resource may be configured through higher layer signaling pucch-RepetitionNrofSlots-r17 in PUCCH-ResourceExt, which is an extension of PUCCH-Resource, which is higher layer signaling for a PUCCH resource. If the higher layer signaling pucch-RepetitionNrofSlots-r17 is configured, and the corresponding PUCCH resource is scheduled, and higher layer signaling nrofSlots is also configured, the UE determines the number of slots in which the PUCCH resource is repeatedly transmitted through pucch-RepetitionNrofSlots-r17 and ignores higher layer signaling nrofSlots.

### [PUCCH: transmit power related]

As an embodiment of the disclosure, a method in which a UE configures and transmits a transmit power of an uplink control channel when transmitting uplink control information through an uplink control channel (physical uplink control channel, PUCCH) in response to a power control command received from a base station is described. An uplink control channel transmit power (PPUCCH) of the UE together with a PUCCH power control adjustment state corresponding to an ith transmission unit and a closed loop index 1 may be determined as the following [Equation 2] represented in dBm units. In the following [Equation 2], when the UE supports a plurality of carrier frequencies in a plurality of cells, each parameter may be determined for each bandwidth part b, carrier frequency f, and primary cell c, and may be distinguished by indices b, f, and c. [Equation 2] $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{0 _PUCCH , b , f , c} \left({q}_{u}\right) + 10 {log}_{10} \left({2}^{μ}∗{M}_{RB , b , f , c}^{PUCCH}\left(i\right)\right) + {PL}_{b , f , c} \left({q}_{d}\right) + {Δ}_{F_PUCCH} \left(F\right) + {Δ}_{TF , b , f , c} \left(i\right) + {f}_{b , f , c} \left(i, l\right)\end{matrix}\right\}\end{matrix}$
- P_{CMAX,f,c}(i): The maximum transmit power available to the UE in the ith transmission unit, which is determined by the power class of the UE, parameters activated from the base station, and various parameters built into the UE.
- P_{0_PUCCH,b,f,c}(qᵤ): P_{0_PUCCH,b,f,c}(qᵤ) may be composed of the sum of P_{0_NOMINAL_PUCCH} and P_{0_UE_PUCCH}(qᵤ). P_{0_NOMINAL_PUCCH} is a cell-specific value and is configured through p0-nominal, which is Cell Specific higher layer signaling, and if there is no configuration, P_{0_NOMINAL_PUCCH} may be 0 dBm. P_{0_UE_PUCCH}(qu) is a UE-specific value and is configured through p0-PUCCH-Value in p0-PUCCH, which is higher layer signaling, in bandwidth part b, carrier frequency f, and primary cell c, and qu may be a value greater than or equal to 0 and less than Qᵤ, and Qᵤ may mean the size of the set of P_{0_UE_PUCCH} values and may be configured through maxNrofPUCCH-P0-PerSet, which is higher layer signaling. The set of P_{0_UE_PUCCH} values may be configured through p0-Set, which is higher layer signaling, and if there is no such configuration, P_{0_UE_PUCCH}(qᵤ)=0 may be assumed.
- µ: Subcarrier spacing configuration value
- ${M}_{RB , b , f , c}^{PUCCH} \left(i\right)$: May mean the amount of resources (e.g., the number of Resource Blocks (RBs) used for PUCCH transmission on the frequency axis) used in the ith PUCCH transmission unit in bandwidth part b, carrier frequency f, and primary cell c.
- PL_{b,f,c}(q_{d}): As path loss between the base station and the UE, the UE calculates pathloss from the difference between the transmit power of a reference signal (RS, Reference Signal) resource q_{d} signaled by the base station and the reception signal level of the reference signal of the UE.
- Δ_{F_PUCCH}(F): For PUCCH format 0, if deltaF-PUCCH-f0, which is higher layer signaling, is configured, the configured value is used, for PUCCH format 1, if deltaF-PUCCH-f1, which is higher layer signaling, is configured, the configured value is used, for PUCCH format 2, if deltaF-PUCCH-f2, which is higher layer signaling, is configured, the configured value is used, for PUCCH format 3, if deltaF-PUCCH-f3, which is higher layer signaling, is configured, the configured value is used, and for PUCCH format 4, if deltaF-PUCCH-f4, which is higher layer signaling, is configured, the value may be used. For all PUCCH formats, if higher layer signaling is not configured, 0 may be used.
- Δ_{TF,b,f,c}(i): As a PUCCH transmit power adjustment factor in bandwidth part b, carrier frequency f, and primary cell c, a different calculation method may be used according to the PUCCH format.
- g_{b,f,c}(i,l): May mean a PUCCH power control adjustment state value for the ith PUCCH transmission unit corresponding to the closed loop index l in bandwidth part b, carrier frequency f, and primary cell c. Here, closed loop power adjustment for PUCCH transmission may use an accumulation method of accumulating and applying a value indicated by a TPC command.

The PUCCH power control adjustment state g_{b,f,c}(i,l) may be determined through bandwidth part b, carrier frequency f, primary cell c, ith transmission unit, and closed loop index l.
- δ_{PUCCH,b,f,c}(i,l): May be a value indicated by a TPC command field included in DCI format 1_0, 1_1, or 1_2 scheduling PDSCH reception and the ith PUCCH transmission unit corresponding to the closed loop index l in bandwidth part b, carrier frequency f, and primary cell c, or may be a value indicated by a TPC command field included in DCI format 2_2 transmitted with CRC scrambled with TPC-PUCCH-RNTI.
   ∘ If the UE is configured with twoPUCCH-PC-AdjustmentStates and PUCCH-SpatialRelationInfo, which is higher layer signaling, the closed loop index l may have a value of 0 or 1.
   ∘ If the UE is not configured with twoPUSCH-PC-AdjustmentStates or PUCCH-SpatialRelationInfo, which is higher layer signaling, the closed loop index l may have a value of 0.
   ∘ If the UE obtains a TPC command value through a TPC command field included in DCI format 1_0, 1_1, or 1_2 scheduling PDSCH reception, and the UE is configured with PUCCH-SpatialRelationInfo, which is higher layer signaling, the UE may obtain a connection relationship between a pucch-SpatialRelationInfoId value and a closedLoopIndex value configuring the closed loop index l value based on an index that may be configured through p0-PUCCH-Id, which is higher layer signaling. If the UE receives a MAC-CE corresponding to pucch-SpatialRelationInfoId, the UE may determine a closedLoopIndex value configuring the closed loop index l value based on the corresponding p0-PUCCH-Id index.
   o If the UE obtains one TPC command value from a TPC command field included in DCI format 2_2 transmitted with CRC scrambled with TPC-PUCCH-RNTI, the l value may be obtained based on the closed loop index field included in the DCI format 2_2.

The PUCCH power control adjustment state g_{b,f,c}(i,l) for the ith PUCCH transmission unit corresponding to the closed loop index l in bandwidth part b, carrier frequency f, and primary cell c may be calculated as [Equation 3].

[Equation 3] ${g}_{b , f , c} \left(i, l\right) = {g}_{b , f , c} \left(i-{i}_{0},l\right) + {\sum }_{m = 0}^{c \left({C}_{i}\right) - 1} {δ}_{PUCCH , b , f , c} \left(m, l\right)$
∘ δ_{PUCCH,b,f,c}(m,l) may be, as described above, a value indicated by a TPC command field included in DCI format 1_0, 1_1, or 1_2 scheduling PDSCH reception and the mth PUCCH transmission unit corresponding to the closed loop index l in bandwidth part b, carrier frequency f, and primary cell c, or a value indicated by a TPC command field included in DCI format 2_2 transmitted with CRC scrambled with TPC-PUCCH-RNTI. When TPC command accumulation operation is possible, the δ_{PUCCH,b,f,c} value may have the corresponding value in [dB] units according to what value the TPC command field included in DCI format 1_0, 1_1, 1_2, or 2_2 is indicated as illustrated in [Table 18]. As an example, if the value of the TPC command field is 0, δ_{SRS,b,f,c}(i) may have a value of -1 dB.
∘ ${\sum }_{m = 0}^{c \left({C}_{i}\right) - 1} {δ}_{PUCCH , b , f , c} \left(m, l\right)$ may mean the sum of δ_{PUCCH,b,f,c} for all transmission units corresponding to the TPC command value described above in a specific set Cᵢ. c(Cᵢ) may mean the number of all elements belonging to the set Cᵢ. Cᵢ may mean a set of DCIs including all TPC command values to perform a TPC command accumulation operation for the ith PUCCH transmission unit. To determine Cᵢ, a start time and an end point on the time dimension are defined, and all DCIs received by the UE between the two points may be included as elements of Cᵢ.

• The end point for determining Cᵢ may be a point K_{PUCCH}(i) symbols before the start symbol of the ith PUCCH transmission unit.
• The start time for determining Cᵢ may be a point K_{PUCCH}(i-i₀)-1 symbols before the start symbol of the i - i₀th PUCCH transmission unit. The positive integer i₀ may be determined as the smallest value satisfying that the time K_{PUCCH}(i-i₀) symbols before the start symbol of the i - i₀th PUCCH transmission unit is earlier in time than the end point for determining Cᵢ (a point K_{PUCCH}(i) symbols before the start symbol of the ith PUCCH transmission unit).
• As an example, if the end point for determining Cᵢ may be defined as sym(i) and the time K_{PUCCH}(i-i₀) symbols before the start symbol of the i - i₀th PUCCH transmission unit may be defined as sym(i - i₀), if sym(i) = sym(i -1) > sym(i - 2) > sym(i -3), i₀ may be determined as 2.

### [PUSCH: transmission scheme related]

Next, a scheduling method for PUSCH transmission is described. PUSCH transmission may be dynamically scheduled by UL grant in DCI or operated by configured grant type 1 or type 2. Dynamic scheduling indication for PUSCH transmission is available in DCI format 0_0 or 0_1.

Configured grant Type 1 PUSCH transmission may be semi-statically configured through reception of configuredGrantConfig including rrc-ConfiguredUplinkGrant of Table 16 through higher layer signaling without reception of the UL grant in the DCI. Configured grant Type 2 PUSCH transmission may be semi-persistently scheduled by the UL grant in the DCI after receiving the configuredGrantConfig that does not include rrc-ConfiguredUplinkGrant of Table 16 through higher layer signaling.

When PUSCH transmission is operated by the configured grant, the parameters applied to PUSCH transmission are applied through configuredGrantConfig which is the higher layer signaling of Table 16 except for the dataScramblingIdentityPUSCH, txConfig, codebookSubset, maxRank, and scaling of UCI-OnPUSCH which are provided through the pusch-Config of Table 17 below which is higher layer signaling. If the UE receives transformPrecoder through configuredGrantConfig, which is higher layer signaling of Table 16, the UE applies tp-pi2BPSK in push-Config of Table 17 for PUSCH transmission operated by the configured grant.

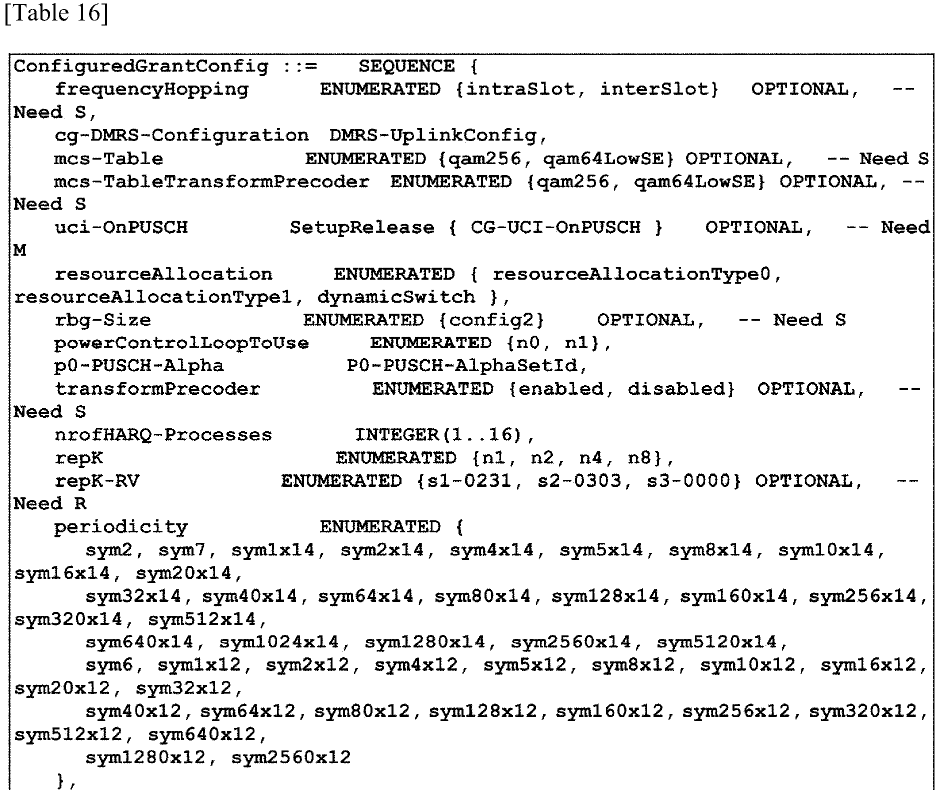

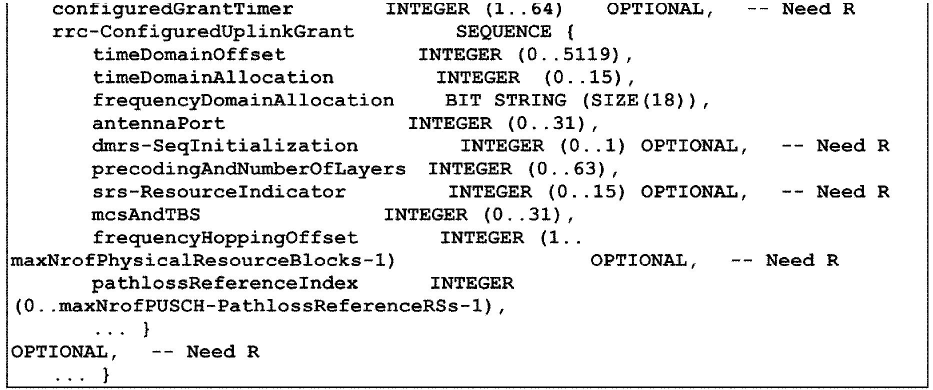

Next, a PUSCH transmission method is described. The DMRS antenna port for PUSCH transmission is the same as the antenna port for SRS transmission. PUSCH transmission may follow a codebook-based transmission method and a non-codebook-based transmission method, respectively, depending on whether the value of txConfig in push-Config of Table 17, which is higher signaling, is 'codebook' or 'nonCodebook'.

As described above, PUSCH transmission may be dynamically scheduled through DCI format 0_0 or 0_1 or be semi-statically configured by the configured grant. If the UE receives an instruction of scheduling on PUSCH transmission through DCI format 0_0, the UE performs beam configuration for PUSCH transmission using pucch-spatialRelationInfoID corresponding to the UE-specific PUCCH resource corresponding to the minimum ID in the uplink BWP activated in the serving cell, and the PUSCH transmission is based on a single antenna port.

The UE does not expect scheduling for PUSCH transmission through DCI format 0_0 in a BWP in which PUCCH resource including pucch-spatialRelationInfo is not configured. If the UE has not had txConfig in push-Config of Table 17 configured thereto, the UE does not expect to be scheduled through DCI format 0_1.

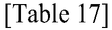

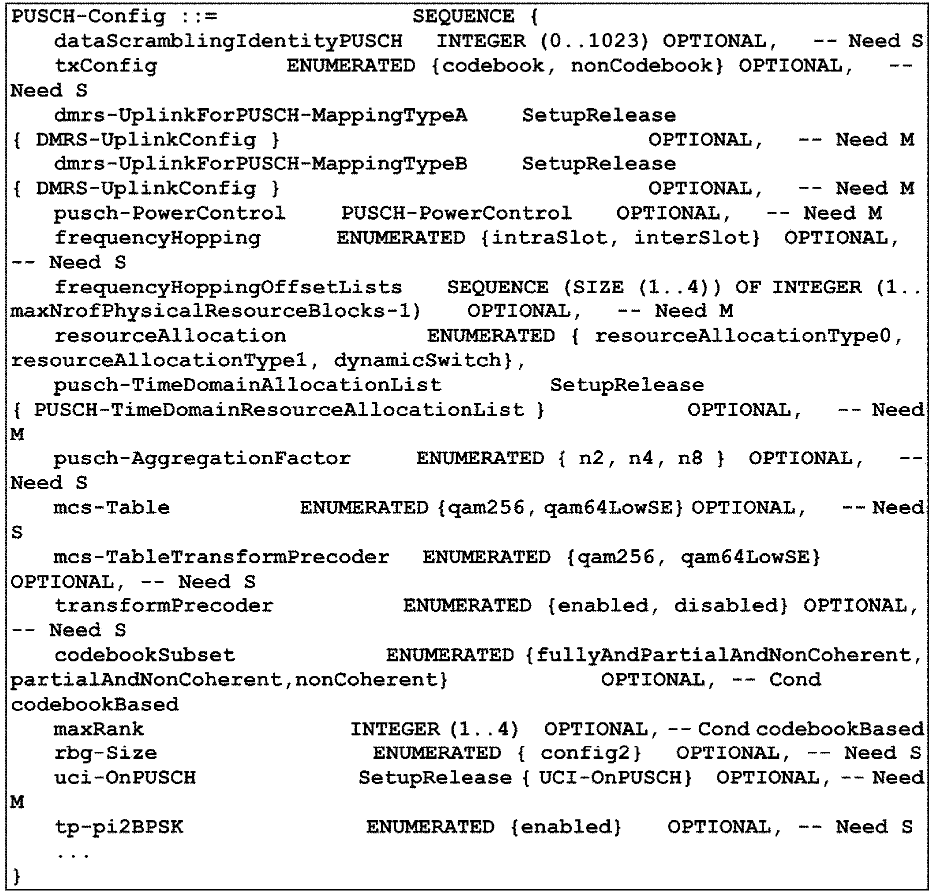

Next, codebook-based PUSCH transmission is described. Codebook-based PUSCH transmission may be dynamically operated through DCI format 0_0 or 0_1 or be semi-statically configured by the configured grant. if dynamically scheduled by codebook-based PUSCH DCI format 0_1 or semi-statically configured by configured grant, the UE determines a precoder for PUSCH transmission based on the SRS resource indicator (SRI), transmission precoding matrix indicator (TPMI), and transmission rank (number of PUSCH transmission layers).

The SRI may be given through a field SRS resource indicator in the DCI or configured through srs-ResourceIndicator which is higher layer signaling. The UE may have at least one SRS resource, up to two SRS resources, configured thereto upon codebook-based PUSCH transmission. When the UE receives the SRI through the DCI, the SRS resource indicated by the corresponding SRI means the SRS resource corresponding to the SRI among SRS resources transmitted prior to the PDCCH including the SRI.

The TPMI and transmission rank may be given through the field 'precoding information and number of layers' in the DCI or configured through precodingAndNumberOfLayers, which is higher level signaling. The TPMI is used to indicate the precoder applied to PUSCH transmission. If the UE is configured with one SRS resource, the TPMI is used to indicate a precoder to be applied in the configured one SRS resource. If the UE is configured with a plurality of SRS resources, the TPMI is used to indicate a precoder to be applied in the SRS resource indicated through the SRI.

The precoder to be used for PUSCH transmission is selected from an uplink codebook having the same number of antenna ports as the nrofSRS-Ports value in SRS-Config, which is higher layer signaling. In codebook-based PUSCH transmission, the UE determines a codebook subset based on the TPMI and codebookSubset in push-Config, which is higher layer signaling. codebookSubset in pusch-Config, which is higher layer signaling, may be set to one of 'fullyAndPartialAndNonCoherent', 'partialAndNonCoherent', or 'nonCoherent' based on the UE capability reported by the UE to the base station. If the UE reports 'partialAndNonCoherent' as the UE capability, the UE does not expect the value of codebookSubset, which is higher layer signaling, to be set to 'fullyAndPartialAndNonCoherent'.

Further, if the UE reports 'nonCoherent' as the UE capability, the UE does not expect the value of codebookSubset, which is higher signaling, to be set to 'fullyAndPartialAndNonCoherent' or 'partialAndNonCoherent'. If nrofSRS-Ports in SRS-ResourceSet, which is higher layer signaling, indicates two SRS antenna ports, the UE does not expect the value of codebookSubset, which is higher layer signaling, to be set to 'partialAndNonCoherent'.

The UE may have one SRS resource set, in which the value of usage in SRS-ResourceSet, which is higher signaling, is set to 'codebook,' configured thereto, and one SRS resource in the corresponding SRS resource set may be indicated through the SRI. If several SRS resources are configured in the SRS resource set in which the usage value in the SRS-ResourceSet, which is higher layer signaling, is set to 'codebook', the UE expects the same value to be set for all SRS resources in the nrofSRS-Ports value in the SRS-Resource which is higher signaling.

The UE may transmit one or more SRS resources included in the SRS resource set in which the value of usage is set to 'codebook' according to higher layer signaling to the base station, and the base station selects one of the SRS resources transmitted by the UE and instructs the UE to perform PUSCH transmission using transmission beam information about the corresponding SRS resource. In codebook-based PUSCH transmission, the SRI is used as information for selecting an index of one SRS resource and is included in the DCI. Additionally, the base station includes information indicating the TPMI and rank to be used by the UE for PUSCH transmission in the DCI. The UE performs PUSCH transmission by applying the precoder indicated by the rank and TPMI indicated by the transmission beam of the SRS resource using the SRS resource indicated by the SRI.

Next, non-codebook-based PUSCH transmission is described. Non-codebook-based PUSCH transmission may be dynamically operated through DCI format 0_0 or 0_1 or be semi-statically configured by the configured grant. When at least one SRS resource is configured in the SRS resource set in which the value of usage in the SRS-ResourceSet, which is higher signaling, is set to 'nonCodebook', the UE may be scheduled for non-codebook based PUSCH transmission through DCI format 0_1.

For the SRS resource set in which the value of usage in the SRS-ResourceSet, which is higher layer signaling, is set to 'nonCodebook', the UE may be configured with one connected NZP CSI-RS resource (non-zero power CSI-RS). The UE may perform calculation on the precoder for SRS transmission through measurement of the NZP CSI-RS resource connected with the SRS resource set. If the difference between the last received symbol of the aperiodic NZP CSI-RS resource connected with the SRS resource set and the first symbol of aperiodic SRS transmission in the UE is smaller than 42 symbols, the UE does not expect that information about the precoder for SRS transmission is updated.

If the value of resourceType in SRS-ResourceSet, which is higher signaling, is set to 'aperiodic', the connected NZP CSI-RS may be indicated by an SRS request, which is a field in DCI format 0_1 or 1_1. If the connected NZP CSI-RS resource is an aperiodic NZP CSI resource, it indicates that there is a connected NZP CSI-RS for the case where the value of the field SRS request in DCI format 0_1 or 1_1 is not '00.' The DCI (e.g., DCI format 0_1 or 1_1) should not indicate cross carrier or cross BWP scheduling. Further, if the value of the SRS request indicates the presence of NZP CSI-RS, the NZP CSI-RS is located in the slot in which the PDCCH including the SRS request field is transmitted. The TCI states configured for the scheduled subcarrier are not configured with QCL-TypeD.

If a periodic or semi-persistent SRS resource set is configured, the connected NZP CSI-RS may be indicated through associatedCSI-RS in SRS-ResourceSet, which is higher layer signaling. For non-codebook-based transmission, the UE does not expect spatialRelationInfo, which is higher signaling for SRS resource, and associatedCSI-RS in SRS-ResourceSet, which is higher layer signaling, to be configured together.

When a plurality of SRS resources are configured, the UE may determine a precoder and transmission rank to be applied to PUSCH transmission based on an SRI indicated by the base station. The SRI may be indicated through a field SRS resource indicator in DCI or may be configured through srs-ResourceIndicator, which is higher layer signaling. Like the above-described codebook-based PUSCH transmission, when the UE receives the SRI through the DCI, the SRS resource indicated by the corresponding SRI means the SRS resource corresponding to the SRI among SRS resources transmitted prior to the PDCCH including the SRI. The UE may use one or more SRS resources for SRS transmission. The maximum number of SRS resources and the maximum number of SRS resources that may be simultaneously transmitted in the same symbol within one SRS resource set are determined by the UE capability reported by the UE to the base station. SRS resources transmitted simultaneously by the UE occupy the same RB. The UE configures one SRS port for each SRS resource. Only one SRS resource set in which the value of usage in the SRS-ResourceSet, which is higher signaling, is set to 'nonCodebook' may be configured, and up to 4 SRS resources are configured for non-codebook-based PUSCH transmission.

The base station transmits one NZP CSI-RS connected with the SRS resource set to the UE, and the UE calculates the precoder to be used for transmission of one or more SRS resources in the SRS resource set based on the measurement result upon NZP CSI-RS reception. The UE may apply the calculated precoder when transmitting one or more SRS resources in the SRS resource set with usage set to 'nonCodebook' to the base station, and the base station selects one or more SRS resources among one or more SRS resources received. In non-codebook based PUSCH transmission, the SRI indicates an index that may represent a combination of one or a plurality of SRS resources, and the SRI is included in the DCI. The number of SRS resources indicated by the SRI transmitted by the base station may be the number of transmission layers of the PUSCH. The UE applies the precoder applied to SRS resource transmission to each layer and transmits the PUSCH.

### [PUSCH transmit power related]

As an embodiment of the disclosure, a method in which a UE configures and transmits a transmit power of the physical uplink shared channel when transmitting uplink data through a physical uplink shared channel (PUSCH) in response to a power control command received from a base station is described. The transmit power of the physical uplink shared channel of the UE together with a PUSCH power control adjustment state corresponding to an ith transmission unit, a parameter set configuration index j, and a closed loop index 1 may be determined as the following [Equation 4] represented in dBm units. In the following [Equation 4], when the UE supports a plurality of carrier frequencies in a plurality of cells, each parameter may be determined for each bandwidth part b, carrier frequency f, and cell c, and may be distinguished by indices b, f, and c. [Equation 4] $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{0 _PUSCH , b , f , c} \left(j\right) + 10 {log}_{10} \left({2}^{μ}∗{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \left[dBm\right]\end{matrix}$
- P_{CMAX,f,c}(i): The maximum transmit power available to the UE in the ith transmission unit, which is determined by the power class of the UE, parameters activated from the base station, and various parameters built into the UE.
- P_{0_PUSCH,b,f,c}(j): P_{0_PUSCH,b,f,c}(j) is composed of the sum of P_{0_NOMINAL_PUSCH,f,c}(j) and P_{0_UE_PUSCH,b,f,c}(j). P_{0_NOMINAL_PUSCH,f,c}(j) is a value configured through cell-specific higher layer signaling to the UE, and P_{0_UE_PUSCH,b,f,c}(j) is a value configured through UE-specific higher layer signaling. Here, when j=0, it means PUSCH for transmitting msg3, when j=1, it means configured grant PUSCH, and if j is one of {2, ..., J-1}, it means grant PUSCH.
- µ: Subcarrier spacing configuration value
- ${M}_{RB , b , f , c}^{PUSCH} \left(i\right)$: May mean the amount of resources (e.g., the number of Resource Blocks (RBs) used for PUSCH transmission on the frequency axis) used in the ith PUSCH transmission unit.
- α_{b,f,c}(j): A value for compensating path loss, and may mean a value that may be determined through a higher layer configuration and SRI (SRS Resource Indicator) (in the case of dynamic grant PUSCH).
- PL_{b,f,c}(q_{d}): As path loss between the base station and the UE, the UE calculates pathloss from the difference between the transmit power of a reference signal (RS, Reference Signal) resource q_{d} signaled by the base station and the reception signal level of the reference signal of the UE. This means a downlink path loss estimate estimated by the UE through a reference signal having a reference signal index of q_{d}, and the reference signal index q_{d} may be determined by the UE through a higher layer configuration and SRI (in the case of dynamic grant PUSCH or type 2 configured grant PUSCH based on ConfiguredGrantConfig not including higher layer configuration rrc-ConfiguredUplinkGrant) or through a higher layer configuration.
- Δ_{TF,b,f,c}(i): Means a value determined according to an MCS (Modulation Coding Scheme) and a format (TF, transport format) of information transmitted through PUSCH (e.g., whether UL-SCH is included or whether CSI is included).
- f_{b,f,c}(i,l): A closed loop power control adjustment value, and means a value for a closed loop index l that may be determined by a higher layer configuration and SRI for PUSCH. Here, closed loop power adjustment for PUSCH transmission may be divided into an accumulation method of accumulating and applying a value indicated by a TPC command and an absolute method of directly applying the value indicated by the TPC command, and this may be determined according to whether the higher layer parameter tpc-Accumulation is configured. If the higher layer parameter tpc-Accumulation is set to disabled, closed loop power adjustment for PUSCH transmission is performed by the absolute method, and if tpc-Accumulation is not configured, closed loop power adjustment for PUSCH transmission is performed by the accumulation method.

The PUSCH power control adjustment state f_{b,f,c}(i,l) may be determined through bandwidth part b, carrier frequency f, cell c, ith transmission unit, and closed loop index l.
- δ_{PUSCH,b,f,c}(i,l): May be a value indicated by a TPC command field included in DCI format 0_0, 0_1, or 0_2 scheduling the ith PUSCH transmission unit corresponding to the closed loop index l in bandwidth part b, carrier frequency f, and cell c, or may be a value indicated by a TPC command field included in DCI format 2_2 transmitted with CRC scrambled with TPC-PUSCH-RNTI.
   ∘ If the UE is configured with twoPUSCH-PC-AdjustmentStates, which is higher layer signaling, the closed loop index l may have a value of 0 or 1.
   ∘ If the UE is not configured with twoPUSCH-PC-AdjustmentStates, which is higher layer signaling, or is scheduled for PUSCH transmission based on RAR UL grant, the closed loop index l may have a value of 0.

   - If the UE is configured with ConfiguredGrantConfig, which is higher layer signaling, and performs PUSCH transmission or retransmission for this, the closed loop index l may follow the powerControlLoopToUse value, which is higher layer signaling.
   - If the UE is configured with SRI-PUSCH-PowerControl, which is higher layer signaling, the UE may obtain a connection relationship between a value indicated by an SRI (SRS resource indicator) field in a DCI format scheduling PUSCH transmission and a closed loop index l configured through sri-PUSCH-ClosedLoopIndex, which is higher layer signaling, and may determine the closed loop index l based on the value indicated by the SRI field in the DCI format based on the corresponding connection relationship.
   - If the UE is scheduled for PUSCH transmission based on a DCI format that does not include an SRI field, or is not configured with SRI-PUSCH-PowerControl, which is higher layer signaling, the UE may regard the closed loop index l as 0.
   - If the UE is indicated a TPC command value through a TPC command field included in DCI format 2_2 transmitted with CRC scrambled with TPC-PUSCH-RNTI, the closed loop index l may be indicated through a closed loop index field included in DCI format 2_2.
- If the UE is not configured with tpc-Accumulation, which is higher layer signaling, i.e., if TPC command accumulation operation is possible for the UE, the PUSCH power control adjustment state f_{b,f,c}(i,l) for the ith PUSCH transmission unit corresponding to the closed loop index l in bandwidth part b, carrier frequency f, and cell c may be calculated as [Equation 5].
[Equation 5] ${h}_{b , f , c} \left(i, l\right) = {f}_{b , f , c} \left(i-{i}_{0},l\right) + {\sum }_{m = 0}^{c \left({D}_{i}\right) - 1} {δ}_{PUSCH , b , f , c} \left(m, l\right)$
∘ δ_{PUSCH,b,f,c}(m,l) may be, as described above, a value indicated by a TPC command field included in DCI format 0_0, 0_1, or 0_2 scheduling the mth PUSCH transmission unit corresponding to the closed loop index l in bandwidth part b, carrier frequency f, and cell c, or a value indicated by a TPC command field included in DCI format 2_2 transmitted with CRC scrambled with TPC-PUSCH-RNTI. When TPC command accumulation operation is possible, the δ_{PUSCH,b,f,c} value may have the corresponding value in [dB] units according to what value the TPC command field included in DCI format 0_0, 0_1, 0_2, or 2_2 is indicated as illustrated in [Table 18] below. As an example, if the value of the TPC command field is 0, δ_{PUSCH,b,f,c}(i) may have a value of -1 dB.
∘ ${\sum }_{m = 0}^{c \left({D}_{i}\right) - 1} {δ}_{PUSCH , b , f , c} \left(m, l\right)$ may mean the sum of δ_{PUSCH,b,f,c} values for all transmission units corresponding to the TPC command value described above in a specific set Dᵢ. In this case, c(Dᵢ) may mean the number of all elements belonging to the set Dᵢ. Dᵢ may mean a set of DCIs including all TPC command values to perform a TPC command accumulation operation for the ith PUSCH transmission unit. To determine Dᵢ, a start time and an end point on the time dimension are defined, and all DCIs received by the UE between the two points may be included as elements of Dᵢ.

- The end point for determining Dᵢ may be a point K_{PUSCH}(i) symbols before the start symbol of the ith PUSCH transmission unit.
- The start time for determining Dᵢ may be a point K_{PUSCH}(i-i₀)-1 symbols before the start symbol of the i - i₀th PUSCH transmission unit. The positive integer i₀ may be determined as the smallest value satisfying that the time K_{PUSCH}(i-i₀) symbols before the start symbol of the i - i₀th PUSCH transmission unit is earlier in time than the end point for determining Dᵢ (a point K_{PUSCH}(i) symbols before the start symbol of the ith PUSCH transmission unit).
- As an example, if the end point for determining Dᵢ may be defined as sym(i) and the time K_{PUSCH}(i-i₀) symbols before the start symbol of the i - i₀th PUSCH transmission unit may be defined as sym(i - i₀), if sym(i) = sym(i -1) > sym(i - 2) > sym(i -3), i₀ may be determined as 2.

- If the UE is configured with tpc-Accumulation, which is higher layer signaling, i.e., if TPC command accumulation operation is not possible for the UE, the PUSCH power control adjustment state f_{b,f,c}(i,l) for the ith PUSCH transmission unit corresponding to the closed loop index l in bandwidth part b, carrier frequency f, and cell c may be calculated as [Equation 6].
[Equation 6] ${f}_{b , f , c} \left(i, l\right) = {δ}_{PUSCH , b , f , c} \left(i, l\right)$

δ_{PUSCH,b,f,c}(i,l) may be, as described above, a value indicated by a TPC command field included in DCI format 0_0, 0_1, or 0_2 scheduling the ith PUSCH transmission unit corresponding to the closed loop index l in bandwidth part b, carrier frequency f, and cell c, or a value indicated by a TPC command field included in DCI format 2_2 transmitted with CRC scrambled with TPC-PUSCH-RNTI. When TPC command accumulation operation is not possible, the δ_{PUSCH,b,f,c} value may have the corresponding value in [dB] units according to what value the TPC command field included in DCI format 0_0, 0_1, 0_2, or 2_2 is indicated as illustrated in [Table 18] below. As an example, if the value of the TPC command field is 0, δ_{PUSCH,b,f,c}(i) may have a value of -4 dB.

**[Table 18]**

| TPC command | Accumulated *δ*_{PUSCH,*b*,*f,c*} [dB] | Absolute *δ*_{PUSCH,*b*,*f,c*} [dB] |
|---|---|---|
| 0 | -1 | -4 |
| 1 | 0 | -1 |
| 2 | 1 | 1 |
| 3 | 3 | 4 |

### [SRS related]

Next, an uplink channel estimation method using the UE's sounding reference signal (SRS) is described. The base station may configure the UE with at least one SRS configuration for each uplink BWP to transfer configuration information for SRS transmission and may configure the UE with at least one SRS resource set for each SRS configuration. As an example, the base station and the UE may exchange the following higher signaling information to transfer information regarding the SRS resource set.
- srs-ResourceSetId: SRS resource set index
- srs-ResourceIdList: A set of SRS resource indexes referenced by SRS resource set
- resourceType: A time-axis transmission configuration of the SRS resource referenced by SRS resource set. This may be set to one of 'periodic', 'semi-persistent', and 'aperiodic'. When set to 'periodic' or 'semi-persistent,' associated CSI-RS information may be provided depending on the use of the SRS resource set. If set to 'aperiodic', aperiodic SRS resource trigger list and slot offset information may be provided, and associated CSI-RS information may be provided depending on the use of the SRS resource set.
- usage: A configuration for the use of the SRS resource referenced by the SRS resource set and may be set to one of 'beamManagement,' 'codebook,' 'nonCodebook,' and 'antennaSwitching.'
- alpha, p0, pathlossReferenceRS, srs-PowerControlAdjustmentStates: This provides a parameter configuration for adjusting the transmit power of the SRS resource referenced by the SRS resource set.

The UE may understand that the SRS resource included in the set of SRS resource indexes referenced by the SRS resource set follows the information configured in the SRS resource set.

Further, the base station and the UE may transmit/receive higher layer signaling information to transfer individual configuration information for the SRS resource. As an example, the individual configuration information for the SRS resource may include time-frequency axis mapping information in the slot of the SRS resource, which may include information for frequency hopping within or between slots of the SRS resource. Further, the individual configuration information for the SRS resource may include the time axis transmission configuration of the SRS resource and may be set to one of 'periodic', 'semi-persistent', and 'aperiodic'. This may pose a limitation to have the same time axis transmission configuration as the SRS resource set including the SRS resource. If the time axis transmission configuration of the SRS resource is set to 'periodic' or 'semi-persistent,' the SRS resource transmission period and slot offset (e.g., periodicityAndOffset) may be additionally included in the time axis transmission configuration.

The base station may trigger activation or deactivation for SRS transmission to the UE through RRC signaling or higher layer signaling including MAC CE signaling, or L1 signaling (e.g., DCI). For example, the base station may activate or deactivate periodic SRS transmission through higher layer signaling to the UE. The base station may instruct to activate the SRS resource set in which the resourceType is set to periodic through higher layer signaling, and the UE may transmit the SRS resource referenced by the activated SRS resource set.

The time-frequency axis resource mapping in the slot of the transmitted SRS resource follows the resource mapping information configured in the SRS resource, and the slot mapping including the transmission period and the slot offset follows the periodicityAndOffset configured in the SRS resource. Further, the spatial domain transmission filter applied to the transmitted SRS resource may reference the spatial relation info configured in the SRS resource or may reference the associated CSI-RS information configured in the SRS resource set including the SRS resource. The UE may transmit the SRS resource within the uplink BWP activated for the periodic SRS resource activated through higher layer signaling.

For example, the base station may activate or deactivate semi-persistent SRS transmission through higher layer signaling to the UE. The base station may instruct to activate the SRS resource set through MAC CE signaling, and the UE may transmit the SRS resource referenced by the activated SRS resource set. The SRS resource set activated through MAC CE signaling may be limited to the SRS resource set in which the resourceType is set to semi-persistent. The time-frequency axis resource mapping in the slot of the transmitted SRS resource follows the resource mapping information configured in the SRS resource, and the slot mapping including the transmission period and the slot offset follows the periodicityAndOffset configured in the SRS resource.

Further, the spatial domain transmission filter applied to the transmitted SRS resource may reference the spatial relation info configured in the SRS resource or may reference the associated CSI-RS information configured in the SRS resource set including the SRS resource. If spatial relation info is configured in the SRS resource, rather than following it, the configuration information for the spatial relation info transferred through MAC CE signaling, which activates the semi-persistent SRS transmission, may be referenced to determine the spatial domain transmission filter. The UE may transmit the SRS resource within the uplink BWP activated for the semi-persistent SRS resource activated through higher layer signaling.

For example, the base station may trigger the aperiodic SRS transmission through DCI to the UE. The base station may indicate one of aperiodic SRS resource triggers (aperiodicSRS-ResourceTrigger) through the SRS request field of DCI. The UE may understand that the SRS resource set including the aperiodic SRS resource trigger indicated through the DCI in the aperiodic SRS resource trigger list among the configuration information of the SRS resource set has been triggered. The UE may transmit the SRS resource referenced by the triggered SRS resource set. The time-frequency axis resource mapping in the slot of the transmitted SRS resource follows the resource mapping information configured in the SRS resource.

Further, the slot mapping of the transmitted SRS resource may be determined through a slot offset between the PDCCH including DCI and the SRS resource, and it may reference the value(s) included in the slot offset set configured in the SRS resource set. Specifically, as the slot offset between the PDCCH including DCI and the SRS resource, the value indicated by the time domain resource assignment field of DCI among the offset value(s) included in the slot offset set configured in the SRS resource set may be applied. Further, the spatial domain transmission filter applied to the transmitted SRS resource may reference the spatial relation info configured in the SRS resource or may reference the associated CSI-RS information configured in the SRS resource set including the SRS resource. The UE may transmit an SRS resource within the uplink BWP activated for aperiodic SRS resource triggered through DCI.

When the base station triggers aperiodic SRS transmission to the UE through DCI, the UE may require a minimum time interval between the transmitted SRS and the PDCCH including the DCI triggering the aperiodic SRS transmission so as to apply the configuration information for the SRS resource and transmit the SRS. The time interval for SRS transmission of the UE may be defined as the number of symbols between the last symbol of the PDCCH including the DCI triggering aperiodic SRS transmission and the first symbol mapped with the first SRS resource transmitted among the transmitted SRS resource(s).

The minimum time interval may be determined with reference to PUSCH preparation procedure time required for UE to prepare PUSCH transmission. Further, the minimum time interval may have a different value depending on the use of the SRS resource set including the transmitted SRS resource. For example, the minimum time interval may be determined as N2 symbols defined considering the UE processing capability according to the UE capability by referring to the UE's PUSCH preparation procedure time. Further, when the use of the SRS resource set is set to 'codebook' or 'antennaSwitching' considering the use of the SRS resource set including the transmitted SRS resource, the minimum time interval may be determined as N2 and, when the use of SRS resource set is set to 'nonCodebook' or 'beamManagement,' the minimum time interval may be determined as N₂+14 symbols. The UE may transmit aperiodic SRS when the time interval for aperiodic SRS transmission is larger than or equal to the minimum time interval and may disregard DCI triggering aperiodic SRS when the time interval for aperiodic SRS transmission is smaller than the minimum time interval.

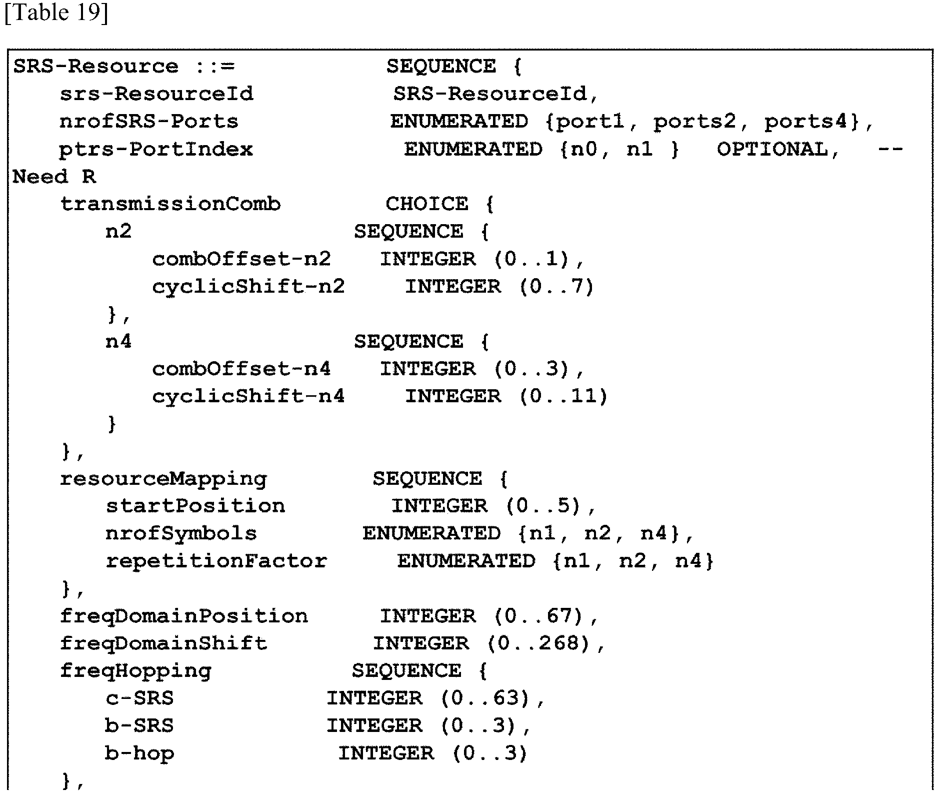

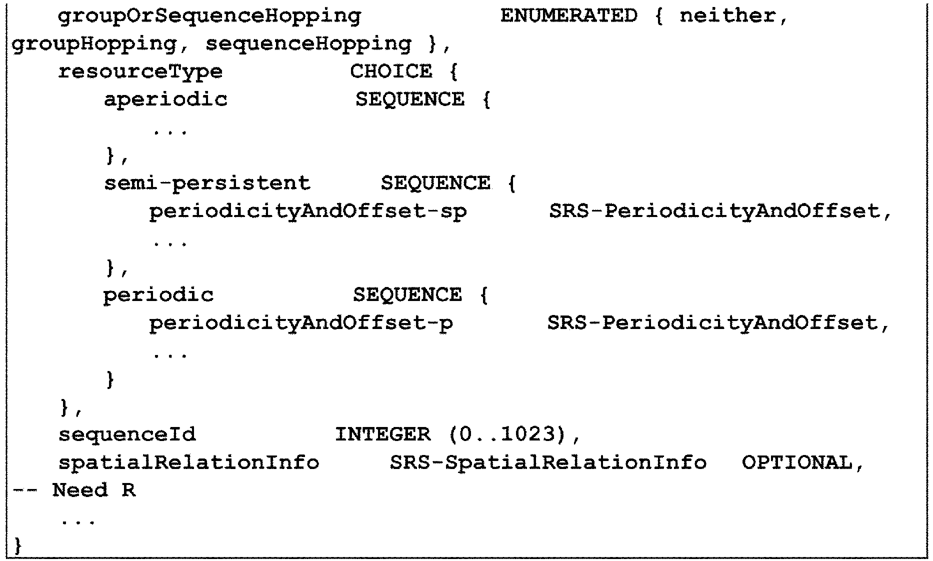

The spatialRelationInfo configuration information in Table 19 is applied to the beam used for SRS transmission corresponding to the beam information about the corresponding reference signal by referring to one reference signal. For example, the configuration of spatialRelationInfo may include information such as those shown in Table 20 below.

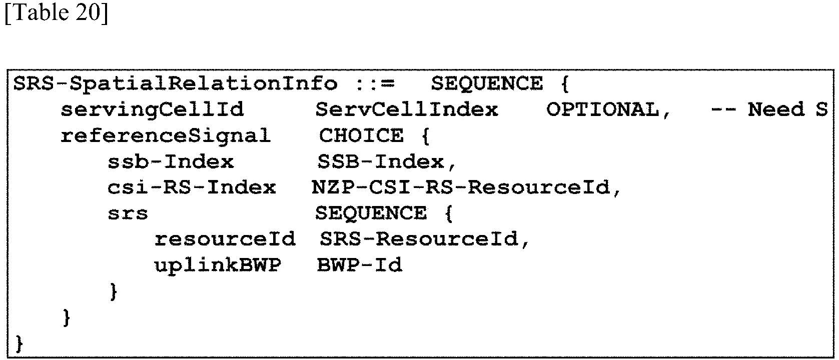

Referring to the spatialRelationInfo configuration, the SS/PBCH block index, CSI-RS index, or SRS index may be set as reference signal index to be referenced for use of the beam information about a specific reference signal. The higher layer signaling referenceSignal is configuration information indicating which reference signal of beam information is to be referenced for corresponding SRS transmission, and ssb-Index, csi-RS-Index, and srs refer to the index of the SS/PBCH block, the index of the CSI-RS, and the index of the SRS, respectively.

If the value of the higher layer signaling referenceSignal is set to 'ssb-Index,' the UE may apply the reception beam which has been used for reception of the SS/PBCH block corresponding to the ssb-Index, as the transmission beam of corresponding SRS transmission. If the value of the higher layer signaling referenceSignal is set to 'csi-RS-Index,' the UE may apply the reception beam which has been used for reception of the CSI-RS corresponding to the csi-RS-Index, as the transmission beam of corresponding SRS transmission. If the value of the higher layer signaling referenceSignal is set to 'srs,' the UE may apply the transmission beam which has been used for transmission of the SRS corresponding to the srs, as the transmission beam of corresponding SRS transmission.

### [SRS transmit power related]

As an embodiment of the disclosure, a method in which a UE configures and transmits a transmit power of an uplink reference signal when transmitting through an uplink reference signal (SRS, Sounding Reference Signal) in response to a power control command received from a base station is described. The uplink reference signal transmit power (P_{SRS}) of the UE together with an SRS power control adjustment state corresponding to an ith transmission unit and a closed loop index l may be determined as the following [Equation 7] represented in dBm units. In the following [Equation 7], when the UE supports a plurality of carrier frequencies in a plurality of cells, each parameter may be determined for each bandwidth part b, carrier frequency f, and cell c, and may be distinguished by indices b, f, and c. [Equation 7] $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _SRS , b , f , c} \left({q}_{s}\right) + 10 {log}_{10} \left({2}^{μ}∗{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \left[dBm\right]\end{matrix}$
- P_{CMAX,f,c}(i): The maximum transmit power available to the UE in the ith transmission unit, which is determined by the power class of the UE, parameters activated from the base station, and various parameters built into the UE.
- P_{0_SRS,b,f,c}(qₛ): May be configured through p0, which is higher layer signaling, for bandwidth part b, carrier frequency f, and cell c, and the SRS resource set qₛ may be configured through SRS-ResourceSet and SRS-ResourceSetId, which is higher layer signaling.
- µ: Subcarrier spacing configuration value
- M_{SRS,b,f,c}(i): May mean the amount of resources (e.g., the number of Resource Blocks (RBs) used for SRS transmission on the frequency axis) used in the ith SRS transmission unit.
- α_{SRS,b,f,c}(i): May be configured through alpha, which is higher layer signaling, for bandwidth part b, carrier frequency f, and cell c, and the SRS resource set qₛ may be configured through SRS-ResourceSet and SRS-ResourceSetId, which is higher layer signaling.
- PL_{b,f,c}(q_{d}): As pathloss indicating path loss between the base station and the UE, the UE calculates pathloss from the difference between the transmit power of a reference signal (RS, Reference Signal) resource q_{d} signaled by the base station and the reception signal level of the reference signal of the UE.
- h_{b,f,c}(i,l): May mean an SRS power control adjustment state value for the ith SRS transmission unit corresponding to the closed loop index l in bandwidth part b, carrier frequency f, and cell c.

The SRS power control adjustment state may be determined through bandwidth part b, carrier frequency f, cell c, and ith transmission unit.
- If the UE is configured through srs-PowerControlAdjustmentStates, which is higher layer signaling, to have the same power control adjustment state value between SRS transmission and PUSCH transmission, the SRS power control adjustment state may be represented as the following [Equation 8], and in [Equation 8], f_{b,f,c}(i,l) may mean a current PUSCH power control adjustment state. In this case, f_{b,f,c}(i,l) may be calculated through various methods of Embodiment 1 described above, and the value may be substituted into h_{b,f,c}(i,l) for use.

   [Equation 8] ${h}_{b , f , c} \left(i, l\right) = {f}_{b , f , c} \left(i, l\right)$
- If the UE is not configured for PUSCH transmission in bandwidth part b, carrier frequency f, and cell c, or is configured through srs-PowerControlAdjustmentStates, which is higher layer signaling, to have a separate power control adjustment state value between SRS transmission and PUSCH transmission, and tpc-Accumulation, which is higher layer signaling, is not configured, the SRS power control adjustment state may be represented as the following [Equation 9] regardless of the closed loop l.

   [Equation 9] ${h}_{b , f , c} \left(i\right) = {h}_{b , f , c} \left(i-{i}_{0}\right) + {\sum }_{m = 0}^{c \left({S}_{i}\right) - 1} {δ}_{SRS , b , f , c} \left(m\right)$
- δ_{SRS,b,f,c}(m): May be a value indicated by a TPC command field included in DCI format 2_3, and the value may follow [Table 17] above.

∘ ${\sum }_{m = 0}^{c \left({S}_{i}\right) - 1} {δ}_{SRS , b , f , c} \left(m\right)$ may mean the sum of δ_{SRS,b,f,c} values for all transmission units corresponding to the TPC command value described above in a specific set Sᵢ. c(Sᵢ) may mean the number of all elements belonging to the set Sᵢ. Sᵢ may mean a set of DCIs including all TPC command values to perform a TPC command accumulation operation for the ith PUSCH transmission unit. To determine Sᵢ, a start time and an end point on the time dimension are defined, and all DCIs received by the UE between the two points may be included as elements of Sᵢ.

- The end point for determining Sᵢ may be a point K_{SRS}(i) symbols before the start symbol of the ith SRS transmission unit.
- The start time for determining Sᵢ may be a point K_{SRS}(i-i₀)-1 symbols before the start symbol of the i - i₀th SRS transmission unit. The positive integer i₀ may be determined as the smallest value satisfying that the time K_{SRS}(i-i₀) symbols before the start symbol of the i - i₀th SRS transmission unit is earlier in time than the end point for determining Sᵢ (a point K_{SRS}(i) symbols before the start symbol of the ith SRS transmission unit).
- As an example, if the end point for determining Sᵢ may be defined as sym(i) and the time K_{SRS}(i-i₀) symbols before the start symbol of the i - i₀th SRS transmission unit may be defined as sym(i - i₀), if sym(i) = sym(i -1) > sym(i - 2) > sym(i -3), i₀ may be determined as 2.

If the UE is not configured for PUSCH transmission in bandwidth part b, carrier frequency f, and cell c, or is configured through srs-PowerControlAdjustmentStates, which is higher layer signaling, to have a separate power control adjustment state value between SRS transmission and PUSCH transmission, and tpc-Accumulation, which is higher layer signaling, is configured (that is, when TPC command accumulation operation may not be performed and an absolute TPC command value may be applied), the SRS power control adjustment state may be represented as the following [Equation 10] regardless of the closed loop l. [Equation 10] ${h}_{b , f , c} \left(i\right) = {δ}_{SRS , b , f , c} \left(i\right)$
∘ δ_{SRS,b,f,c}(i) may be, as described above, a value indicated by a TPC command field included in DCI format 2_3 in bandwidth part b, carrier frequency f, and cell c, and the value may follow [Table 18] above. As an example, if the value of the TPC command field is 0, δ_{SRS,b,f,c}(i) may have a value of -4 dB.

### [Regarding UE capability report]

In LTE and NR, the UE may perform a procedure for reporting the capability supported by the UE to the corresponding base station while connected to the serving base station. In the description below, this is referred to as a UE capability report.

The base station may transfer a UE capability enquiry message for requesting capability report to the UE in the connected state. The message may include a UE capability request for each radio access technology (RAT) type of the base station. The request for each RAT type may include supported frequency band combination information. Further, in the case of the UE capability enquiry message, the respective UE capabilities of the plurality of RAT types may be requested through one RRC message container, or the base station may include a plurality of UE capability enquiry messages containing the per-RAT type UE capability requests and transfer them to the UE. In other words, a plurality of UE capability enquiries may be repeated in one message, and the UE may configure a UE capability information message corresponding thereto and report it multiple times. In the next-generation mobile communication system, UE capability requests for multi-RAT dual connectivity (MR-DC) as well as NR, LTE, E-UTRA-NR dual connectivity (EN-DC) may be made. Further, although it is common that the UE capability enquiry message is transmitted at an early time after the UE is connected to the base station, it may also be requested under any condition when required by the base station.

Upon receiving a request for UE capability report from the base station in the above step, the UE configures UE capability according to the RAT type and band information requested from the base station. In an embodiment, a method in which the UE configures UE capability in an NR system is as follows.
1. If the UE is provided with a list of LTE and/or NR bands at the request for UE capability from the base station, the UE configures a band combination (BC) for EN-DC and NR stand alone (SA). In other words, the UE configures a BC candidate list for EN-DC and NR SA based on the bands requested to the base station through FreqBandlist. Band priorities may have priorities in the order listed in FreqBandlist.
2. If the base station sets "eutra-nr-only" flag or "eutra" flag and requests UE capability report, the UE completely removes those for NR SA BCs from the configured BC candidate list. This operation may occur only when the LTE base station (eNB) requests "eutra" capability.
3. Then, the UE removes fallback BCs from the BC candidate list configured in the above step. Here, fallback BC means a BC that may be obtained by removing the band corresponding to at least one SCell from any BCs and, since the BC before removing the band corresponding to at least one SCell is able to cover the fallback BC, it may be omitted. This step applies to MR-DC, i.e., LTE bands also apply. The BCs remaining after this step are the final "candidate BC list."
4. The UE selects BCs fitting the requested RAT type in the final "candidate BC list" to select BCs to be reported. In this step, the UE configures the supportedBandCombinationlist in a predetermined order. In other words, the UE configures the BCs and UE capabilities to be reported according to the preset rat-Type order. (nr -> eutra-nr -> eutra). Further, the UE configures a featureSetCombination for the configured supportedBandCombinationList and configures a "candidate feature set combination" list in the candidate BC list where the list of fallback BCs (including the capability of the same or lower step) has been removed. The "candidate feature set combination" may include the whole feature set combination for NR and EUTRA-NR BC and be obtained from the feature set combination of the UE-MRDC-Capabilities container and the UE-NR-Capabilities.
5. Further, if the requested rat type is eutra-nr and has an effect, featureSetCombinations is included in both containers of UE-MRDC-Capabilities and UE-NR-Capabilities. However, the NR feature set includes only the UE-NR-Capabilities.

After the UE capability is configured, the UE transfers a UE capability information message including the UE capability to the base station. The base station performs appropriate scheduling and transmission/reception management on the UE based on the UE capability received from the UE.

### [NC-JT related]

According to an embodiment of the disclosure, non-coherent joint transmission (NC-JT) may be used for the UE to receive PDSCH from multiple TRPs.

Unlike conventional, the 5G wireless communication system may support all of a service requiring a high transmission rate, a service having very short transmission latency, and a service requiring a high connection density. In a wireless communication network including a plurality of cells, transmit/receive points (TRPs), or beams, coordinated transmission between cells, TRPs, and/or beams may increase the strength of the signal received by the UE or efficiently perform interference control between cells, TRPs, and/or beams to thereby meet various service requirements.

Joint transmission (JT) is a representative transmission technology for the coordinated communication and is a technology for increasing the strength or throughput of the signal received by the UE by transmitting signals to one UE through multiple different cells, TRPs, and/or beams. Inter-cell, TRP, and/or beam-UE channels may have significantly different characteristics. In particular, non-coherent joint transmission (NC-JT) supporting inter-cell, TRP, and/or inter-beam non-coherent precoding may require individual precoding, MCS, resource allocation, and TCI indication according to inter-cell, TRP, and/or beam-UE per-link characteristics.

The above-described NC-JT transmission may apply to at least one of downlink data channels (e.g., PDSCH), downlink control channels (PDCCH), uplink data channels (e.g., PUSCH), or uplink control channels (PUCCH). During PDSCH transmission, transmission information such as precoding, MCS, resource allocation, and TCI is indicated by the DL DCI and, for NC-JT transmission, the transmission information should be indicated independently per cell, TRP, and/or beam. This becomes a major factor to increase the payload necessary for DL DCI transmission, which may negatively affect the reception performance of the PDCCH transmitting the DCI. Accordingly, for supporting the JT of PDSCH, the tradeoff between DCI information quantity and control information reception performance needs to be carefully designed.

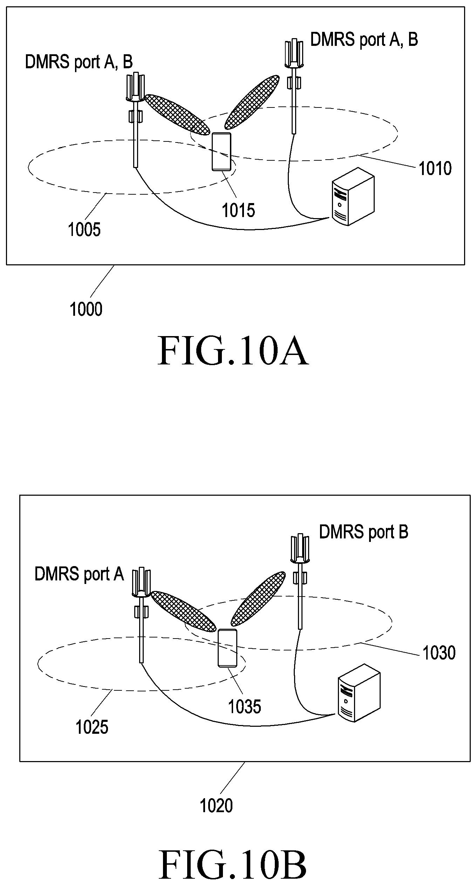

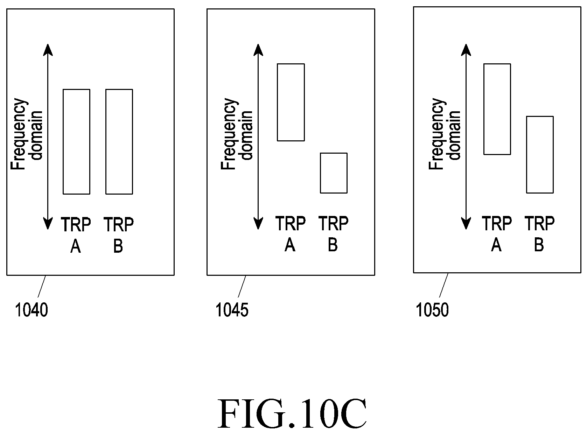

FIGS. 10A, 10B, and 10C are views illustrating an example of antenna port configuration and resource allocation for transmitting PDSCH using cooperative communication in a wireless communication system according to an embodiment of the disclosure. An example for PDSCH transmission is described for each technique of joint transmission (JT), and examples for allocating radio resources for each TRP are illustrated.

Referring to FIG. 10A, coherent joint transmission (C-JT) 1000 supporting coherent precoding between each cell, TRP, and/or beam is illustrated.

In the case of the C-JT, TRP A 1005 and TRP B 1010 transmit single data (PDSCH) to the UE 1015, and joint precoding may be performed in multiple TRPs. This may mean that DMRS is transmitted through the same DMRS ports so that TRP A 1005 and TRP B 1010 transmit the same PDSCH. For example, TRP A 1005 and TRP B 1010 may transmit DRMS to the UE through DMRS port A and DMRS B, respectively. In this case, the UE may receive one DCI information for receiving one PDSCH to be demodulated based on the DMRSs transmitted through DMRS port A and DMRS B.

Referring to FIG. 10B, non-coherent joint transmission (NC-JT) 1020 supporting non-coherent precoding between each cell, TRP, and/or beam for PDSCH transmission is illustrated.

In the case of NC-JT, PDSCH is transmitted to the UE 1035 for each cell, TRP, and/or beam, and individual precoding may be applied to each PDSCH. As each cell, TRP, and/or beam transmits a different PDSCH or a different PDSCH layer to the UE, it is possible to enhance the throughput relative to the single cell, TRP, and/or beam transmission. It is also possible to enhance the reliability relative to single cell, TRP, and/or beam transmission as each cell, TRP, and/or beam repeatedly transmits the same PDSCH to the UE. For convenience of description, the cell, TRP, and/or beam are collectively referred to as a TRP.

Referring to FIG. 10C, various radio resource allocations may be considered, such as when frequency and time resources used by multiple TRPs for PDSCH transmission are all the same 1040, when frequency and time resources used by multiple TRPs do not overlap at all 1045 and, when frequency and time resources used by multiple TRPs partially overlap 1050.

For NC-JT support, DCIs in various forms, structures, and relationships may be considered to simultaneously allocate multiple PDSCHs to one UE.

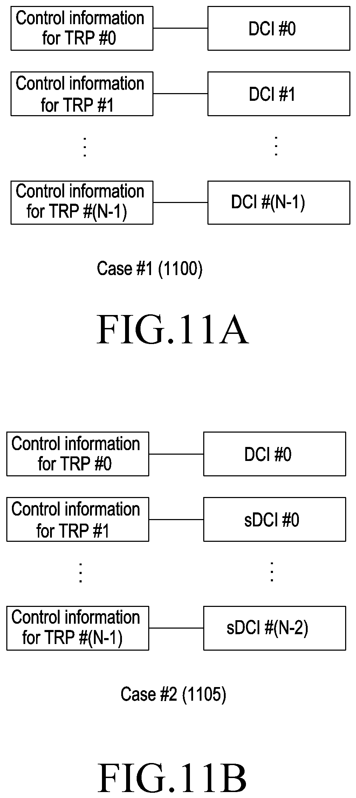

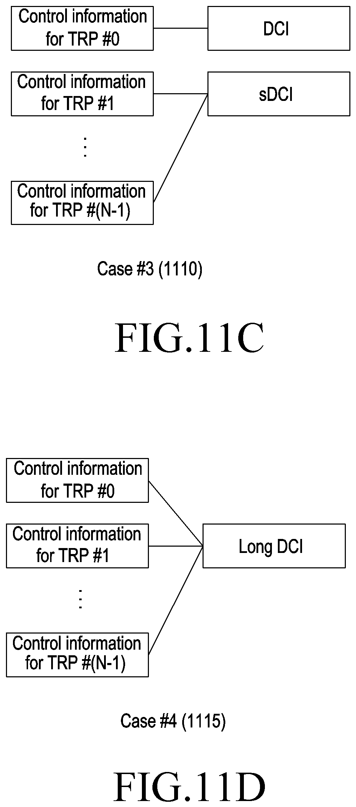

FIGS. 11A, 11B, 11C, and 11D are views illustrating an example of downlink control information (DCI) configuration for NC-JT in which each TRP transmits different PDSCH or different PDSCH layers to a UE in a wireless communication system according to an embodiment of the disclosure.

Referring to FIG. 11A, case #1 1100 is an example in which, in a circumstance where (N-1) different PDSCHs are transmitted from (N-1) additional TRPs (TRP#1 to TRP#(N-1)) in addition to a serving TRP (TRP#0) used for single PDSCH transmission, control information for PDSCHs transmitted from the (N-1) additional TRPs is transmitted independently from control information for PDSCH transmitted from the serving TRP. In other words, the UE may obtain control information for the PDSCHs transmitted from different TRPs (TRP#0 to TRP#(N-1)) through independent DCIs (DCI#0 to DCI#(N-1)). Formats between the independent DCIs may be the same or different, and payloads between the DCIs may also be the same or different. The above-described case #1 may fully guarantee each PDSCH control or allocation degree of freedom, but if each DCI is transmitted in a different TRP, a difference in coverage occurs for each DCI, deteriorating reception performance.

Referring to FIG. 11B, case #2 1105 illustrates an example in which, in a circumstance where (N-1) different PDSCHs are transmitted from (N-1) additional TRPs (TRP#1 to TRP#(N-1)) in addition to a serving TRP (TRP#0) used for single PDSCH transmission, control information (DCI) for PDSCH of the (N-1) additional TRPs is transmitted respectively, and each of these DCIs is dependent on control information for PDSCH transmitted from the serving TRP.

For example, DCI#0 which is the control information for the PDSCH transmitted from the serving TRP (TRP#0) includes all information elements of DCI format 1_0, DCI format 1_1, and DCI format 1_2, but shortened DCIs (hereinafter, sDCIs) (sDCI#0 to sDCI#(N-2)) which are control information for the PDSCHs transmitted from the cooperative TRPs (TRP#1 to TRP#(N-1)) may include only some of the information elements of DCI format 1_0, DCI format 1_1, and DCI format 1_2. Accordingly, since the sDCI transmitting the control information for the PDSCHs transmitted from the cooperative TRPs has small payload as compared with the normal DCI (nDCI) transmitting PDSCH-related control information transmitted from the serving TRP, it is possible to include reserved bits as compared with the nDCI.

In the above-described case #2 1105, each PDSCH control or allocation degree of freedom may be limited according to the content of the information elements included in the sDCI. However, since the reception performance of sDCI becomes excellent relative to the nDCI, the probability that a difference in coverage per DCI occurs may be reduced.

Referring to FIG. 11C, case #3 1110 illustrates an example in which, in a circumstance where (N-1) different PDSCHs are transmitted from (N-1) additional TRPs (TRP#1 to TRP#(N-1)) in addition to a serving TRP (TRP#0) used for single PDSCH transmission, one piece of control information for PDSCH of the (N-1) additional TRPs is transmitted, and this DCI is dependent on control information for PDSCH transmitted from the serving TRP.

For example, DCI#0 which is the control information for the PDSCH transmitted from the serving TRP (TRP#0) includes all information elements of DCI format 1_0, DCI format 1_1, and DCI format 1_2, and in the case of the control information for the PDSCHs transmitted from the cooperative TRPs (TRP#1 to TRP#(N-1)), only some of the information elements of DCI format 1_0, DCI format 1_1, and DCI format 1_2 may be collected and transmitted into one 'secondary' DCI (sDCI). For example, the sDCI may include at least one of HARQ-related information such as the frequency domain resource assignment, time domain resource assignment, and MCS of cooperative TRPs. Further, information that is not included in the sDCI, such as bandwidth part (BWP) indicator or carrier indicator, may follow the DCIs (DCI#0, normal DCI, and nDCI) of the serving TRP.

In case #3 1110, each PDSCH control or allocation degree of freedom may be limited according to the content of the information element included in the sDCI, but the reception performance of the sDCI may be adjusted and, as compared with case #1 1100 or case #2 1105, the complexity of DCI blind decoding of the UE may be reduced.

Referring to FIG. 11D, case #4 1115 is an example in which, in a circumstance where (N-1) different PDSCHs are transmitted from (N-1) additional TRPs (TRP#1 to TRP#(N-1)) in addition to a serving TRP (TRP#0) used for single PDSCH transmission, control information for PDSCH transmitted from the (N-1) additional TRPs is transmitted in the same DCI (Long DCI) as control information for PDSCH transmitted from the serving TRP. In other words, the UE may obtain control information for the PDSCHs transmitted from different TRPs (TRP#0 to TRP#(N-1)) through a single DCI. In case #4 (1115), the complexity of DCI blind decoding of the UE may not increase, but PDSCH control or allocation degree of freedom may be reduced, like the number of cooperative TRPs being limited according to the long DCI payload limitation.

In the following description and embodiments, sDCI may refer to various auxiliary DCIs such as shortened DCI, secondary DCI, or normal DCI (DCI format 1_0 to 1_1 described above) including PDSCH control information transmitted from a cooperative TRP, and if no particular limitation is designated, the description may be similarly applied to the various auxiliary DCIs.

In the following description and embodiments, case #1 1100, case #2 1105, and case #3 1110 where one or more DCIs (PDCCH) are used for supporting NC-JT may be identified as multiple PDCCH-based NC-JT, and case #4 1115 where a single DCI (PDCCH) is used for supporting NC-JT may be identified as single PDCCH-based NC-JT. In multiple PDCCH-based PDSCH transmission, the CORESET where the DCI of the serving TRP (TRP#0) is scheduled and the CORESET where the DCIs of the cooperative TRPs (TRP#1 to TRP#(N-1)) are scheduled may be divided. As a method for dividing CORESETs, there may be a method for dividing through a higher layer indicator for each CORESET and a method for dividing through a beam configuration for each CORESET. Further, the single PDCCH-based NC-JT may schedule a single PDSCH having a plurality of layers instead of scheduling a plurality of PDSCHs by a single DCI, and the plurality of layers may be transmitted from multiple TRPs. The connection relationship between a layer and a TRP transmitting the layer may be indicated through TCI (Transmission Configuration Indicator) indication for the layer.

In embodiments of the disclosure, "cooperative TRP" may be replaced with various terms such as "cooperative panel" or "cooperative beam" in actual applications.

In embodiments of the disclosure, "when NC-JT applies" may be interpreted in various manners according to the context, such as "when the UE simultaneously receives one or more PDSCHs in one BWP," "when the UE receives the PDSCH based simultaneously on two or more transmission configuration indicator (TCI) indications in one BWP," or "when the PDSCH received by the UE is associated with one or more DMRS port groups," but one expression is used for convenience of description.

In the disclosure, the radio protocol structure for NC-JT may be used in various manners according to the TRP scenarios. As an example, when the backhaul delay between cooperative TRPs is absent or small, a method (CA-like method) using a structure based on MAC layer multiplexing similar to 410 of FIG. 4 is possible. On the other hand, when the backhaul delay between cooperative TRPs is large enough not to be ignored (e.g., when 2 ms or more is required for exchange of information such as CSI, scheduling, HARQ-ACK between cooperative TRPs), a method (DC-like method) of securing robust characteristics against delay using an independent structure for each TRP starting from the RLC layer similar to 420 of FIG. 4 is possible.

A UE supporting C-JT and/or NC-JT may receive C-JT and/or NC-JT related parameters or setting values from higher layer configuration, and configure RRC parameters of the UE based on this. For the higher layer configuration, the UE may utilize the UE capability parameter, e.g., tci-StatePDSCH. Here, the UE capability parameter, e.g., tci-StatePDSCH may define TCI states for the purpose of PDSCH transmission, and the number of TCI states may be set to 4, 8, 16, 32, 64, or 128 in FR1 and 64 or 128 in FR2, and up to eight states that may be indicated with the 3 bits of the TCI field of the DCI may be set via a MAC CE message among the set numbers. The maximum value, 128, means the value indicated by the maxNumberConfiguredTCIstatesPerCC in the tci-StatePDSCH parameter included in the UE's capability signaling. As such, the series of configuration processes from the higher layer configuration to the MAC CE configuration may be applied to a beamforming indication or beamforming change instruction for at least one PDSCH in one TRP.

### [Multi-DCI-based multi-TRP]

As an embodiment of the disclosure, a multi-DCI based multi-TRP transmission method is described. The multi-DCI based multi-TRP transmission method may configure a downlink control channel for NC-JT transmission based on Multi-PDCCH.

The NC-JT based on multiple PDCCHs may have CORESETs or search spaces divided per TRP when transmitting DCI for the PDSCH schedule of each TRP. The CORESET or search space for each TRP may be configured like at least one of the following cases.
* Higher layer index configuration for each CORESET: The CORESET configuration information configured through a higher layer may include an index value, and TRPs transmitting PDCCH in the corresponding CORESET may be divided with the configured per-CORESET index values. In other words, in a set of CORESETs having the same higher layer index value, it may be considered that the same transmits the PDCCH or that the PDCCH scheduling the PDSCH of the same TRP is transmitted. The above-described index for each CORESET may be referred to as CORESETPoolIndex, and it may be considered that the PDCCH is transmitted from the same TRP for CORESETs in which the same CORESETPoolIndex value is set. The CORESET in which no CORESETPoolIndex value is set may be regarded as having the default CORESETPoolIndex value set, and the above-described default value may be 0.
   ** In the disclosure, if the types of CORESETPoolIndex of each of a plurality of CORESETs included in PDCCH-Config, which is higher layer signaling, exceed 1, i.e., if each CORESET has a different CORESETPoolIndex, the UE may assume that the base station may use the multi-DCI based multi-TRP transmission method.
   ** Differently, in the disclosure, if the types of CORESETPoolIndex of each of a plurality of CORESETs included in PDCCH-Config, which is higher layer signaling, is 1, i.e., if all CORESETs have the same CORESETPoolIndex of 0 or 1, the UE may assume that the base station transmits using single-TRP without using the multi-DCI based multi-TRP transmission method.
* Configuration of multiple PDCCH-Configs: A plurality of PDCCH-Config's may be configured in one BWP, and each PDCCH-Config may include a PDCCH configuration for each TRP. In other words, a list of per-TRP CORESETs and/or a list of per-TRP search spaces may be configured in one PDCCH-Config, and one or more CORESETs and one or more search spaces included in one PDCCH-Config may be regarded as corresponding to a specific TRP.
* CORESET beam/beam group configuration: A TRP corresponding to the CORESET may be distinguished through a beam or beam group configured for each CORESET. For example, when the same TCI state is configured in multiple CORESETs, the corresponding CORESETs may be regarded as being transmitted through the same TRP or it may be considered that the PDCCH scheduling the PDSCH of the same TRP in the corresponding CORESET is transmitted.
* Search space beam/beam group configuration: A beam or beam group is configured for each search space, and TRP for each search space may be distinguished through this. For example, when the same beam/beam group or TCI state is configured for multiple search spaces, it may be assumed that the same TRP transmits PDCCH in the search spaces, or it may be assumed that PDCCH scheduling PDSCH of the same TRP is transmitted from the search spaces.

As described above, by identifying the CORESET or search space for each TRP, it is possible to classify the PDSCH and HARQ-ACK information for each TRP and thereby generate an HARQ-ACK codebook independently for each TRP and independently use the PUCCH resources.

The configuration may be independent for each cell or BWP. For example, in the PCell, two different CORESETPoolIndex values are set whereas in a specific SCell, no CORESETPoolIndex may be set. In this case, it may be considered that while NC-JT transmission is configured in the PCell, no NC-JT transmission is configured in the SCell where no CORESETPoolIndex is configured.

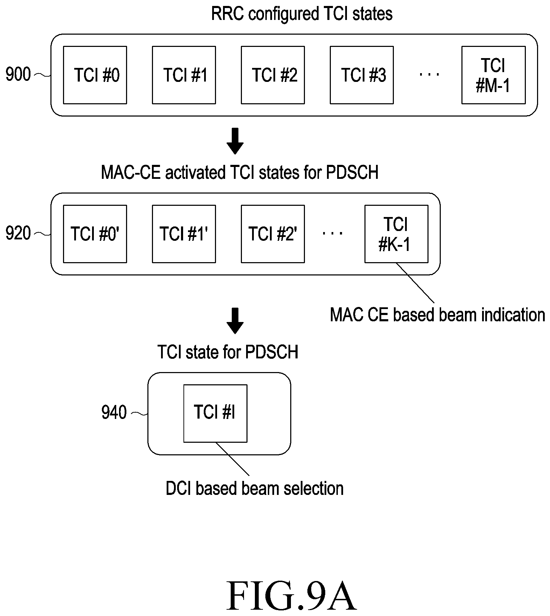

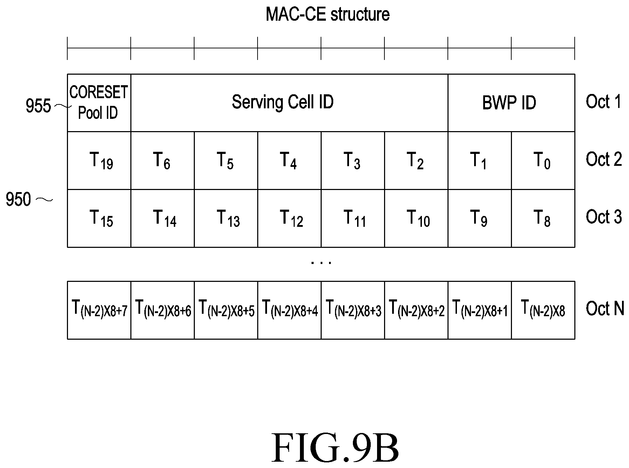

The PDSCH TCI state activation/deactivation MAC-CE applicable to the multi-DCI based multi-TRP transmission method may follow FIGS. 9A and 9B.

Referring to FIG. 9A, RRC configured TCI states 900 may include a plurality of TCI states, e.g., TCI#0, TCI#1, ..., TCI#M-1. TCI states activated by MAC-CE for PDSCH 920 may include TCI#0', TCI#1', ..., TCI#K-1 corresponding to MAC CE based beam indication, respectively. TCI state for PDSCH 940 may include TCI#l corresponding to DCI based beam selection.

Referring to FIG. 9B, if the UE is not configured with CORESETPoolIndex for all CORESETs in PDCCH-Config, which is higher layer signaling, the UE may ignore the CORESET Pool ID field 955 in the MAC-CE 950. If the UE may support the multi-DCI based multi-TRP transmission method, i.e., if each CORESET in PDCCH-Config, which is higher layer signaling, has a different CORESETPoolIndex, the UE may activate the TCI state in the DCI included in PDCCHs transmitted from CORESETs having the same CORESETPoolIndex value as the value of the CORESET Pool ID field 955 in the MAC-CE 950. As an example, if the value of the CORESET Pool ID field 955 in the MAC-CE 950 is 0, the TCI state in the DCI included in PDCCHs transmitted from CORESETs with CORESETPoolIndex of 0 may follow the activation information of the MAC-CE.

If the UE is configured from the base station to be able to use the multi-DCI based multi-TRP transmission method, i.e., if the types of CORESETPoolIndex of each of a plurality of CORESETs included in PDCCH-Config, which is higher layer signaling, exceed 1, or if each CORESET has a different CORESETPoolIndex, the UE may know that the following restrictions are present for PDSCHs scheduled from PDCCH in each CORESET having two different CORESETPoolIndexes.
1) If PDSCH indicated from PDCCH in each CORESET having two different CORESETPoolIndexes completely or partially overlaps, the UE may apply TCI states indicated from each PDCCH to different CDM groups, respectively. In other words, two or more TCI states may not be applied to one CDM group.
2) If PDSCH indicated from PDCCH in each CORESET having two different CORESETPoolIndexes completely or partially overlaps, the UE may expect that the actual number of front loaded DMRS symbols, actual number of additional DMRS symbols, actual DMRS symbol positions, and DMRS type of each PDSCH are not different from each other.
3) The UE may expect that the bandwidth part indicated from PDCCH in each CORESET having two different CORESETPoolIndexes is the same and the subcarrier spacing is also the same.
4) The UE may expect that information on PDSCH scheduled from PDCCH in each CORESET having two different CORESETPoolIndexes is completely included in each PDCCH.

### [Single-DCI-based multi-TRP]

As an embodiment of the disclosure, a single-DCI based multi-TRP transmission method is described. The single-DCI based multi-TRP transmission method may configure a downlink control channel for NC-JT transmission based on single-PDCCH.

In the single DCI based multi-TRP transmission method, PDSCH transmitted by multiple TRPs may be scheduled with one DCI. As a method for indicating the number of TRPs transmitting the PDSCH, the number of TCI states may be used. In other words, if the number of TCI states indicated by the DCI scheduling the PDSCH is 2, it may be regarded as single PDCCH-based NC-JT transmission and, if 1, it may be regarded as single-TRP transmission. The TCI state indicated by the DCI may correspond to one or two TCI states among the TCI states activated by the MAC-CE. When the TCI states of the DCI correspond to two TCI states activated by the MAC-CE, a correlation may be established between the TCI codepoint indicated in the DCI and the TCI states activated by the MAC-CE, and it may be when the number of TCI states activated by the MAC-CE, corresponding to the TCI codepoint, is two.

As another example, if at least one codepoint among all codepoints of the TCI state field in DCI points to two TCI states, the UE may assume that the base station may transmit based on the single-DCI based multi-TRP method. At least one codepoint pointing to two TCI states in the TCI state field may be activated through the Enhanced PDSCH TCI state activation/deactivation MAC-CE.

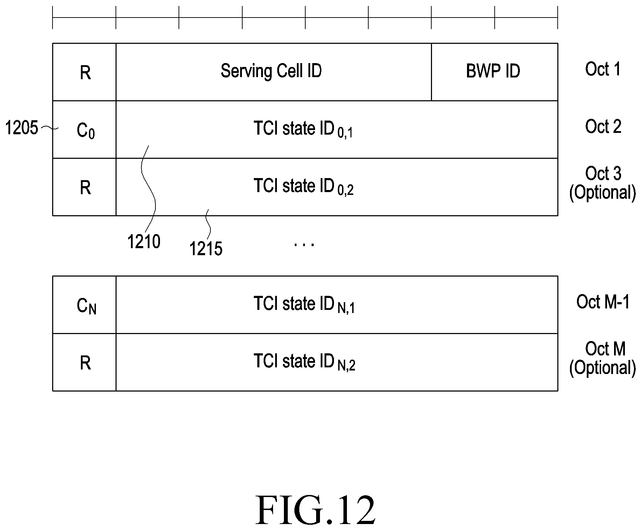

FIG. 12 is a view illustrating an Enhanced PDSCH TCI state activation/deactivation MAC-CE structure according to an embodiment of the disclosure. Referring to FIG. 12, the meaning of each field in the MAC CE and values configurable for each field are as illustrated in [Table 21] below.

**[Table 21]**

| |
|---|
| - **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively; |
| - **BWP ID:** This field indicates a DL BWP for which the MAC CE applies as the codepoint of the DCI bandwidth part indicator field as specified in TS 38.212 [9]. The length of the BWP ID field is 2 bits; |
| - **Cᵢ:** This field indicates whether the octet containing TCI state ID_{i,2} is present. If this field is set to "1", the octet containing TCI state ID_{i,2} is present. If this field is set to "0", the octet containing TCI state ID_{i,2} is not present; |
| - **TCI state ID_{i,j}:** This field indicates the TCI state identified by TCI-Stateld as specified in TS 38.331 [5], where i is the index of the codepoint of the DCI Transmission configuration indication field as specified in TS 38.212 [9] and TCI state ID_{i,j} denotes the j-th TCI state indicated for the i-th codepoint in the DCI Transmission Configuration Indication field. The TCI codepoint to which the TCI States are mapped is determined by its ordinal position among all the TCI codepoints with sets of TCI state ID_{i,j} fields, i.e. the first TCI codepoint with TCI state ID_{0,1} and TCI state ID_{0,2} shall be mapped to the codepoint value 0, the second TCI codepoint with TCI state ID_{1,1} and TCI state ID_{1,2} shall be mapped to the codepoint value 1 and so on. The TCI state ID_{i,2} is optional based on the indication of the Ci field. The maximum number of activated TCI codepoint is 8 and the maximum number of TCI states mapped to a TCI codepoint is 2. |
| - **R:** Reserved bit, set to "0". |

In FIG. 12, if the value of the C0 field 1205 is 1, the MAC-CE may include a TCI state ID_{0,2} field 1215 in addition to the TCI state ID_{0,1} field 1210. This means that TCI state ID_{0,1} and TCI state ID_{0,2} are activated for the 0th codepoint of the TCI state field included in DCI, and if the base station indicates the codepoint to the UE, the UE may be indicated two TCI states. If the value of the C₀ field 1205 is 0, the MAC-CE may not include the TCI state ID_{0,2} field 1215, which means that one TCI state corresponding to TCI state ID_{0,1} is activated for the 0th codepoint of the TCI state field included in DCI.

The configuration may be independent for each cell or BWP. For example, while the maximum number of activated TCI states corresponding to one TCI codepoint is two in the PCell, the maximum number of activated TCI states corresponding to one TCI codepoint may be one in a specific SCell. In this case, it may be considered that while NC-JT transmission is configured in the PCell, no NC-JT transmission is configured in the SCell.

### [Single-DCI based Multi-TRP PDSCH Repetition Transmission Technique (TDM/FDM/SDM) Distinction Method]

Next, a method for distinguishing single-DCI based multi-TRP PDSCH repetition transmission techniques is described. The UE may be indicated different single-DCI based multi-TRP PDSCH repetition transmission techniques (e.g., TDM, FDM, SDM) from the base station according to a value indicated by a DCI field and higher layer signaling configuration. [Table 22] below illustrates a method for distinguishing between single or multiple TRP based techniques indicated to the UE according to a value of a specific DCI field and higher layer signaling configuration.

**[Table 22]**

| combination | number of TCI states | number of CDM groups | repetitionNumber configuration and indication condition | repetitionScheme configuration related | transmission scheme indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 1 | Condition 3 | Configured | Multi-TRP FDM scheme A/FDM scheme B/TDM scheme A |
| 9 | 2 | 1 | Condition 1 | Not configured | Multi-TRP TDM scheme B |

In [Table 22] above, each column may be described as follows.
- Number of TCI states (column 2): Means the number of TCI states indicated by the TCI state field in DCI, and may be 1 or 2.
- Number of CDM groups (column 3): Means the number of different CDM groups of DMRS ports indicated by the Antenna port field in DCI. It may be 1, 2, or 3.
- repetitionNumber configuration and indication condition (column 4): May have 3 conditions according to whether repetitionNumber is configured for all TDRA entries that may be indicated by the Time Domain Resource Allocation field in DCI and whether the actually indicated TDRA entry has repetitionNumber configuration.
   * Condition 1: When at least 1 of all TDRA entries that may be indicated by the Time Domain Resource Allocation field includes configuration for repetitionNumber, and the TDRA entry indicated by the Time Domain Resource Allocation field in DCI includes configuration for repetitionNumber greater than 1
   * Condition 2: When at least 1 of all TDRA entries that may be indicated by the Time Domain Resource Allocation field includes configuration for repetitionNumber, and the TDRA entry indicated by the Time Domain Resource Allocation field in DCI does not include configuration for repetitionNumber
   * Condition 3: When all TDRA entries that may be indicated by the Time Domain Resource Allocation field do not include configuration for repetitionNumber
- repetitionScheme configuration related (column 5): Means whether repetitionScheme, which is higher layer signaling, is configured. The repetitionScheme, which is higher layer signaling, may be configured with one of 'tdmSchemeA', 'fdmSchemeA', and 'fdmSchemeB'.
- Transmission technique indicated to the UE (column 6): Means single or multiple TRP techniques indicated according to each combination (column 1) represented by [Table 22] above.
   * Single-TRP: Means single TRP based PDSCH transmission. If the UE is configured with pdsch-AggegationFactor in PDSCH-config, which is higher layer signaling, the UE may be scheduled for single TRP based PDSCH repetition transmission for the configured number of times. Otherwise, the UE may be scheduled for single TRP based PDSCH single transmission.
   * Single-TRP TDM scheme B: Means single TRP based time resource division based PDSCH repetition transmission between slots. According to Condition 1 related to repetitionNumber described above, the UE repeatedly transmits PDSCH on the time dimension for the number of slots of repetitionNumber greater than 1 configured in the TDRA entry indicated by the Time Domain Resource Allocation field. For each slot for the number of repetitionNumber times, the start symbol and symbol length of PDSCH indicated by the TDRA entry are equally applied, and the same TCI state is applied for each PDSCH repetition transmission. This technique is similar to the slot aggregation method in that PDSCH repetition transmission is performed between slots on time resources, but differs from slot aggregation in that whether to indicate repetition transmission may be dynamically determined based on the Time Domain Resource Allocation field in DCI.
   * Multi-TRP SDM: Means a multi-TRP based spatial resource division PDSCH transmission method. This is a method of receiving layers divided from each TRP, and although it is not a repetition transmission method, the reliability of PDSCH transmission may be increased by increasing the number of layers to lower the coding rate. The UE may receive PDSCH by applying 2 TCI states indicated through the TCI state field in DCI to each of 2 CDM groups indicated from the base station.
   * Multi-TRP FDM scheme A: Means a multi-TRP based frequency resource division PDSCH transmission method, and has 1 PDSCH transmission occasion, so like multi-TRP SDM, it is not repetition transmission, but is a technique that may transmit with high reliability by increasing the amount of frequency resources to lower the coding rate. Multi-TRP FDM scheme A may apply 2 TCI states indicated through the TCI state field in DCI to non-overlapping frequency resources, respectively. If the PRB bundling size is determined as wideband, when the number of RBs indicated by the Frequency Domain Resource Allocation field is N, the UE applies the first TCI state to the first ceil(N/2) RBs and applies the second TCI state to the remaining floor(N/2) RBs for reception. Here, ceil(.) and floor(.) are operators meaning rounding up and rounding down the first decimal place. If the PRB bundling size is determined as 2 or 4, the UE applies the first TCI state to even-numbered PRGs and applies the second TCI state to odd-numbered PRGs for reception.
   * Multi-TRP FDM scheme B: Means a multi-TRP based frequency resource division PDSCH repetition transmission method, and has 2 PDSCH transmission occasions, so PDSCH may be repeatedly transmitted at each position. Multi-TRP FDM scheme B may also apply 2 TCI states indicated through the TCI state field in DCI to non-overlapping frequency resources, respectively, like scheme A. If the PRB bundling size is determined as wideband, when the number of RBs indicated by the Frequency Domain Resource Allocation field is N, the UE applies the first TCI state to the first ceil(N/2) RBs and applies the second TCI state to the remaining floor(N/2) RBs for reception. Here, ceil(.) and floor(.) are operators meaning rounding up and rounding down the first decimal place. If the PRB bundling size is determined as 2 or 4, the UE applies the first TCI state to even-numbered PRGs and applies the second TCI state to odd-numbered PRGs for reception.
   * Multi-TRP TDM scheme A: Means a multi-TRP based time resource division intra-slot PDSCH repetition transmission method. The UE has 2 PDSCH transmission occasions within one slot, and the first reception position may be determined based on the start symbol and symbol length of PDSCH indicated through the Time Domain Resource Allocation field in DCI. The start symbol of the second reception position of PDSCH may be a position where a symbol offset of StartingSymbolOffsetK, which is higher layer signaling, is applied from the last symbol of the first transmission position, and the transmission position may be determined from this for the indicated symbol length. If StartingSymbolOffsetK, which is higher layer signaling, is not configured, the symbol offset may be regarded as 0.
   * Multi-TRP TDM scheme B: Means a multi-TRP based time resource division inter-slot PDSCH repetition transmission method. The UE has 1 PDSCH transmission occasion within one slot, and may receive repetition transmission based on the same start symbol and symbol length of PDSCH during slots for the number of repetitionNumber indicated through the Time Domain Resource Allocation field in DCI.

If repetitionNumber is 2, the UE may receive PDSCH repetition transmission of the first and second slots by applying the first and second TCI states, respectively. If repetitionNumber is greater than 2, the UE may use different TCI state application methods according to what tciMapping, which is higher layer signaling, is set to. If tciMapping is set to cyclicMapping, the first and second TCI states are applied to the first and second PDSCH transmission positions, respectively, and this TCI state application method is equally applied to the remaining PDSCH transmission positions. If tciMapping is set to sequenticalMapping, the first TCI state is applied to the first and second PDSCH transmission positions, the second TCI state is applied to the third and fourth PDSCH transmission positions, and this TCI state application method is equally applied to the remaining PDSCH transmission positions.

Hereinafter, embodiments of the disclosure is described in detail with reference to the accompanying drawings. The contents of the disclosure are applicable to FDD and TDD systems. As used herein, the term "higher signaling" (or higher layer signaling) may refer to a method for transmitting signals from the base station to the UE using a downlink data channel of the physical layer or from the UE to the base station using an uplink data channel of the physical layer and may be interchangeably used with RRC signaling, PDCP signaling, or medium access control (MAC) control element (MAC CE).

Hereinafter, in the disclosure, when the UE determines whether cooperative communication is applied, it is possible to use various methods such as PDCCH(s) allocating PDSCH to which cooperative communication is applied has a specific format, or PDCCH(s) allocating PDSCH to which cooperative communication is applied includes a specific indicator indicating whether cooperative communication is applied, or PDCCH(s) allocating PDSCH to which cooperative communication is applied is scrambled with a specific RNTI, or assumes cooperative communication application in a specific interval indicated by a higher layer. Thereafter, for convenience of description, that the UE receives cooperative communication-applied PDSCH based on similar conditions is referred to as an NC-JT case.

Hereinafter, in the disclosure, 'determine priority between A and B' may be referred to in other various manners, e.g., as selecting one with higher priority according to a predetermined priority rule and performing an operation according thereto or omitting or dropping the operation for the one with lower priority.

Hereinafter, in the disclosure, the above-described examples are described in connection with various embodiments. One or more embodiments may be applied simultaneously or in combination, rather than independently.

In the following description of the disclosure, for convenience, cells, transmission points, panels, beams, and/or transmission directions that may be distinguished through higher layer/L1 parameters such as TCI state or spatial relation information, or indicators such as cell ID, TRP ID, and panel ID may be collectively described as TRP (transmit/receive point), beam, or TCI state. Therefore, in actual application, TRP, beam, or TCI state may be appropriately replaced with one of the terms.

Hereinafter, in the disclosure, when the UE determines whether cooperative communication is applied, it is possible to use various methods such as PDCCH(s) allocating PDSCH to which cooperative communication is applied has a specific format, or PDCCH(s) allocating PDSCH to which cooperative communication is applied includes a specific indicator indicating whether cooperative communication is applied, or PDCCH(s) allocating PDSCH to which cooperative communication is applied is scrambled with a specific RNTI, or assumes cooperative communication application in a specific interval indicated by a higher layer. Thereafter, for convenience of description, that the UE receives cooperative communication-applied PDSCH based on similar conditions is referred to as an NC-JT case.

In the disclosure, higher layer signaling may be signaling corresponding to at least one or a combination of one or more of the following signaling.
- Master information block (MIB)
- SIB (System Information Block) or SIB X (X=1, 2, ...)
- Radio resource control (RRC)
- MAC (Medium Access Control) CE (Control Element)

Further, L1 signaling may be signaling corresponding to at least one or a combination of one or more of the following physical layer channels or signaling methods using signaling.
- Physical downlink control channel (PDCCH)
- Downlink control information (DCI)
- UE-specific DCI
- Group common DCI
- Common DCI
- Scheduling DCI (e.g., DCI used for scheduling downlink or uplink data)
- Non-scheduling DCI (e.g., DCI not for the purpose of scheduling downlink or uplink data)
- Physical uplink control channel (PUCCH)
- Uplink control information (UCI)

Hereinafter, in the disclosure, 'determine priority between A and B' may be referred to in other various manners, e.g., as selecting one with higher priority according to a predetermined priority rule and performing an operation according thereto or omitting or dropping the operation for the one with lower priority.

Hereinafter, the term slot used in the disclosure may be a general term that may refer to a specific time unit corresponding to TTI (Transmit Time Interval), and specifically may mean a slot used in a 5G NR system, or may mean a slot or subframe used in a 4G LTE system.

Hereinafter, in the disclosure, the above-described examples are described in connection with various embodiments. One or more embodiments may be applied simultaneously or in combination, rather than independently.

### <First embodiment: Transmission Power Parameter Configuration Method When Supporting Unified TCI State>

As an embodiment of the disclosure, a method in which a UE is configured with transmit power parameters when supporting the unified TCI state is described. This embodiment may operate in combination with other embodiments.

The UE may be configured with ServingCellConfig, which is higher layer signaling, from the base station, and additionally, the UE may be configured with MIMOParam-r17, which is higher layer signaling, in ServingCellConFIG. The specific higher layer signaling structure of ServingCellConfig and MIMOParam-r17 may be as illustrated in [Table 23] below.

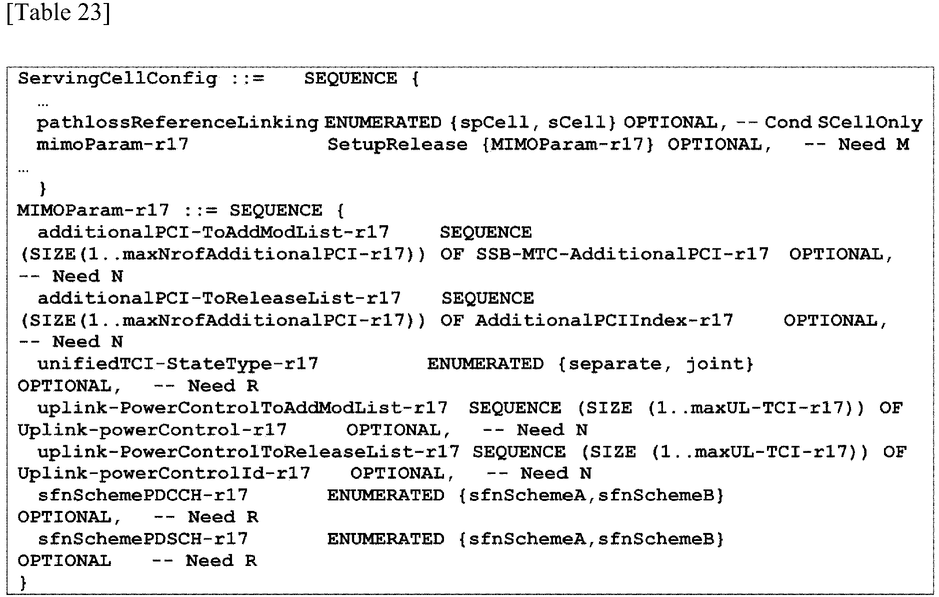

As illustrated in [Table 23] above, the UE may be configured with unifiedTCI-StateType-r17, which is higher layer signaling, in MIMOParam-r17 from the base station, and the value may be one of separate or joint.
- If the meaning of the UE being configured with unifiedTCI-StateType-r17, which is higher layer signaling, as separate is that, when the UE receives configuration and indication related to the unified TCI state from the base station, the UE may be individually configured and indicated a TCI state applicable to downlink reception (e.g., DL TCI state) and a TCI state applicable to uplink transmission (e.g., UL TCI state). In this case, the UE may be configured with dl-OrJointTCI-StateList and ul-TCI-ToAddModList, which are higher layer signaling meaning lists of DL TCI state and UL TCI state, from the base station, respectively.
- If the meaning of the UE being configured with unifiedTCI-StateType-r17, which is higher layer signaling, as joint is that, when the UE receives configuration and indication related to the unified TCI state from the base station, the UE may be integrally configured and indicated a TCI state applicable to downlink reception and uplink transmission (e.g., joint TCI state). In this case, the UE may be configured with dl-OrJointTCI-StateList, which is higher layer signaling meaning a list of joint TCI state, from the base station.

As illustrated in [Table 23] above, the UE may be configured with uplink-PowerControlToAddModList, which is higher layer signaling, in MIMOParam-r17. The uplink-PowerControlToAddModList, which is higher layer signaling, may include transmit power parameters for PUSCH, PUCCH, and SRS of the UE if the UE is configured with unifiedTCI-StateType, which is higher layer signaling, in the serving cell. The uplink-PowerControlToAddModList, which is higher layer signaling, may include a list of up to 64 Uplink-powerControl-r17 and Uplink-powerControlId-r17. The Uplink-powerControl-r17, which is higher layer signaling, may have a structure as illustrated in [Table 24] below.

As illustrated in [Table 23] above, the UE may be configured with pathlossReferenceLinking in ServingCellConFIG. The pathlossReferenceLinking, which is higher layer signaling, may mean whether the UE refers to a list of reference signals for path loss measurement from SpCell or SCell.

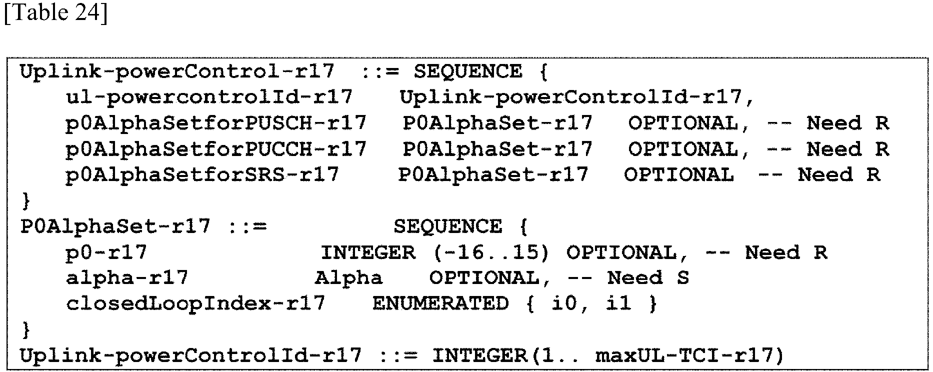

As illustrated in [Table 24] above, the UE may include ul-powercontrolld-r17 in one Uplink-powerControl-r17 parameter, and may be configured with individual P0AlphaSet-r17 applicable to PUSCH, PUCCH, or SRS, respectively, and at least one of the uplink transmit power parameters p0, alpha, or closed loop index described above may be included in each P0AlphaSet-r17.

The higher layer signalings in [Table 23] above may be applied to all bandwidth parts in the serving cell. [Table 25] below illustrates a higher layer signaling structure that the UE may be configured with for each uplink bandwidth part (e.g., BWP-UplinkDedicated).

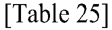

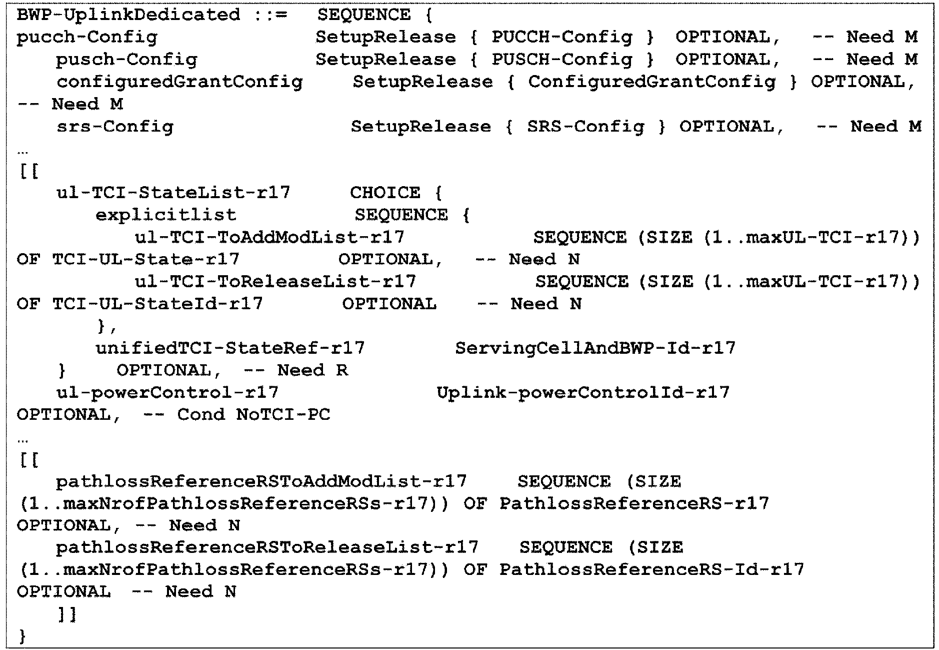

As illustrated in [Table 25] above, the UE may be configured with ul-TCI-StateList-r17, which is higher layer signaling, and the UE may be configured with one of explicitlist or unifiedTCI-StateRef-r17 for this. If the UE is configured with explicitlist for ul-TCI-StateList-r17, which is higher layer signaling, the UE may be explicitly configured with a list of UL TCI states that may be used in the uplink bandwidth part through ul-TCI-ToAddModList-r17. If the UE is configured with unifiedTCI-StateRef-r17 for ul-TCI-StateList-r17, which is higher layer signaling, the UE may not be explicitly configured with a joint TCI state or UL TCI state that may be used in the uplink bandwidth part in the uplink bandwidth part, and may refer to and use a joint TCI state or UL TCI state configured in another uplink bandwidth part. The unifiedTCI-StateRef-r17, which is higher layer signaling, may mean an index of an arbitrary bandwidth part in an arbitrary serving cell. Further, the UE may expect that the serving cell including the bandwidth part configured with unifiedTCI-StateRef-r17 and the arbitrary serving cell including the bandwidth part that may be configured through unifiedTCI-StateRef-r17 from the base station have the same unifiedTCI-StateType.

As illustrated in [Table 25] above, if the UE is configured with unifiedTCI-StateType, the UE may be configured with ul-powerControl, which is higher layer signaling, and ul-powerControl may refer to one Uplink-powerControlId-r17. The UE may be configured with ul-powerControl, which is higher layer signaling, for all uplink bandwidth parts in a specific serving cell, or may not be configured with ul-powerControl, which is higher layer signaling, for all uplink bandwidth parts. If the UE is configured with unifiedTCI-StateRef-r17 in BWP-UplinkDedicated, or receives a configuration referring to another serving cell and bandwidth part as the value of unifiedTCI-StateRef-r17 in PDSCH-Config, and unifiedTCI-StateType is set to joint, the UE may expect to be configured with ul-powerControl in all uplink bandwidth parts in the referenced serving cell and the serving cell, or may expect not to be configured with ul-powerControl in all uplink bandwidth parts in the referenced serving cell and the serving cell. The ul-powerControl, which is higher layer signaling, may be configured for the UE only when a condition called NoTCI-PC is satisfied, and the meaning of the condition called NoTCI-PC may mean a case where ul-powerControl, which is higher layer signaling, is not configured in the joint TCI state or UL TCI state in the serving cell.

As illustrated in [Table 25] above, if the UE is configured with unifiedTCI-StateType, the UE may be configured with pathlossReferenceRSToAddModList-r17, which is higher layer signaling, and the higher layer signaling may mean a list of reference signals that may be used to measure path loss when the UE transmits PUSCH, PUCCH, or SRS when the UE supports the unified TCI state. If the UE is not configured with unifiedTCI-StateType, the UE may not include any list in the higher layer signaling.

If the UE is configured with unifiedTCI-StateType, when the UE is indicated a reference signal for path loss measurement through TCI state indication, the indicated reference signal for path loss measurement may mean a reference signal for path loss measurement configured in the serving cell to which the indicated TCI state is applied. If the UE is configured with pathlossReferenceLinking, the UE may assume that the indicated reference signal for path loss measurement means a reference signal for path loss measurement configured in the serving cell configured through pathlossReferenceLinking.

If the UE operates based on the unified TCI state, i.e., according to whether the UE is configured with unifiedTCI-StateType, which is higher layer signaling, as joint or separate, the higher layer signaling structure of the TCI state that the UE may be indicated from the base station may be determined. If the UE is configured with unifiedTCI-StateType, which is higher layer signaling, as joint, the UE may be configured and indicated the joint TCI state from the base station using the higher layer signaling structure illustrated in [Table 26] below. If the UE is configured with unifiedTCI-StateType, which is higher layer signaling, as separate, the UE may be configured and indicated the DL TCI state from the base station using the higher layer signaling structure illustrated in [Table 26] below, and may be configured and indicated the UL TCI state from the base station using the higher layer signaling structure illustrated in [Table 27].

If the UE is configured with unifiedTCI-StateType, which is higher layer signaling, as joint, the UE may expect that pathlossReferenceRS-Id-r17 in [Table 26] below is always configured and, when unifiedTCI-StateType is set to separate or unifiedTCI-StateType is not configured, it may be expected that pathlossReferenceRS-Id-r17 is not configured, and the name of such a condition may be defined as JointTCI1.

If the UE is configured with unifiedTCI-StateType, which is higher layer signaling, as separate, the UE may expect that pathlossReferenceRS-Id-r17 in [Table 27] below is always configured, and the name of such a condition may be defined as Mandatory.

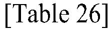

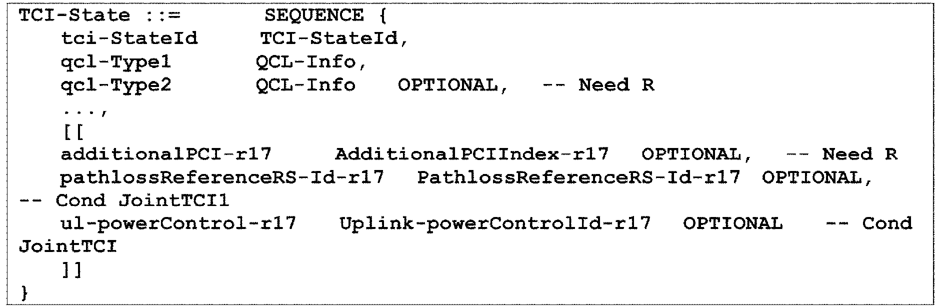

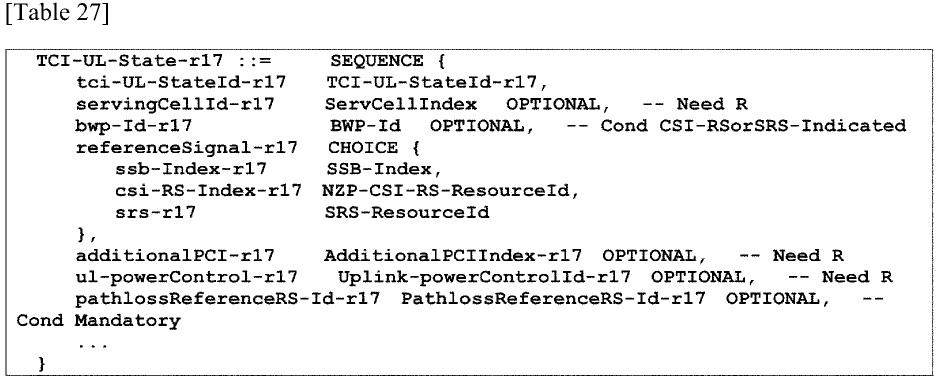

The UE may be configured with higher layer signaling related to transmit power parameters applicable to SRS transmission according to [Table 28] and [Table 29] below.

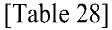

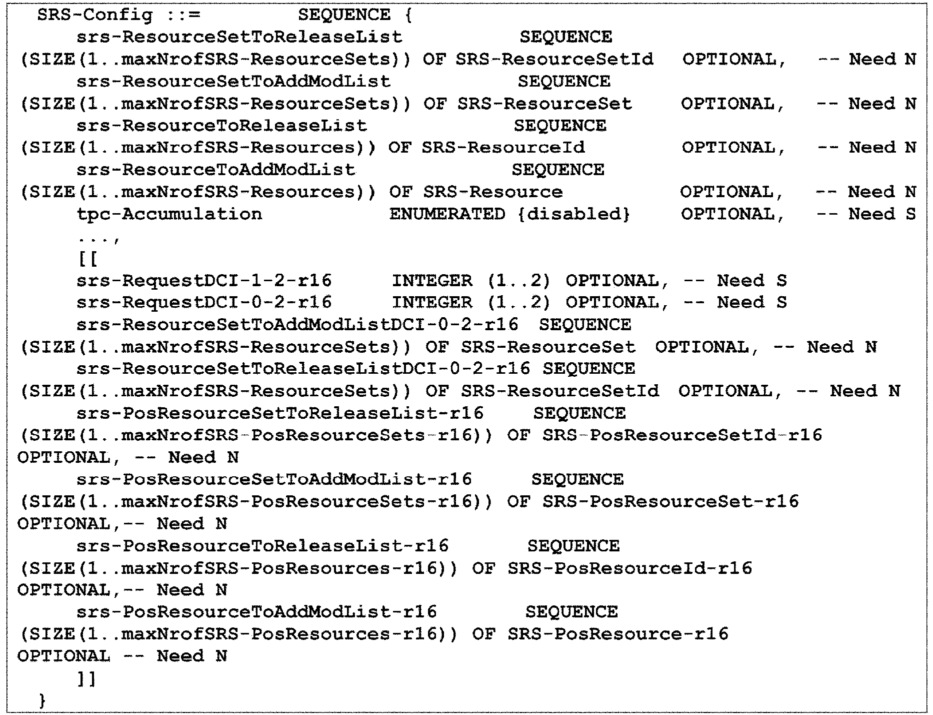

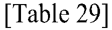

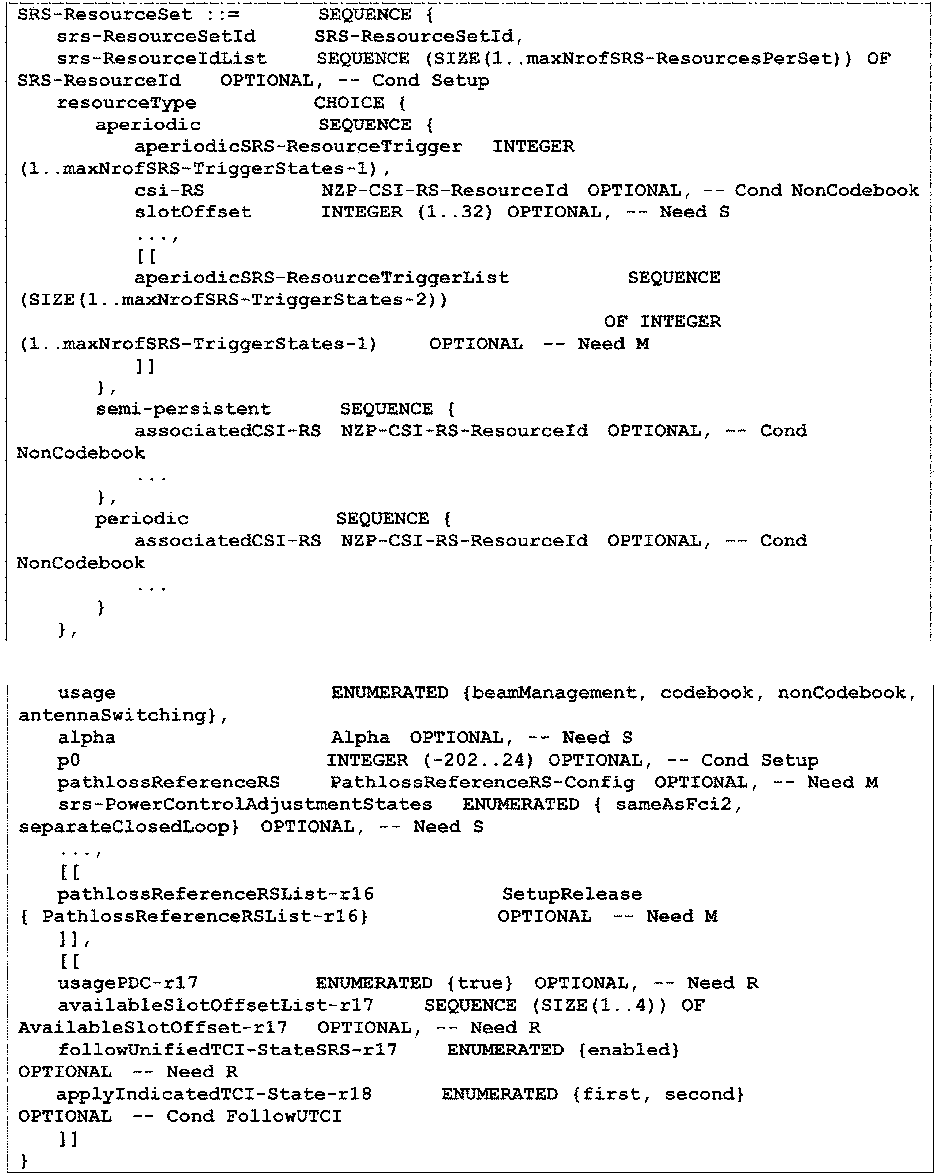

The description of each higher layer signaling parameter in [Table 28] and [Table 29] above may be as follows.
- tpc-Accumulation: If the UE is not configured for tpc-Accumulation, the UE may perform an operation of additionally accumulating previously indicated TPC command values when receiving a TPC command indicating a change in SRS transmit power. If the UE is configured for tpc-Accumulation as disabled, the UE may perform an operation of applying the absolute TPC without performing an accumulation operation when receiving a TPC command indicating a change in SRS transmit power. Such an absolute TPC operation may be possible when SRS does not share a closed loop index with PUSCH.
- Alpha: The UE may be configured with an alpha value for determining SRS transmit power through the higher layer signaling.
- p0: The UE may be configured with a p0 value in SRS-resourceSet for determining SRS transmit power through the higher layer signaling. If the UE is not configured with unifiedTCI-StateType, which is higher layer signaling, the UE may determine the P_{0_SRS,b,f,c}(qₛ) value in [Equation 7] above through the p0, which is the higher layer signaling. If the UE is configured with unifiedTCI-StateType, which is higher layer signaling, the UE may determine the P_{0_SRS,b,f,c}(qₛ) value in [Equation 7] above as the sum of p0 in SRS-resourceSet, which is the higher layer signaling, and a p0 value (e.g., P_{0_SRS,b,f,c}(qₛ)) that may be configured in p0AlphaSetforSRS in Uplink-powerControlId-r17. The Uplink-powerControlId-r17 may be determined through the following method.
   ■ If the UE determines uplink transmit power through [Method 1-1], it may be determined through one ul-powerControl configured in a specific uplink bandwidth part.
   ■ If the UE determines uplink transmit power through [Method 1-2],
   ■ If the UE is configured with followUnifiedTCIstateSRS, which is higher layer signaling, in the SRS resource set, the UE may be provided with P_{0_SRS,b,f,c}(qₛ), alpha, and srs-PowerControlAdjustmentStates values based on p0AlphaSetforSRS, which is higher layer signaling, associated with TCIState or UL-TCIstate indicated from the base station, and pathlossReferenceRS, which is higher layer signaling meaning a path loss reference signal, may be provided based on pathlossReferenceRS-Id-r17, which is higher layer signaling, associated with or included in TCIState or UL-TCIstate indicated from the base station.
   ■ If the UE is not configured with followUnifiedTCIstateSRS, which is higher layer signaling, in the SRS resource set, the UE may be provided with P_{0_UE_SRS,b,f,c}(qₛ), alpha, and srs-PowerControlAdjustmentStates values based on p0AlphaSetforSRS, which is higher layer signaling, associated with TCIState or UL-TCIstate configured in the SRS resource with the lowest index in the SRS resource set, and pathlossReferenceRS, which is higher layer signaling meaning a path loss reference signal, may be provided based on pathlossReferenceRS-Id-r17, which is higher layer signaling, associated with or included in TCIState or UL-TCIstate configured in the SRS resource with the lowest index in the SRS resource set.
- srs-PowerControlAdjustmentStates: The UE may be configured with a closed loop index used for SRS transmit power determination through the higher layer signaling. If the UE is not configured with the higher layer signaling, the UE may share the closed loop index of SRS with the first closed loop index of PUSCH. If the UE is configured with the higher layer signaling as sameAsFci2, the UE may share the closed loop index of SRS with the second closed loop index of PUSCH. The UE may be configured with higher layer signaling to have up to 2 closed loop indices for PUSCH. If the UE is configured with the higher layer signaling as separateClosedLoop, the UE may not share the closed loop index of SRS with the closed loop index of PUSCH, and may be individually configured.
   ■ If the UE is configured with unifiedTCI-StateType, which is higher layer signaling, and is configured with srs-PowerControlAdjustmentStates as separateClosedLoop in a specific SRS resource set, the UE may assume that SRS resources included in the SRS resource set are connected to a closed loop index separate from PUSCH. The UE may consider a closed loop index separate from PUSCH as described above regardless of the closed loop connected to the TCI state indicated from the base station.
   ■ If the UE is configured with unifiedTCI-StateType, which is higher layer signaling, and is not configured with srs-PowerControlAdjustmentStates as separateClosedLoop in a specific SRS resource set (that is, when srs-PowerControlAdjustmentStates is not configured or is configured as sameAsFci2), the UE may assume that SRS resources included in the SRS resource set are connected to the first or second closed loop index connected to PUSCH. When the closed loop connected to the TCI state indicated from the base station is i0, the UE may assume that it is connected to the first closed loop index connected to PUSCH when determining SRS transmit power to which the TCI state is applied and, when the closed loop is i1, the UE may assume that it is connected to the second closed loop index connected to PUSCH when determining SRS transmit power to which the TCI state is applied.
- pathlossReferenceRSList: The UE may be configured with a list of reference signals for measuring path loss for determining SRS transmit power through this higher layer signaling.
- followUnifiedTCI-StateSRS-r17: Through this higher layer signaling, when the UE operates as a unified TCI state, i.e., when the UE is configured with unifiedTCI-StateType, the UE may determine whether the joint TCI state or UL TCI state indicated to the UE through DCI is applied to the SRS resource in the SRS resource set. If this higher layer signaling is configured as enabled, the UE may apply the joint TCI state or UL TCI state indicated through DCI to the SRS resource in the SRS resource set. If this higher layer signaling is not configured for the UE, the UE may be configured with a joint TCI state or UL TCI state for each SRS resource in the SRS resource set, and may not apply the joint TCI state or UL TCI state indicated through DCI to SRS resources in the SRS resource set. The UE may be configured with the higher layer signaling when the usage of the SRS resource set is set to beam management and the resourceType is aperiodic, or when the usage of the SRS resource set is set to codebook, non-codebook, or antenna switching and the resourceType is aperiodic, semi-persistent, or periodic.
- applyIndicatedTCI-State-r18: Through this higher layer signaling, when the UE operates as a unified TCI state, i.e., when the UE is configured with unifiedTCI-StateType and operates as multi-TRP, the UE may be configured with which TCI state to apply to the SRS resource in the SRS resource set for which this higher layer signaling is configured. If the UE is configured with followUnifiedTCI-StateSRS-r17, the UE may not be configured with applyIndicatedTCI-State-r18. The UE may be configured with the higher layer signaling in the SRS resource set when the usage of the SRS resource set is set to beam management and the resourceType is aperiodic, or when the usage of the SRS resource set is set to codebook, non-codebook, or antenna switching and the resourceType is aperiodic, semi-persistent, or periodic.
   ■ If the UE operates as multi-TRP based on single-DCI, i.e., if the UE is configured with 2 joint TCI states or 2 DL TCI states or 2 UL TCI states for at least 1 codepoint of the TCI state field in DCI, if the UE is configured with the higher layer signaling as first, the UE may apply the first joint TCI state or first UL TCI state among 1 or more joint TCI states or 1 or more UL TCI states indicated to the UE through DCI to 1 or more SRS resources in the SRS resource set for which this higher layer signaling is configured, and if the UE is configured with this higher layer signaling as second, the UE may apply the second joint TCI state or second UL TCI state among 1 or more joint TCI states or 1 or more UL TCI states indicated to the UE through DCI to 1 or more SRS resources in the SRS resource set for which this higher layer signaling is configured. If the UE is not configured with this higher layer signaling, the UE may be configured with a joint TCI state or UL TCI state for each of 1 or more SRS resources in the SRS resource set, and may not apply the joint TCI state or UL TCI state indicated through DCI to SRS resources in the SRS resource set.
   ■ If the UE operates as multi-TRP based on multi-DCI, i.e., if the UE is configured with 2 different CORESETPoolIndexes, when the higher layer signaling is configured as first or second, the UE may apply the joint TCI state or UL TCI state indicated through DCI received from a CORESET with CORESETPoolIndex configured as 0 or 1 to 1 or more SRS resources in the SRS resource set for which the higher layer signaling is configured, respectively. If the UE is not configured with the higher layer signaling and an SRS resource set with resourceType configured as aperiodic is triggered through DCI, the UE may determine the joint TCI state or UL TCI state to be applied to 1 or more SRS resources in the SRS resource set according to from which CORESET with which CORESETPoolIndex the DCI was received.

As an example, if the UE is not configured with the higher layer signaling, the UE is configured with followUnifiedTCI-StateSRS-r17, and an SRS resource set with resourceType configured as aperiodic is triggered through DCI received from a CORESET with CORESETPoolIndex configured as 0, the UE may apply the joint TCI state or UL TCI state indicated through DCI received from a CORESET with CORESETPoolIndex configured as 0 to 1 or more SRS resources in the SRS resource set. As another example, if the UE is not configured with the higher layer signaling, and an SRS resource set with resourceType configured as aperiodic is triggered through DCI received from a CORESET with CORESETPoolIndex configured as 1, the UE may apply the joint TCI state or UL TCI state indicated through DCI received from a CORESET with CORESETPoolIndex configured as 1 to 1 or more SRS resources in the SRS resource set. If the UE is not configured with the higher layer signaling and the UE is not configured with followUnifiedTCI-StateSRS-r17, the UE may be configured with a joint TCI state or UL TCI state for each of 1 or more SRS resources in the SRS resource set, and may not apply the joint TCI state or UL TCI state indicated through DCI to SRS resources in the SRS resource set.

Considering the higher layer signaling structure, the UE may use 2 uplink transmit power determination methods when operating as a unified TCI state.

### [Method 1-1] Basic Transmission Power Determination Method: Common Transmission Power Parameter Application

The UE may be configured with a ul-powerControl parameter in each of 1 or more uplink bandwidth parts configured in a specific serving cell. In other words, the UE may apply a set of transmit power parameters (e.g., at least one of p0, alpha, or closed loop index) that may be known through ul-powerControl configured in the uplink bandwidth part for all uplink transmissions in each uplink bandwidth part. Therefore, the UE may use only one common set of transmit power parameters without using individual transmit power parameters according to uplink channels and signals.

### [Method 1-2] Additional Transmission Power Determination Method: Different Transmission Power Parameter Application Possible

The UE is not configured with a ul-powerControl parameter in each of 1 or more uplink bandwidth parts configured in a specific serving cell, and may apply a set of transmit power parameters (e.g., p0, alpha, closed loop index) that may be known through ul-powerControl-r17, which is higher layer signaling, in the joint TCI state or UL TCI state as illustrated in [Table 27] or [Table 27] above. Therefore, the UE may be configured with different ul-powerControl-r17 for each different joint TCI state or UL TCI state from the base station, and accordingly, various transmit power parameters may be operated compared to [Method 1-1], and different transmit power parameters may be used according to uplink transmission circumstances and UE and base station operation scenarios.

Commonly for [Method 1-1] and [Method 1-2] described above, the UE may be configured with a reference signal for path loss measurement in the joint TCI state or UL TCI state. In other words, as described above, if the UE operates as a unified TCI state, the UE may always be configured with a reference signal for path loss measurement in the joint TCI state or UL TCI state, and the UE may use the reference signal for path loss measurement configured in the configured and indicated unified TCI state to determine path loss to be reflected in determining uplink transmit power. Further, the UE may track up to 4 reference signals for path loss measurement per arbitrary serving cell and update up to 4 different path losses.

The UE may transmit whether to support at least one or more combinations of [Method 1-1] and [Method 1-2] above to the base station through UE capability report. Further, the UE may be configured with at least one or more combinations of [Method 1-1] and [Method 1-2] above from the base station through higher layer signaling.

### <Second embodiment: Method for Calculating Path Loss Difference Value of UE and Base Station>

As an embodiment of the disclosure, a method for calculating a path loss difference value of a UE and a base station is described. This embodiment may operate in combination with other embodiments.

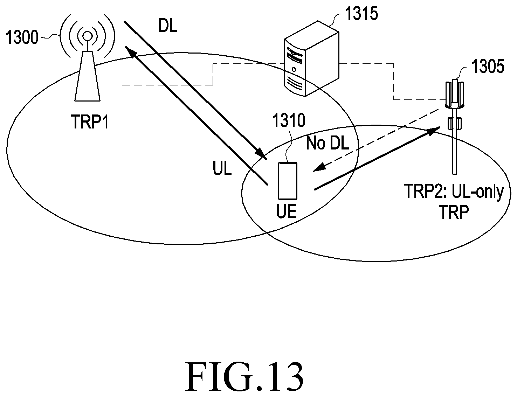

FIG. 13 is a view illustrating an operation example of a base station and a UE operating as multi-TRP including a TRP supporting only an uplink reception function according to an embodiment of the disclosure.

Referring to FIG. 13, a UE 1310 may be connected to and operate with a base station (e.g., a network entity 1315) operating with multiple TRPs as described above. The UE 1310 may assume that each of a plurality of TRPs supports both uplink reception and downlink transmission. In addition to a TRP (e.g., TRP1 1300) capable of both conventional uplink reception and downlink transmission, for the purpose of enhancing uplink coverage from the perspective of the UE 1310, or for the purpose of energy saving gain obtainable by saving downlink transmit power at the base station, the base station may operate together with a TRP (e.g., TRP2 1305) supporting only uplink reception function. Such a TRP2 1305 supporting only uplink reception may be named UL-only TRP. The UE 1310 may assume that downlink transmission is not performed from the UL-only TRP 1305. As an assumption for such a UL-only TRP 1305, the base station and the UE 1310 may consider at least one or more combinations of the following.

The UL-only TRP 1305 may operate as a UL-only TRP only for specific UEs (e.g., the UE 1310). In other words, the UL-only TRP 1305 actually has both uplink reception and downlink transmission functions, but may support only the uplink reception function for specific UEs under specific conditions (e.g., notifying the UE of connection to the UL-only TRP through at least one or more combinations of specific higher layer signaling, MAC-CE, and L1 signaling). In other words, the UL-only TRP may support downlink transmission to other UEs. Such a UL-only TRP may extend uplink coverage by additionally operating only the reception function of a pre-installed TRP or a newly installed TRP near the corresponding location when specific UEs are present at the boundary of an arbitrary cell coverage.

The UL-only TRP 1305 may not support the downlink transmission function to all UEs and may support only the uplink reception function. In other words, the UL-only TRP 1305 is a TRP with relatively low production and installation costs, and in addition to the already installed TRPs, may additionally receive uplink transmission from UEs to enable the base station to obtain reception diversity.

The UE 1310 may receive a path loss measurement reference signal from a TRP 1300 capable of uplink and downlink operation, but since downlink transmission is not performed from the UL-only TRP 1305, when the UE 1310 performs uplink transmission toward the UL-only TRP 1305, there may be a problem that the path loss between the UL-only TRP 1305 and the UE 1310 may not be known. To resolve such a circumstance, the base station and the UE 1310 may consider at least one or more combinations of the following methods to obtain path loss information between the UL-only TRP 1305 and the UE 1310.

### [Method 2-1]

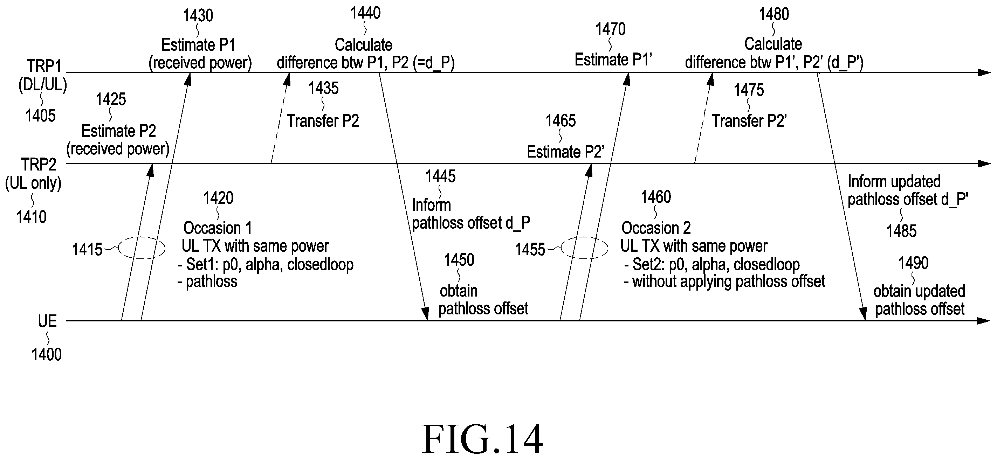

FIG. 14 is a view illustrating a method for calculating and updating a path loss difference value according to an embodiment of the disclosure.

Referring to FIG. 14, a UE 1400 may be connected to and operate with a base station composed of a TRP (e.g., TRP1 1410) capable of uplink and downlink operation and a UL-only TRP (e.g., TRP2 1405) capable of performing only uplink reception. The UE 1400 and the base station may go through a series of processes of exchanging signals between the UE 1400 and the base station to obtain information on the path loss between TRP2 1410 and the UE 1400.

### [Process 2-1] Uplink Transmission of UE 1400

The UE 1400 may transmit an uplink signal to TRP1 1405 and TRP2 1410 (1415). If the UE 1400 operates in FR1, the UE 1400 may be capable of transmitting an uplink signal to TRP1 1405 and TRP2 1410 with a single uplink transmission, and if the UE 1400 operates in FR2, the UE 1400 may perform individual uplink transmission by applying different transmit beams to TRP1 1405 and TRP2 1410. If the UE 1400 operates in FR2, when the UE 1400 determines the transmit power of individual uplink signals transmitted to TRP1 1405 and TRP2 1410, the UE 1400 may apply the same transmit power parameter (1420). In other words, when the UE 1400 determines the transmit power of two uplink signals, the UE 1400 may consider the same transmit power parameter (e.g., p0, alpha, closed loop index, and/or path loss between TRP1 1405 and the UE 1400). Therefore, when the UE 1400 transmits an uplink signal to TRP2 1410, the UE 1400 may apply the path loss between TRP1 1405 and the UE 1400 to the transmit power determination of the uplink signal.

### [Process 2-2] Calculation of Path Loss Difference at Base Station

Thereafter, TRP1 1405 and TRP2 1410 may receive the uplink transmission of the UE 1400 respectively and calculate received power P1 1425 and P2 1430 at each TRP. TRP2 1410 may deliver P2 to TRP1 1405 (1435). TRP1 1405 receiving P2 from TRP2 1410 may calculate d_P, which is the difference between P1 and P2 (1440). When calculating d_P at TRP1 1405 (1440), TRP1 1405 may consider the receive beam gain at TRP1 1405, the receive beam gain at TRP2 1410, and in case of FR2, each transmit beam gain considered when the UE transmits to TRP1 1405 and TRP2 1410 and a maximum permissible exposure (MPE) value capable of determining the transmit power reduction amount for each transmit beam.

### [Process 2-3] Delivering Path Loss Difference to UE 1400

After calculating d_P, which is the difference between the path loss between TRP1 1405 and the UE 1400 and the path loss between TRP2 1410 and the UE 1400, the base station may notify the UE 1400 of the calculated value (1445). The UE 1400 may obtain the d_P value (1450) and, when performing uplink transmission to TRP2 1410, the UE 1400 may determine the uplink transmit power for TRP2 1410 by applying the d_P value in addition to the path loss measurable through a reference signal for path loss measurement receivable from TRP1 1405.

Through the [Process 2-1] to [Process 2-3], the base station may calculate d_P, which is the difference value between the path loss between TRP1 1405 and the UE 1400 and the path loss between TRP2 1410 and the UE 1400, by utilizing the received power information of the uplink signal of the UE 1400. In the [Process 2-3], the base station may also process one or more d_P values calculated by repeating [Process 2-1] and [Process 2-2] one or more times (e.g., taking an arithmetic average) and deliver them to the UE 1400.

If the UE 1400 is not a device fixed at a specific location like customer premises equipment (CPE), e.g., if it is a mobile device such as a smartphone, smartwatch, or tablet, d_P may be a value that changes over time. Therefore, the [Process 2-1] to [Process 2-3] may need to be configured or activated to be repeated periodically or semi-persistently for the UE 1400, or may need to be triggered aperiodically for the UE 1400. To identify and deliver the changing d_P value to the UE 1400, the following additional processes may be considered between the UE 1400 and the base station.

### [Process 2-4] Uplink Transmission of UE 1400 After Obtaining d_P

The UE 1400 may transmit an uplink signal to TRP1 1405 and TRP2 1410 after obtaining d_P from the base station (1455). If the UE 1400 operates in FR1, the UE 1400 may be capable of transmitting an uplink signal to TRP1 1405 and TRP2 1410 with a single uplink transmission. If the UE 1400 operates in FR2, the UE 1400 may perform individual uplink transmission by applying different transmit beams to TRP1 1405 and TRP2 1410. If the UE 1400 operates in FR2, when the UE 1400 determines the transmit power of individual uplink signals transmitted to TRP1 1405 and TRP2 1410, the UE 1400 may apply the same transmit power parameter (1460). When the UE 1400 determines the transmit power of two uplink signals, the UE 1400 may consider the same transmission parameter (e.g., p0, alpha, closed loop index, and path loss between TRP1 1405 and the UE 1400).

Further, although the UE 1400 has obtained the d_P value through the [Process 2-3], the UE 1400 may transmit the uplink signal without applying d_P when determining the uplink transmit power to TRP2 1410 (1460) so that the base station may calculate the difference value between the path loss between TRP1 1405 and the UE 1400 and the path loss between TRP2 1410 and the UE 1400 by applying the same transmit power parameter to the two TRPs 1405, 1410. Therefore, although the UE 1400 transmits an uplink signal to TRP2 1410, the UE 1400 may apply only the path loss between TRP1 1405 and the UE 1400 to the transmit power determination of the uplink signal.

### [Process 2-5] Calculation of Path Loss Difference at Base Station

TRP1 1405 and TRP2 1410 may receive the uplink transmission of the UE 1400 in the [Process 2-4] respectively and calculate received power P1' 1465 and P2' 1470 at each TRP. TRP2 1410 may deliver P2' to TRP1 1405 (1475). TRP1 1405 receiving P2' from TRP2 1410 may calculate d_P', which is the difference between P1' and P2' (1480). When calculating d_P' at TRP1 1405 (1480), TRP1 1405 may consider the receive beam gain at TRP1 1405, the receive beam gain at TRP2 1410, and in case of FR2, each transmit beam gain considered when the UE transmits to TRP1 1405 and TRP2 1410 and a maximum permissible exposure (MPE) value capable of determining the transmit power reduction amount for each transmit beam.

### [Process 2-6] Delivering Path Loss Difference to UE

After calculating d_P', which is the difference between the path loss between TRP1 1405 and the UE 1400 and the path loss between TRP2 1410 and the UE 1400, the base station may notify the UE 1400 of the calculated value (1485). The UE 1400 may obtain the d_P' value updated compared to the previously obtained d_P value (1490), and thereafter when performing uplink transmission to TRP2 1410, may determine the uplink transmit power for TRP2 1410 by applying the d_P' value in addition to the path loss measurable through a reference signal for path loss measurement receivable from TRP1 1405.

Thereafter, the UE 1400 and the base station may repeat the [Process 2-4] to [Process 2-6] to calculate and share the updated value for the d_P value. In the [Process 2-6], the base station may also process one or more d_P' values calculated by repeating [Process 2-4] and [Process 2-5] one or more times (e.g., taking an arithmetic average) and deliver them to the UE 1400.

If the UE 1400 performs the uplink transmission illustrated in the [Process 2-1] and [Process 2-4], the UE 1400 may be configured with one or more SRS resources in an SRS resource set in which higher layer signaling resourceType is configured as periodic, semi-persistent, or aperiodic, and perform the [Process 2-1] and [Process 2-4] based on SRS transmission, and such one or more SRS resources may all have the same transmit power parameter.

If the UE 1400 operates in FR1, the UE 1400 may apply the same transmit power parameter (e.g., at least one of p0, alpha, closed loop index, or path loss) to TRP1 1405 and TRP2 1410 based on one SRS resource in the SRS resource set, and even when it is uplink transmission to TRP2 1410, as described above, the path loss difference value may not be applied when determining the transmit power. If the UE 1400 operates in FR2, the UE 1400 may apply the same transmit power parameter (e.g., p0, alpha, closed loop index, and path loss) to TRP1 1405 and TRP2 1410 based on one or more SRS resources in the SRS resource set, and may apply different transmit beams to each SRS resource. Similarly to the above, the UE 1400 may not apply the path loss difference value when determining the transmit power of uplink transmission to TRP2 1410.

The UE 1400 may perform the uplink transmission illustrated in the [Process 2-1] and [Process 2-4] through uplink channels and signals other than SRS (e.g., at least one of PUCCH, PUSCH, or PRACH).

When the UE 1400 performs the uplink transmission illustrated in the [Process 2-1] and [Process 2-4], within each process, the same transmit power parameter needs to be applied for uplink channels or signals transmitted to TRP1 1405 and TRP2 1410, but between processes (e.g., the transmit power parameter used in the [Process 2-1] and the transmit power parameter used in the [Process 2-4]), use of different transmit power parameters may be possible.

For example, if the UE 1400 determined uplink transmit power using a first p0, a first alpha, a first closed loop index, and/or a first path loss and transmitted to TRP1 1405 and TRP2 1410 in the [Process 2-1], the UE 1400 may determine uplink transmit power using a second p0, a second alpha, a second closed loop index, and/or a second path loss and transmit to TRP1 1405 and TRP2 1410 in the [Process 2-4], and the first p0 and the second p0 may be the same or different from each other, and a similar relationship may apply to other transmit power parameters.

In the case of [Method 2-1], the UE 1400 may receive the d_P value from the base station through the [Process 2-3] and [Process 2-6]. In the case of [Method 2-1], since the UE 1400 receives the d_P value from the base station, compared to receiving the d_P'' value that may be considered in the following [Method 2-2] when considering the same quantization bit amount, the UE 1400 may receive an inaccurate value, but as described above, the absence of a constraint that the same transmit power parameter should be used between each transmission time as in the [Process 2-1] and [Process 2-4] may be flexible for the base station in operating such uplink transmission.

### [Method 2-2]

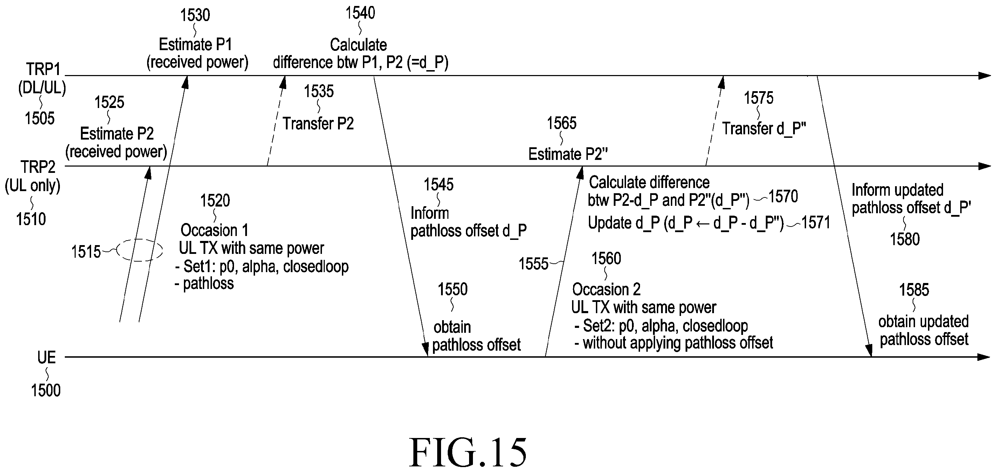

FIG. 15 is a view illustrating another method for calculating and updating a path loss difference value according to an embodiment of the disclosure.

Referring to FIG. 15, a UE 1500 may be connected to and operate with a base station composed of a TRP (e.g., TRP1 1510) capable of uplink and downlink operation and a UL-only TRP (e.g., TRP2 1505) capable of performing only uplink reception. The UE 1500 and the base station may go through a series of processes of exchanging signals between the UE 1500 and the base station to obtain information on the path loss between TRP2 1510 and the UE 1500.

### [Process 3-1] Uplink Transmission of UE 1500

The UE 1500 may transmit an uplink signal to TRP1 1505 and TRP2 1510 (1515). If the UE 1500 operates in FR1, the UE 1500 may be capable of transmitting an uplink signal to TRP1 1505 and TRP2 1510 with a single uplink transmission. If the UE 1500 operates in FR2, the UE 1500 may perform individual uplink transmission by applying different transmit beams to TRP1 1505 and TRP2 1510.

If the UE 1500 operates in FR2, when the UE 1500 determines the transmit power of individual uplink signals transmitted to TRP1 1505 and TRP2 1510, the UE 1500 may apply the same transmit power parameter (1520). In other words, when the UE 1500 determines the transmit power of two uplink signals, the UE 1500 may consider the same p0, alpha, closed loop index, and/or path loss between TRP1 1505 and the UE 1500. The UE 1500 may apply the path loss between TRP1 1505 and the UE 1500 to determine the transmit power of the uplink signal transmitted to TRP2 1510.

### [Process 3-2] Calculation of Path Loss Difference at Base Station

Thereafter, TRP1 1505 and TRP2 1510 may receive the uplink transmission of the UE 1500 respectively and calculate received power P1 1525 and P2 1530 at each TRP. TRP2 1510 may deliver P2 to TRP1 1505 (1535). TRP1 1505 receiving P2 from TRP2 1510 may calculate d_P, which is the difference between P1 and P2 (1540). When calculating d_P at TRP1 1505 (1540), TRP1 1505 may consider the receive beam gain at TRP1 1505, the receive beam gain at TRP2 1510, and in case of FR2, each transmit beam gain considered when the UE 1500 transmits to TRP1 1505 and TRP2 1510 and/or a maximum permissible exposure (MPE) value capable of determining the transmit power reduction amount for each transmit beam.

### [Process 3-3] Delivering Path Loss Difference to UE 1500

After calculating d_P, which is the difference between the path loss between TRP1 1505 and the UE 1500 and the path loss between TRP2 1510 and the UE 1500, the base station may notify the UE 1500 of the calculated value (1545). The UE 1500 may obtain the d_P value (1550), and thereafter when performing uplink transmission to TRP2 1510, may determine the uplink transmit power for TRP2 1510 by additionally applying the obtained d_P value in addition to the path loss measurable through a reference signal for path loss measurement receivable from TRP1 1505.

Through the [Process 3-1] to [Process 3-3], the base station may calculate d_P, which is the difference value between the path loss between TRP1 1505 and the UE 1500 and the path loss between TRP2 1510 and the UE 1500, by utilizing the received power information of the uplink signal of the UE 1500. In the [Process 3-3], the base station may also process one or more d_P values calculated by repeating [Process 3-1] and [Process 3-2] one or more times (e.g., taking an arithmetic average) and deliver them to the UE 1500. Further, in the [Process 3-3], notifying the UE 1500 of the d_P value by the base station may be performed once initially at the base station, and thereafter when the UE 1500 and the base station repeat [Process 3-1] and [Process 3-2], the [Process 3-3] may be selectively performed by the base station.

Meanwhile, if the UE 1500 is not a device fixed at a specific location like customer premises equipment (CPE), e.g., UEs such as smartphones, smartwatches, and tablets are mobile devices, d_P may be a value that changes over time. Therefore, the [Process 3-1] to [Process 3-3] may need to be configured or activated to be repeated periodically or semi-persistently for the UE 1500, or may need to be triggered aperiodically for the UE 1500. If the [Process 2-4] to [Process 2-6] were a method in which the UE 1500 and the base station update and share the d_P value with each other, the following [Process 3-4] to [Process 3-6] may be a method in which the UE 1500 and the base station consider the d_P value obtained through the [Process 3-1] to [Process 3-3] as an initial value, and calculate and share the change amount thereof. To identify such a change amount of the d_P value and deliver it to the UE 1500, the following additional processes may be considered between the UE 1500 and the base station.

### [Process 3-4] Uplink Transmission of UE 1500 After Obtaining d_P

The UE 1500 may transmit an uplink signal to TRP2 1510 after obtaining d_P from the base station (1555). The UE 1500 may use p0, alpha, and/or closed loop index among the transmit power parameters used in the [Process 3-1], and in the case of path loss, may use by applying the d_P value obtained in the [Process 3-3] to the path loss between TRP1 1505 and the UE 1500

(1560). If the UE 1500 operates in FR2, the UE 1500 may use the same or different transmit beams in the [Process 3-1] and this [Process 3-4]. If the UE 1500 uses the same transmit beam in the [Process 3-1] and this [Process 3-4], the base station does not need to compensate for the difference in transmit beam gain values due to the change of the transmit beam at the UE 1500 when calculating the change amount of d_P in subsequent processes, but if not (i.e., the UE 1500 uses different transmit beams in the [Process 3-1] and this [Process 3-4]), the base station may increase accuracy when calculating the change amount of the d_P value by compensating for the difference between each transmit beam gain value in subsequent processes.

### [Process 3-5] Calculation of Path Loss Difference at Base Station

Thereafter, TRP2 1510 may receive the uplink transmission of the UE 1500 in the [Process 3-4] and calculate received power P2" 1565. TRP2 1510 may compare the value obtained by subtracting the d_P value from P2 calculated in the [Process 3-2] (e.g., P2 - d_P) with the P2" value. Since the P2 is a received power value calculated based on transmit power parameters in which the path loss difference value is not considered, and the P2" is a received power value calculated with the path loss difference value additionally applied to the same transmit power parameters as when calculating the P2, comparing the value obtained by subtracting the d_P value from P2 with P2" may be the same as estimating the change amount of the d_P value.

Accordingly, TRP2 1510 may calculate the d_P'' value, which is the change amount of the d_P value (1570). When calculating d_P'' at TRP2 1510 (1570), TRP2 1510 may consider the receive beam gain at TRP2 1510, and in case of FR2, each transmit beam gain considered when the UE transmits to TRP2 1510 and a maximum permissible exposure (MPE) value capable of determining the transmit power reduction amount for each transmit beam. TRP2 1510 may update the previously calculated d_P value by considering the calculated d_P'' (1571) (e.g., d_P = d_P - d_P"). Thereafter, TRP2 1510 may deliver the d_P'' value to TRP1 1505 (1575).

### [Process 3-6] Delivering Path Loss Difference to UE 1500

After calculating d_P", which is the change amount of d_P that is the difference between the path loss between TRP1 1505 and the UE 1500 and the path loss between TRP2 1510 and the UE 1500, the base station may notify the UE 1500 of the calculated value (1580). The UE 1500 may obtain an updated d_P value by applying the change amount to the previously obtained d_P value (1585). Thereafter, when performing uplink transmission to TRP2 1510, the UE 1500 may determine the uplink transmit power for TRP2 1510 by additionally applying d_P, which is the path loss difference value, and the change amount d_P'' value in addition to the path loss measurable through a reference signal for path loss measurement receivable from TRP1 1505.

The UE 1500 and the base station may repeat the [Process 3-4] to [Process 3-6] to calculate and share the updated value for the d_P value. In the [Process 3-6], the base station may also process one or more d_P'' values calculated by repeating [Process 3-4] and [Process 3-5] one or more times (e.g., taking an arithmetic average) and deliver them to the UE 1500. Further, TRP2 1510 may process one or more d_P'' values calculated by repeating [Process 3-4] and [Process 3-5] one or more times in the [Process 3-5] (e.g., taking an arithmetic average) and use them to update the d_P value.

When the UE 1500 performs the uplink transmission illustrated in the [Process 3-1], the UE 1500 may be configured with one or more SRS resources in an SRS resource set in which higher layer signaling resourceType is configured as periodic, semi-persistent, or aperiodic, and perform based on SRS transmission, and such one or more SRS resources may all have the same transmit power parameter.

If the UE 1500 operates in FR1, the UE 1500 may apply the same transmit power parameter (e.g., p0, alpha, closed loop index, and/or path loss) to TRP1 1505 and TRP2 1510 based on one SRS resource in the SRS resource set, and even when it is uplink transmission to TRP2 1510, as described above, the path loss difference value may not be applied when determining the transmit power. If the UE 1500 operates in FR2, the UE 1500 may apply the same transmit power parameter (e.g., p0, alpha, closed loop index, and/or path loss) to TRP1 1505 and TRP2 1510 based on one or more SRS resources in the SRS resource set, and may apply different transmit beams to each SRS resource. Similarly to the above, the UE 1500 may not apply the path loss difference value when determining the transmit power even when it is uplink transmission to TRP2 1510, as described above.

When the UE 1500 performs the uplink transmission illustrated in the [Process 3-4], the UE 1500 may be configured with one or more SRS resources in an SRS resource set in which higher layer signaling resourceType is configured as periodic, semi-persistent, or aperiodic, and perform based on SRS transmission, and such one or more SRS resources may all have the same transmit power parameter.

If the UE 1500 performs both the uplink transmission in the [Process 3-1] and the uplink transmission in the [Process 3-4] based on SRS resources in an SRS resource set in which resourceType is configured as periodic or semi-persistent, the UE 1500 may assume that the period of uplink transmission for the [Process 3-1] is longer than or equal to the period of uplink transmission for the [Process 3-4].

For example, if the period of uplink transmission for the [Process 3-1] is 10 slots and the period of uplink transmission for the [Process 3-4] is 2 slots, the UE 1500 does not need to consider the constraint that the transmit power parameter should be the same between each transmission time of uplink transmission for the [Process 3-1], and as described above, when transmission to TRP1 1505 and TRP2 1510 is performed individually within each transmission time of uplink transmission for the [Process 3-1], the UE 1500 may consider that the transmit power parameter is the same for transmission to the two TRPs.

Further, for the uplink transmission for the [Process 3-4], the UE 1500 may use the transmit power parameter used in the transmission period of the most recent uplink transmission for the [Process 3-1] that was performed earlier than the uplink transmission. For example, if the UE 1500 performed uplink transmission for the [Process 3-1] at slot n and used a first transmit power parameter set, for the uplink transmission for the [Process 3-4] from slot n until before the next period slot n+10, the UE 1500 may use the first transmit power parameter set, and as described above, the path loss difference value may also be applied when performing uplink transmission for the [Process 3-4]. The reason for this is that in the [Process 3-4], when TRP2 1510 calculates d_P", it considers the received power P2 value calculated through the previous uplink transmission, so the constraint that the transmit power parameter should be the same for both uplink transmissions should be present to calculate a more accurate d_P'' value.

The UE 1500 may perform the uplink transmission illustrated in the [Process 3-1] and [Process 3-4] through uplink channels and signals other than SRS (e.g., PUCCH, PUSCH, and/or PRACH).

In the case of [Method 2-2], the UE 1500 may receive the d_P value from the base station at least once initially through the [Process 3-3], and may be notified of the d_P'' value from the base station through the [Process 3-6]. In the case of [Method 2-2], although signaling overhead may be added since the UE 1500 may need to be configured by the base station for different uplink transmissions for the [Process 3-1] and [Process 3-4], when considering the same quantization bit amount, the UE 1500 may have the advantage of receiving a more accurate value for the path loss difference value by receiving the d_P'' value compared to receiving the d_P value from the base station.

Through the above-described [Method 2-1] and [Method 2-2], a UE (e.g., UE 1400 or 1500) may use a modified transmit power calculation equation as follows when determining uplink transmit power for a UL-only TRP.

For example, when determining PUCCH transmit power for a UL-only TRP (e.g., TRP2 1410 or 1510) supporting only uplink reception operation, the UE may modify and use [Equation * 2] as in the following [Equation 11]. ${PL}_{off , b , f , c} \left({q}_{d}^{∗}\right)$ in [Equation 11] below may be regarded as the d_P value, which is the path loss difference, and ${q}_{d}^{∗}$ may mean that the path loss difference corresponds to one or more path loss measurement reference signals. When ${q}_{d}^{∗}$ corresponds to one path loss measurement reference signal, the UE may also regard ${q}_{d}^{∗}$ as =q_{d}. [Equation 11] $\begin{matrix}{P}_{PUCCH , b , f , c} \left(i, {q}_{u}, {q}_{d}, l\right) \\ = min \left\{\begin{matrix}{P}_{CMAX , f , c} \left(i\right) , \\ {P}_{0 _ PUCCH , b , f , c} \left({q}_{u}\right) + 10 {log}_{10} \left({2}^{μ}∗{M}_{RB , b , f , c}^{PUCCH}\left(i\right)\right) + {PL}_{b , f , c} \left({q}_{d}\right) + {PL}_{off , b , f , c} \left({q}_{d}^{∗}\right) + {Δ}_{F _ PUCCH} \left(F\right) + {Δ}_{TF , b , f , c} \left(i\right) + {f}_{b , f , c} \left(i, l\right)\end{matrix}\right\} \left[dBm\right]\end{matrix}$

As another example, when determining PUSCH transmit power for a UL-only TRP supporting only uplink reception operation, the UE may modify and use [Equation 4] as in the following [Equation 12] or [Equation 13]. In this case, ${PL}_{off , b , f , c} \left({q}_{d}^{∗}\right)$ in [Equation 12] or [Equation 13] below may be regarded as the d_P value, which is the path loss difference, and ${q}_{d}^{∗}$ may mean that the path loss difference corresponds to one or more path loss measurement reference signals. In this case, when ${q}_{d}^{∗}$ corresponds to one path loss measurement reference signal, the UE may also regard ${q}_{d}^{∗}$ as =q_{d}. [Equation 12] or [Equation 13] below may be distinguished according to whether the ${PL}_{off , b , f , c} \left({q}_{d}^{∗}\right)$ value, which is the path loss difference, is directly applied to the path loss. [Equation 12] $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{0 _ PUSCH , b , f , c} \left(j\right) + 10 {log}_{10} \left({2}^{μ}∗{M}_{RB , b , f , c}^{PUSCH}\left(i\right)\right) + {α}_{b , f , c} \left(j\right) ⋅ \left({PL}_{b , f , c}\left({q}_{d}\right)+{PL}_{off , b , f , c}\left({q}_{d}^{∗}\right)\right) + {Δ}_{TF , b , f , c} \left(i\right) + {f}_{b , f , c} \left(i, l\right)\end{matrix}\right\} \left[dBm\right]\end{matrix}$ [Equation 13] $\begin{matrix}{P}_{PUSCH , b , f , c} \left(i, j, {q}_{d}, l\right) \\ = min \left\{\begin{matrix}{P}_{CMAX , f , c} \left(i\right) , \\ {P}_{0 _ PUSCH , b , f , c} \left(j\right) + 10 {log}_{10} \left({2}^{μ}∗{M}_{RB , b , f , c}^{PUSCH}\left(i\right)\right) + {α}_{b , f , c} \left(j\right) ⋅ {PL}_{b , f , c} \left({q}_{d}\right) + {PL}_{off , b , f , c} \left({q}_{d}^{∗}\right) + {Δ}_{TF , b , f , c} \left(i\right) + {f}_{b , f , c} \left(i, l\right)\end{matrix}\right\} \left[dBm\right]\end{matrix}$

As another example, when determining PUSCH transmit power for a UL-only TRP supporting only uplink reception operation, the UE may modify and use [Equation 7] as in the following [Equation 14] or [Equation 15]. In this case, ${PL}_{off , b , f , c} \left({q}_{d}^{∗}\right)$ in [Equation 14] or [Equation * 15] below may be regarded as the d_P value, which is the path loss difference, and ${q}_{d}^{∗}$ may mean that the path loss difference corresponds to one or more path loss measurement reference signals. In this case, when ${q}_{d}^{∗}$ corresponds to one path loss measurement reference signal, the UE may also regard ${q}_{d}^{∗}$ as =q_{d}. [Equation 14] or [Equation 15] below may be distinguished according to whether the ${PL}_{off , b , f , c} \left({q}_{d}^{∗}\right)$ value, which is the path loss difference, is directly applied to the path loss. [Equation 14] $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _ SRS , b , f , c} \left({q}_{s}\right) + 10 {log}_{10} \left({2}^{μ}∗{M}_{SRS , b , f , c}\left(i\right)\right) + {α}_{SRS , b , f , c} \left({q}_{s}\right) ⋅ \left({PL}_{b , f , c}\left({q}_{d}\right)+{PL}_{off , b , f , c}\left({q}_{d}^{∗}\right)\right) + {h}_{b , f , c} \left(i, l\right)\end{matrix}\right\} \left[dBm\right]\end{matrix}$ [Equation 15] $\begin{matrix}{P}_{SRS , b , f , c} \left(i, {q}_{s}, l\right) \\ = min \left\{\begin{matrix}{P}_{CMAX , f , c} \left(i\right) , \\ {P}_{0 _ SRS , b , f , c} \left({q}_{s}\right) + 10 {log}_{10} \left({2}^{μ}∗{M}_{SRS , b , f , c}\left(i\right)\right) + {α}_{SRS , b , f , c} \left({q}_{s}\right) ⋅ {PL}_{b , f , c} \left({q}_{d}\right) + {PL}_{off , b , f , c} \left({q}_{d}^{∗}\right) + {h}_{b , f , c} \left(i, l\right)\end{matrix}\right\} \left[dBm\right]\end{matrix}$

The UE may be notified of at least one or more combinations of [Method 2-1] and [Method 2-2] from the base station through at least one or more combinations of higher layer signaling, MAC-CE signaling, and L1 signaling, or may expect that at least one or more combinations of [Method 2-1] and [Method 2-2] are fixedly defined in the specification. Further, if the UE is notified of a combination of one or more specific methods from the base station through at least one or more combinations of higher layer signaling, MAC-CE signaling, and L1 signaling, this may mean that the UE is not capable of supporting one or more other combinations of methods.

For example, the UE may expect that [Method 2-1] or [Method 2-2] for obtaining and updating the path loss difference is fixedly defined in the specification. As another example, the UE may be notified of [Method 2-1] from the base station through at least one or more combinations of higher layer signaling, MAC-CE signaling, and L1 signaling, and in such a case, the UE may regard it as being notified by the base station that [Method 2-2] is not supported.

The UE may report to the base station as UE capability whether at least one or more combinations of [Method 2-1] and [Method 2-2] may be supported. If the UE reports as UE capability to the base station that a combination of one or more specific methods may be supported, it may be regarded as the UE reporting that support for one or more other combinations of methods is not possible. For example, the UE may report to the base station whether [Method 2-1] or [Method 2-2] may be supported. As another example, the UE may report to the base station that [Method 2-1] may be supported, and such UE capability reporting may mean that the UE may not support [Method 2-2].

### <Third embodiment: Method for Updating Path Loss Difference Value of UE and Base Station>

As an embodiment of the disclosure, a method for updating a path loss difference value of a UE and a base station is described. This embodiment may operate in combination with other embodiments.

The UE may receive from the base station the d_P value, which is the difference value between the path loss between a TRP capable of both uplink and downlink operation and the UE and the path loss between a UL-only TRP capable of only uplink reception operation and the UE, in the [Process 2-3] and [Process 2-6] within [Method 2-1] and the [Process 3-3] within [Method 2-2]. Further, the UE may receive from the base station the d_P'' value, which is the change amount of the d_P, in the [Process 3-6] within [Method 2-2]. The d_P value or d_P'' value may be an arbitrary integer in dB units.

For example, the UE may assume that the distance between a TRP capable of only uplink reception operation and the UE is shorter than the distance between a TRP capable of both uplink and downlink operation and the UE, and based on this, the d_P value may only be possible as a value less than or equal to 0, and the d_P'' value may be an integer. The UE may consider at least one or more combinations of the following matters as a method for receiving from the base station such a path loss difference value or its change amount.

### [Method 3-1]

The UE may be configured by higher layer signaling with the d_P value, which is the path loss difference value, or the d_P'' value, which is the change amount of the d_P value, from the base station. The UE may be configured with one or more d_P values, which are the path loss difference values, or d_P'' values, which are the change amounts of the d_P values, per bandwidth part or per cell. For example, the UE may be configured through higher layer signaling with d_P values or d_P'' values up to the maximum number of 4, which is the maximum number of path loss measurement reference signals that the UE may track within a specific cell. Through this method, the UE may receive from the base station the d_P value, which is the path loss difference value, or the d_P'' value, which is the change amount of the d_P value, only through higher layer signaling, so if RRC reconfiguration is not performed for the UE, the corresponding configured value may not be changed.

When the UE is configured with the d_P value, which is the path loss difference value, or the d_P'' value, which is the change amount of the d_P value, by higher layer signaling as in [Method 3-1], the path loss difference value may be configured semi-statically between the UE and the base station and may not be dynamically changed, which may be inflexible, and if the UE has mobility, the time interval for correcting the path loss difference value may be very long. However, if the UE has a fixed location like CPE or has very low mobility, or for cases where information exchange between TRPs is very slow, this may be an effective method for saving additional dynamic signaling while reflecting the path loss difference value to determine transmit power during uplink transmission to a UL-only TRP.

### [Method 3-2]

The UE may be configured by higher layer signaling with the d_P value, which is the path loss difference value, or the d_P'' value, which is the change amount of the d_P value, from the base station, and thereafter may receive MAC-CE signaling from the base station to update the pre-configured value. The UE may be configured with one or more d_P values, which are the path loss difference values, or d_P'' values, which are the change amounts of the d_P values, per bandwidth part or per cell. For example, the UE may be configured through higher layer signaling with d_P values or d_P'' values up to the maximum number of 4, which is the maximum number of path loss measurement reference signals that the UE may track within a specific cell. The UE may consider at least one or more combinations of the following matters as information that may be included in MAC-CE signaling.
- Serving cell ID field (e.g., 5 bits)
- Uplink bandwidth part ID field (e.g., 2 bits)
- Path loss measurement reference signal ID field (e.g., 6 bits)
- Path loss measurement reference signal group field (e.g., 2 bits)
- Activated path loss measurement reference signal ID field (e.g., 2 bits)
- Path loss difference value (d_P) field (e.g., 5 to 8 bits)
- Path loss difference value change amount (d_P") field (e.g., 5 to 8 bits)
- Joint TCI state or UL TCI state field (7 or 6 bits respectively)

As an example of a combination of MAC-CE signaling configuration information, if the UE is configured by higher layer signaling with one d_P value, which is the path loss difference value, or d_P'' value, which is the change amount of the d_P value, per bandwidth part, the UE may expect that among the information above, the Serving cell ID field, the uplink bandwidth part ID field, and the path loss difference value (d_P) field or/and the path loss difference value change amount (d_P") field are included in the MAC-CE signaling. The UE may receive the corresponding MAC-CE signaling and update one d_P value, which is the path loss difference value, or one d_P'' value, which is the change amount of the d_P value, configured in the bandwidth part.

As another example of a combination of MAC-CE signaling configuration information, if the UE is configured by higher layer signaling with one d_P value, which is the path loss difference value, or d_P'' value, which is the change amount of the d_P value, per activated path loss measurement reference signal in a cell, the UE may expect that among the information above, the Serving cell ID field, the uplink bandwidth part ID field, the activated path loss measurement reference signal ID field, and the path loss difference value (d_P) field or/and the path loss difference value change amount (d_P") field are included in the MAC-CE signaling. The UE may receive the corresponding MAC-CE signaling and update one d_P value, which is the path loss difference value, or one d_P'' value, which is the change amount of the d_P value, configured for a specific activated path loss measurement reference signal in the cell.

The UE and the base station may additionally define a field indicating the d_P value or d_P'' value in the MAC-CE signaling for changing the path loss measurement reference signal, so that if the UE receives the corresponding MAC-CE, the UE may be indicated the d_P value or d_P'' value corresponding thereto while changing the path loss measurement reference signal.

After receiving the corresponding MAC-CE from the base station, from 3 slots after PUCCH transmission including HARQ-ACK information for the PDSCH including the corresponding MAC-CE, the UE may update the d_P value, which is the path loss difference value, or d_P", which is the change amount of the d_P value, configured for the UE by higher layer signaling to the value received by MAC-CE signaling and apply it when determining uplink transmit power.

When the UE updates the d_P value, which is the path loss difference value, or the d_P'' value, which is the change amount of the d_P value, to the value received by MAC-CE signaling as in [Method 3-2], the UE may update the path loss difference value relatively dynamically in addition to the semi-statically configured method, so it may be useful for compensating the path loss when determining the transmit power of the UE when the UE has mobility. However, as described above, the UE and the base station need to define new MAC-CE signaling, the base station should be able to periodically measure the d_P value, which is the path loss difference, or the d_P'' value, which is the change amount of the path loss difference value, and the delay time during information exchange between TRPs may need to be small.

### [Method 3-3]

The UE may be configured by higher layer signaling with the d_P value, which is the path loss difference value, or the d_P'' value, which is the change amount of the d_P value, from the base station, and may thereafter be indicated through DCI. The UE may be configured with one or more d_P values, which are the path loss difference values, or d_P'' values, which are the change amounts of the d_P values, per bandwidth part or per cell. For example, the UE may be configured through higher layer signaling with d_P values or d_P'' values up to the maximum number of 4, which is the maximum number of path loss measurement reference signals that the UE may track within a specific cell, and the UE may update one of the 4 d_P values to the value received through DCI.

In an embodiment, the UE may understand a newly defined UE group common DCI and may additionally define and be configured with an RNTI applicable to the DCI, and may receive update information for the d_P value, which is the path loss difference value, or the d_P'' value, which is the change amount of the d_P value, through the UE group common DCI.

In an embodiment, the UE may be indicated update information for the d_P value, which is the path loss difference value, or the d_P'' value, which is the change amount of the d_P value, through a new field in UE-specific DCI (e.g., DCI format 0_1, 0_2, 0_3, 1_1, 1_2, or 1_3).

When the UE updates the d_P value, which is the path loss difference value, or the d_P'' value, which is the change amount of the d_P value, through DCI, the UE may use a method similar to the TPC accumulation or absolute TPC. If the UE uses a method like the TPC accumulation when updating the d_P value, which is the path loss difference value, or the d_P'' value, which is the change amount of the d_P value, through DCI, the UE may update by adding the d_P'' value, which is the change amount of the d_P value, through DCI to the d_P value, which is the path loss difference value, configured by higher layer signaling. If the UE uses a method like the absolute TPC when updating the d_P value, which is the path loss difference value, or the d_P'' value, which is the change amount of the d_P value, through DCI, the UE may replace the d_P value configured by higher layer signaling with the d_P value received through DCI.

When the UE performs updating of the d_P value or d_P'' value through DCI, since a case where the UE fails to receive DCI may occur, HARQ-ACK transmission operation for the corresponding DCI may be defined to report to the base station whether the DCI is received for updating the d_P or d_P'' value. From 3 slots after PUCCH transmission including HARQ-ACK information for the corresponding DCI, the UE may update the d_P value, which is the path loss difference value, or d_P", which is the change amount of the d_P value, configured for the UE by higher layer signaling to the value received through DCI and apply it when determining uplink transmit power. In another manner, from a specific time after the HARQ-ACK information, the UE may update the d_P value, which is the path loss difference value, or d_P", which is the change amount of the d_P value, configured for the UE by higher layer signaling to the value received through DCI and apply it when determining uplink transmit power, and the specific time may be reported as UE capability.

When the UE uses a value received by DCI signaling to update the d_P value, which is the path loss difference value, or the d_P'' value, which is the change amount of the d_P value, as in [Method 3-3], the UE may be capable of DCI-based dynamic path loss difference value update in addition to the semi-statically configured method, so it may be useful for compensating the path loss between the UL-only TRP and the UE when determining the transmit power of the UE when the UE has mobility. However, as described above, the UE and the base station may need to define an additional field in DCI and this causes the DCI overhead to increase, and also the base station should be able to periodically measure the d_P value, which is the path loss difference, or the d_P'' value, which is the change amount of the path loss difference value, and the delay time during information exchange between TRPs may need to be small.

### [Method 3-4]

The UE may be configured by higher layer signaling with the d_P value, which is the path loss difference value, or the d_P'' value, which is the change amount of the d_P value, from the base station, and thereafter may receive two or more CSI-RSs from the base station and implicitly receive the d_P or d_P'' value through the difference in received power of the corresponding CSI-RSs. The UE may be configured with one or more d_P values, which are the path loss difference values, or d_P'' values, which are the change amounts of the d_P values, per bandwidth part or per cell.

For example, the UE may be configured through higher layer signaling with d_P values or d_P'' values up to the maximum number of 4, which is the maximum number of path loss measurement reference signals that the UE may track within a specific cell, and for one of the 4 d_P values, to receive an updated value from the base station, the UE may receive CSI-RSs with different assumed transmit powers from the base station and implicitly identify the d_P or d_P'' value using the difference in received power thereof. To that end, according to the number of d_P values, which are path loss difference values, or d_P'' values, which are change amounts of the d_P values, configured by higher layer signaling for the UE, the UE may be configured with CSI-RS resources for updating the corresponding values.

When the UE uses the difference in received power values by configuring different transmit powers of different CSI-RS resources to update the d_P value, which is the path loss difference value, or the d_P'' value, which is the change amount of the d_P value, as in [Method 3-4], the UE may be capable of DCI-based dynamic path loss difference value update in addition to the semi-statically configured method, so it may be useful for compensating the path loss between the UL-only TRP and the UE when determining the transmit power of the UE when the UE has mobility and, when no interference signal is present, it may have high information accuracy in that non-quantized d_P or d_P'' values may be delivered to the UE through the difference in transmit power of CSI-RS resources. However, to update the d_P value or d_P'' value, the UE should define CSI-RS resources in which different transmit powers are assumed and the difference between the transmit powers of the corresponding CSI-RS resources may vary according to the d_P or d_P'' value calculated by the base station, so the overhead at the base station may increase.

### [Method 3-5]

The UE may receive the d_P or d_P'' value through at least one or more combinations of [Method 3-1] to [Method 3-4] from the base station to update the pre-configured value. When a specific event defined in the base station occurs, the base station may deliver the d_P or d_P'' value to the UE to notify it to update the pre-configured or already activated value. The specific event possible at the base station may be, e.g., when the d_P or d_P'' value calculated through [Method 2-1] or/and [Method 2-2] has changed by a specific ratio or more compared to the previously calculated d_P or d_P'' value (e.g., decreased or increased by 10% or more), the base station may deliver the newly calculated d_P or d_P'' value to the UE to update. The UE may be configured with a timer from the base station. If the base station does not update the d_P, which is the path loss difference value, or d_P", which is its change amount, within the time defined through the corresponding timer, the UE may perform at least one or more combinations of the following matters.
- The UE may request the base station to update the d_P or d_P'' value.
- The UE may perform uplink transmission to the base station without applying the d_P or d_P'' value.
- The UE may perform uplink transmission to the base station by applying the d_P value or d_P'' value initially received from the base station.
- The UE may determine it as a radio link failure circumstance and request higher layer signaling reconfiguration to the base station.

The UE may be notified of at least one or more combinations of [Method 3-1] to [Method 3-5] from the base station through at least one or more combinations of higher layer signaling, MAC-CE signaling, and L1 signaling, or may expect that at least one or more combinations of [Method 3-1] to [Method 3-5] are fixedly defined in the specification. Further, if the UE is notified of a combination of one or more specific methods from the base station through at least one or more combinations of higher layer signaling, MAC-CE signaling, and L1 signaling, this may mean that the UE is not capable of supporting one or more other combinations of methods.

For example, the UE may expect that [Method 3-2] for the update method of the path loss difference value is fixedly defined in the specification. As another example, the UE may be notified of [Method 3-1] from the base station through at least one or more combinations of higher layer signaling, MAC-CE signaling, and L1 signaling, and in such a case, the UE may regard it as being notified by the base station that [Method 3-2] is not supported.

The UE may report to the base station as UE capability whether at least one or more combinations of [Method 3-1] to [Method 3-5] may be supported. If the UE reports as UE capability to the base station that a combination of one or more specific methods may be supported, it may be regarded as the UE reporting that support for one or more other combinations of methods is not possible. For example, the UE may report to the base station whether [Method 3-1] or [Method 3-2] may be supported. As another example, the UE may report to the base station that [Method 3-1] may be supported, and such UE capability reporting may mean that the UE may not support [Method 3-2].

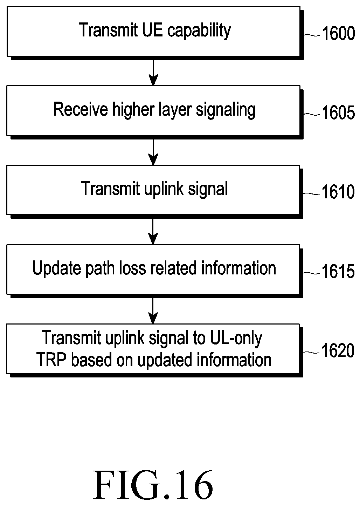

FIG. 16 is a view illustrating operation of a UE for uplink transmit power control according to an embodiment of the disclosure.

Referring to FIG. 16, in step 1600, the UE may transmit UE capability (e.g., UE capability signaling) to the base station. The UE capability signaling that may be reported may include at least one or more combinations of PUSCH, PUCCH, SRS transmission and transmit power parameter related UE capability, unified TCI state operation related UE capability, and UE capability corresponding to [Method 2-1] and [Method 2-2], [Method 3-1] to [Method 3-5]. The step 1600 may also be omitted.

In step 1605, the UE may receive higher layer signaling from the base station according to the reported UE capability. The UE may define higher layer parameters for at least one or more combinations of PUSCH, PUCCH, SRS transmission and transmit power parameter related higher layer signaling, unified TCI state operation related higher layer signaling, and higher layer signaling related to support for [Method 2-1] and [Method 2-2], [Method 3-1] to [Method 3-5] from the base station and use one of them.

In step 1610, the UE may transmit an uplink signal to the base station. The UE may use at least one or more combinations of [Method 2-1] and [Method 2-2] as a method for transmitting the uplink signal.

In step 1615, the UE may be notified of signaling indicating update for path loss related information from the base station. The UE may receive signaling indicating update for path loss related information from the base station using at least one or more combined methods of [Method 3-1] to [Method 3-5].

In step 1620, the UE may perform uplink transmission to the UL-only TRP based on the updated path loss related information.

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

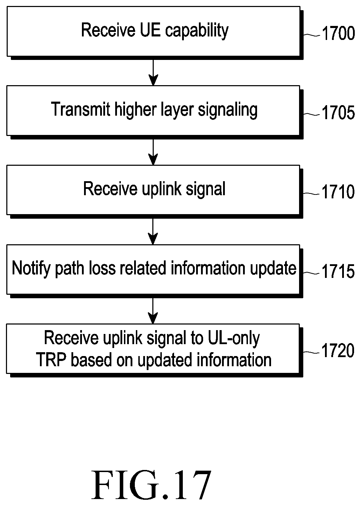

FIG. 17 is a view illustrating operation of a base station for uplink transmit power control according to an embodiment of the disclosure.

Referring to FIG. 17, in step 1700, the base station may receive UE capability (e.g., UE capability signaling) from the UE. The UE capability signaling that the base station may receive may include at least one or more combinations of PUSCH, PUCCH, SRS transmission and transmit power parameter related UE capability, unified TCI state operation related UE capability, and UE capability corresponding to [Method 2-1] and [Method 2-2], [Method 3-1] to [Method 3-5]. The step 1700 may also be omitted.

In step 1705, the base station may transmit higher layer signaling to the UE according to the UE capability reported by the UE. The UE may define higher layer parameters for at least one or more combinations of PUSCH, PUCCH, SRS transmission and transmit power parameter related higher layer signaling, unified TCI state operation related higher layer signaling, and higher layer signaling related to support for [Method 2-1] and [Method 2-2], [Method 3-1] to [Method 3-5] from the base station and use one of them.

In step 1710, the base station may receive an uplink signal from the UE. The base station may expect that the UE performs transmitting the uplink signal through at least one or more combinations of [Method 2-1] and [Method 2-2].

In step 1715, the base station may transmit signaling indicating update for path loss related information to the UE. The base station may transmit signaling indicating update for path loss related information to the UE using at least one or more combined methods of [Method 3-1] to [Method 3-5].

In step 1720, the base station may expect that the UE performs uplink transmission to the UL-only TRP based on the updated path loss related information, and may receive this.

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

### <Fourth embodiment: Uplink Scheduling Method Based on Path Loss Difference Value>

As an embodiment of the disclosure, an uplink transmission scheduling method for a UL-only TRP by indicating a path loss difference value to a UE is described. This embodiment may operate in combination with other embodiments.

In the disclosure, the path loss difference value may be named pathloss offset, PL offset, path loss offset, or the like.

As described above, the UE may be configured with a path loss difference value by higher layer signaling from the base station. Since the UE may not receive a path loss measurement reference signal from the UL-only TRP and thus may not directly measure the path loss between the UE and the UL-only TRP, the UE may indirectly calculate the path loss from the UL-only TRP by applying the path loss difference value to the path loss value calculated based on a path loss measurement reference signal received from a TRP capable of both uplink and downlink operation.

The UE may receive uplink scheduling from the base station and may distinguish whether the uplink scheduling is a transmission to a UL-only TRP or a transmission to a TRP capable of both uplink and downlink operation according to information included in the uplink scheduling. Information related to the path loss difference value may be included in the uplink scheduling. As such, a method in which the UE receives uplink scheduling including information related to a path loss difference value from the base station may consider at least one or more combinations of the following matters.

### [Method 4-1]

The UE may be configured with one or more joint TCI states or UL TCI states by higher layer signaling from the base station. In an embodiment, as in [Table 30] below, the UE may be configured with path loss difference value information in one or more joint TCI states or UL TCI states.

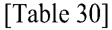

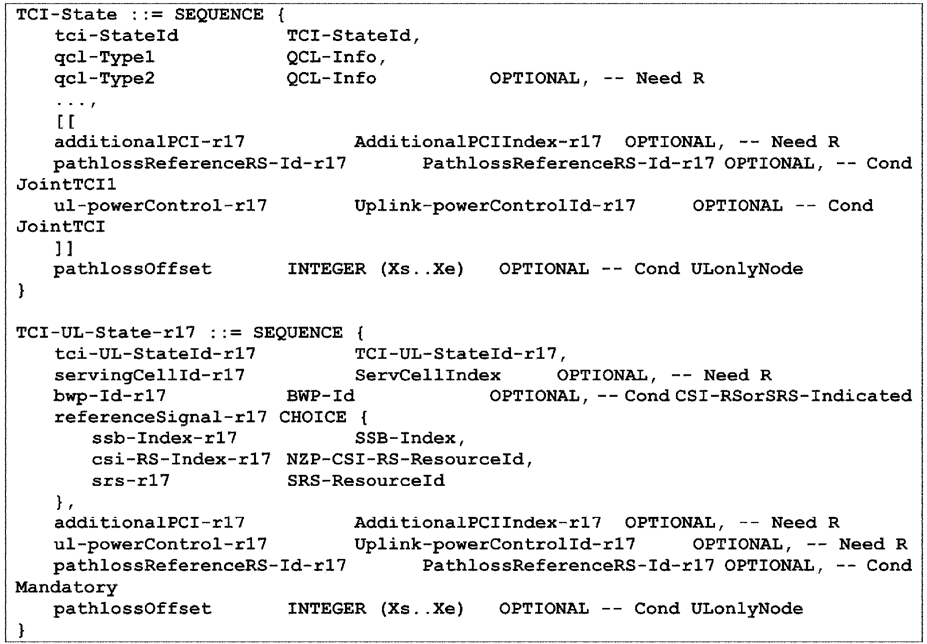

In [Table 30], the UE may be configured with pathlossOffset as higher layer signaling for the path loss difference value, and its value may be an integer possible from Xs to Xe.

In an embodiment, Xs and Xe may be 0 and a natural number (e.g., 0 and 30 respectively), and the value of pathlossOffset may be in 1 dB units. Not considering negative values for the value of pathlossOffset like this is because when the UE considers a plurality of UL-only TRPs, assuming that the distance between the UE and the UL-only TRP is closer than the distance between the UE and the TRP capable of uplink and downlink operation, a higher received signal quality may be assumed when receiving at the UL-only TRP during uplink transmission of the UE.
- In an embodiment, Xs and Xe may be integers including positive and negative numbers (e.g., -10 and 50 respectively), and the value of pathlossOffset may be in 1 dB units. Considering negative values for the value of pathlossOffset like this is because when the UE considers a plurality of UL-only TRPs, considering that the distance between the UE and some UL-only TRPs is farther than the distance between the UE and the TRP capable of uplink and downlink operation, even when receiving at some UL-only TRPs with low received signal quality during uplink transmission of the UE, if a plurality of UL-only TRPs receive the same signal, a diversity effect may be obtained.
- In an embodiment, Xs and Xe may be 2 and 32 respectively, and the value of pathlossOffset may be in 2 dB units. Such a range and unit of values may borrow the range and unit of differential reference signal received power (RSRP) values that the UE may report to the base station. When the UE reports layer 1 RSRP (L1-RSRP), which is one of the channel state information representing the received signal strength, the largest value among L1-RSRPs corresponding to the number set by higher layer signaling for the UE may be quantized to 7 bits and reported in the range from -140 dBm to 44 dBm in 1 dB units, and one or more L1-RSRP values smaller than this may be calculated and reported as differential RSRP that may be represented as a difference value compared to the largest value. The UE may quantize the differential RSRP value to 4 bits and report in the range from 2 dB to 32 dB in 2 dB units. Path loss is calculated as the difference between the transmit power value of a reference signal receivable from the base station for calculating the path loss and the RSRP value calculated by the UE, so if the path loss difference value is calculated, the range and unit of the differential RSRP value may be reused.

The UE may define ULonlyNode as a condition under which the pathlossOffset may be configured from the base station in a joint TCI state or UL TCI state. The condition ULonlyNode may mean that the UE operates in a cell including a UL-only TRP, and this may mean when specific higher layer signaling is configured. In other words, when specific higher layer signaling is configured, the UE may optionally be configured with the pathlossOffset. The name of such condition ULonlyNode is merely an example and may be represented with other names. If the UE is not configured with the pathlossOffset in a joint TCI state or UL TCI state, the UE may regard the path loss difference value as 0.

The UE may be indicated one or more TCI states among the joint TCI state or UL TCI state configured as in [Table 30] above through a TCI state field in DCI from the base station. If the UE has received a joint TCI state or UL TCI state in which the pathlossOffset is configured, and has received scheduling from the base station to perform uplink transmission by applying the joint TCI state or UL TCI state, the UE may regard the uplink transmission as a transmission to a UL-only TRP.

When calculating the transmit power for the uplink transmission, the UE may calculate the path loss between the UE and the UL-only TRP by additionally applying the path loss difference value indicated through the pathlossOffset value configured in the joint TCI state or UL TCI state to the path loss measured through a path loss measurement reference signal (e.g., pathlossReferenceRS-Id-r17 in [Table 30]) configured in the joint TCI state or UL TCI state. The UE may assume that the path loss measurement reference signal (e.g., pathlossReferenceRS-Id-r17 in [Table 30]) was received from a TRP capable of both uplink and downlink operation.

When using [Method 4-1], the UE may be configured with different path loss difference values for each TCI state from the base station, so even when the same path loss reference signal is configured in each TCI state using different TCI states, different path losses may be calculated using different path loss difference values configured in each TCI state. Through the method, if one or more UL-only TRPs are installed in a network to which the UE is connected, the UE may easily use a plurality of path loss difference values. However, when the UE uses the method, the number of path loss difference values that the UE and the base station should manage increases, and since updates for this should be supported for each TCI state, much signaling overhead may be consumed.

### [Method 4-2]

The UE may be configured with one or more joint TCI states or UL TCI states by higher layer signaling from the base station, and the UE may be configured with one or more path loss difference values in BWP-UplinkDedicated, which is higher layer signaling for an uplink bandwidth part, and each path loss difference value may be associated with a group of one or more path loss measurement reference signals. Further, the UE may additionally be configured with higher layer signaling in a joint TCI state or UL TCI state indicating whether to additionally apply a path loss difference value to the path loss measured through a path loss measurement reference signal configurable by higher layer signaling. [Table 31] below is one example that may represent the method, and the association between the path loss difference value and the group of path loss measurement reference signals may not be limited thereto.

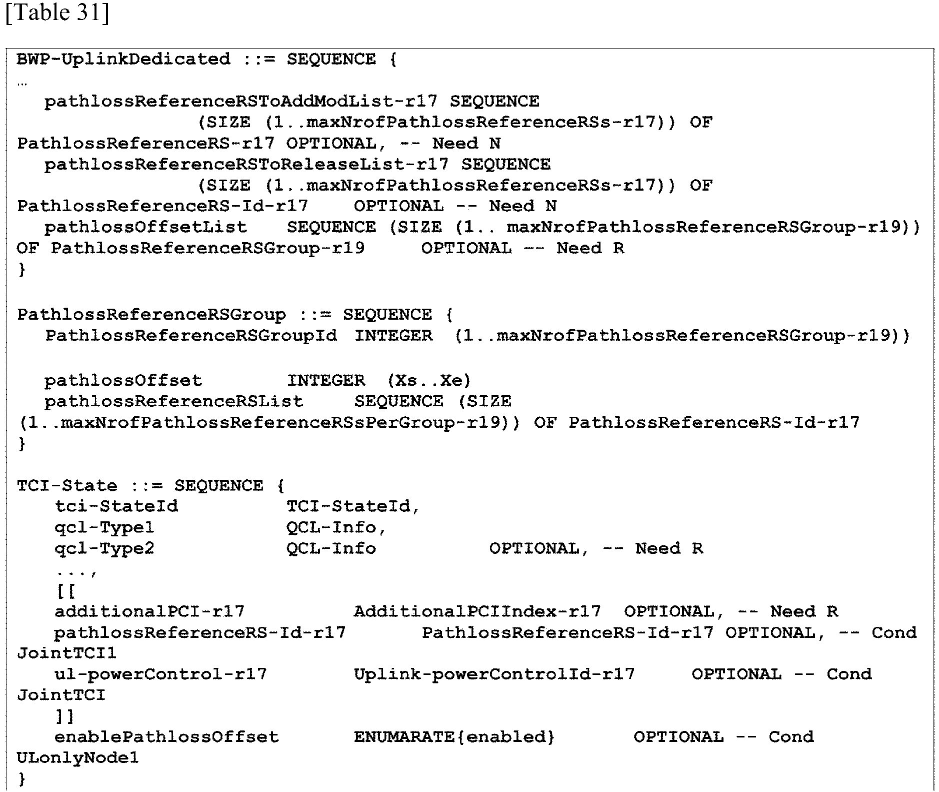

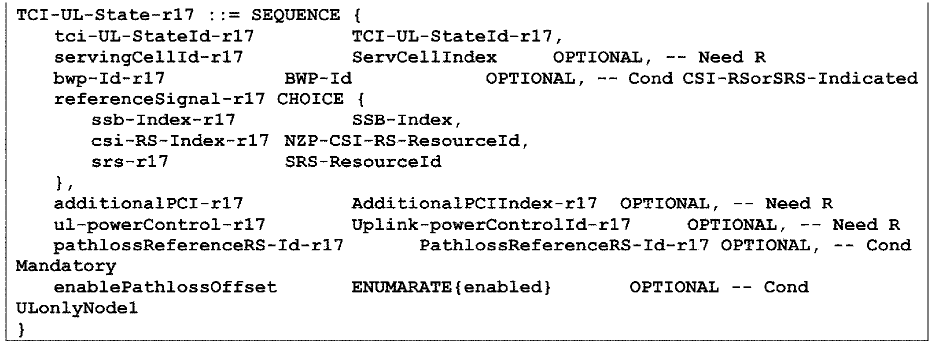

In [Table 31], the UE may be configured with a plurality of pathlossReferenceRSGroup-r19, which is higher layer signaling, in BWP-UplinkDedicated corresponding to an uplink bandwidth part, and may configure pathlossOffsetList through this. Each pathlossReferenceRSGroup may include pathlossReferenceRSGroupld that may indicate the ID of pathlossReferenceRSGroup, pathlossOffset that may mean a path loss difference value applicable to one or more path loss measurement reference signals included in pathlossReferenceRSGroup, and pathlosReferenceRSList that may mean a list of one or more path loss measurement reference signals included in pathlossReferenceRSGroup. The UE may consider the following matters for the higher layer signaling pathlossOffset.
- The UE may be configured with pathlossOffset as higher layer signaling for the path loss difference value, and its value may be an integer possible from Xs to Xe.
- In an embodiment, Xs and Xe may be 0 and a natural number (e.g., 0 and 30 respectively), and the value of pathlossOffset may be in 1 dB units. Not considering negative values for the value of pathlossOffset like this is because when the UE considers a plurality of UL-only TRPs, assuming that the distance between the UE and the UL-only TRP is closer than the distance between the UE and the TRP capable of uplink and downlink operation, a higher received signal quality may be assumed when receiving at the UL-only TRP during uplink transmission of the UE.
- In an embodiment, Xs and Xe may be integers including positive and negative numbers (e.g., -10 and 50 respectively), and the value of pathlossOffset may be in 1 dB units. Considering negative values for the value of pathlossOffset like this is because when the UE considers a plurality of UL-only TRPs, considering that the distance between the UE and some UL-only TRPs is farther than the distance between the UE and the TRP capable of uplink and downlink operation, even when receiving at some UL-only TRPs with low received signal quality during uplink transmission of the UE, if a plurality of UL-only TRPs receive the same signal, a diversity effect may be obtained.
- In an embodiment, Xs and Xe may be 2 and 32 respectively, and the value of pathlossOffset may be in 2 dB units. Such a range and unit of values may borrow the range and unit of differential RSRP values that the UE may report to the base station. When the UE reports L1-RSRP, which is one of the channel state information representing the received signal strength, the largest value among L1-RSRPs corresponding to the number set by higher layer signaling for the UE may be quantized to 7 bits and reported in the range from -140 dBm to 44 dBm in 1 dB units, and one or more L1-RSRP values smaller than this may be calculated and reported as differential RSRP that may be represented as a difference value compared to the largest value, and the differential RSRP value may be quantized to 4 bits and reported in the range from 2 dB to 32 dB in 2 dB units. Path loss is calculated as the difference between the transmit power value of a reference signal receivable from the base station for calculating the path loss and the RSRP value calculated by the UE, so if the path loss difference value is calculated, the range and unit of the differential RSRP value may be reused.

In [Table 31], the UE may be configured with enablePathlossOffset, which is higher layer signaling, in a joint TCI state or UL TCI state. The enablePathlossOffset may be configured from the base station for the UE under a condition called ULonlyNode1. ULonlyNode1 may mean when at least one or more pathlossReferenceRSGroup, which is the higher layer signaling, is configured, or when specific higher layer signaling meaning operating with multiple TRPs including a UL-only TRP is configured for the UE. The name of such condition ULonlyNode1 is merely an example and may be represented with other names.

In an embodiment, the UE may consider a condition such as Need R for the enablePathlossOffset without such a condition as ULonlyNode1. The higher layer signaling enablePathlossOffset may have a value called enabled, and if the UE is configured with the higher layer signaling enablePathlossOffset as enabled in a joint TCI state or UL TCI state as in [Table 31], the UE may determine or calculate the final path loss by additionally applying the pathlossOffset configured in pathlossReferenceRSGroup in which the path loss measurement reference signal (e.g., pathlossReferenceRS-Id-r17) configured in the same joint TCI state or UL TCI state is included to the path loss measured through the path loss measurement reference signal. The name of the condition ULonlyNode1 is merely an example and may be represented with other names.

If the UE is not configured with the enablePathlossOffset in a joint TCI state or UL TCI state, the UE may regard the path loss difference value as 0, or may regard the pathlossOffset configured in pathlossReferenceRSGroup as not being applied to the path loss measurement reference signal (e.g., pathlossReferenceRS-Id-r17) indicated through the corresponding TCI state. For example, the UE may be configured with a maximum of 64 path loss measurement reference signals per cell by higher layer signaling, but since it may track a maximum of 4 path loss measurement reference signals among them, the number of pathlossReferenceRSGroups described above may be up to 4.

When using [Method 4-2], if one or more UL-only TRPs are installed in a network to which the UE is connected, the UE may easily use a plurality of path loss difference values using different pathlossReferenceRSGroups, and updating of the above-described path loss difference value is also possible per pathlossReferenceRSGroup, so its management may be easy. However, the UE and the base station may need to newly configure higher layer signaling called pathlossReferenceRSGroup.

### [Method 4-3]

The UE may be configured with one or more joint TCI states or UL TCI states by higher layer signaling from the base station, and the UE may be configured with one path loss difference value in BWP-UplinkDedicated, which is higher layer signaling for an uplink bandwidth part. Depending on how the UE operates with multiple TRPs, the UE may assume that the path loss difference value is always applied to a specific TCI state.

For example, if the UE operates with multiple TRPs based on the multi-DCI scheme, the UE may not apply the path loss difference value to a TCI state indicated through DCI transmitted to the UE in a control resource set in which higher layer signaling coresetPoolIndex is configured as 0, and for a TCI state indicated through DCI transmitted to the UE in a control resource set in which higher layer signaling coresetPoolIndex is configured as 1, the UE may determine the final path loss by applying the configured path loss difference value to the path loss calculated using pathlossReferenceRS-Id-r17 indicated through the corresponding TCI state.

As another example, if the UE operates with multiple TRPs based on the single-DCI scheme, the UE may not apply the path loss difference value to the first TCI state among two TCI states indicated through DCI, and for the second TCI state, the UE may determine the final path loss by applying the configured path loss difference value to the path loss calculated using pathlossReferenceRS-Id-r17 indicated through the corresponding TCI state. [Table 31] below may be one example that may represent the method, and may not be limited thereto.

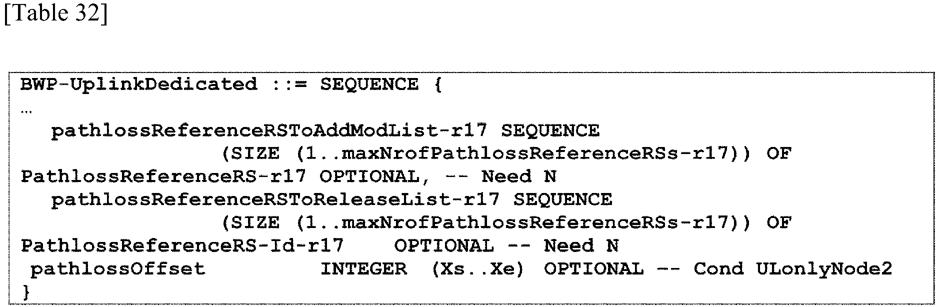

The UE may define ULonlyNode2 as a condition under which the pathlossOffset may be configured from the base station in BWP-UplinkDedicated, which is higher layer signaling. The condition ULonlyNode2 may mean that the UE operates in a cell including a UL-only TRP, and this may mean when specific higher layer signaling is configured. In other words, when specific higher layer signaling is configured, the UE may optionally be configured with the pathlossOffset. The name of such condition ULonlyNode2 is merely an example and may be represented with other names.

In an embodiment, the UE may consider a condition such as Need R for the pathlossOffset without such a condition as ULonlyNode2. If the UE is not configured with the pathlossOffset in BWP-UplinkDedicated, the UE may regard the path loss difference value as 0.

The UE may consider the following matters for the higher layer signaling pathlossOffset.
- The UE may be configured with pathlossOffset as higher layer signaling for the path loss difference value, and its value may be an integer possible from Xs to Xe.
- In an embodiment, Xs and Xe may be 0 and a natural number (e.g., 0 and 30 respectively), and the value of pathlossOffset may be in 1 dB units. Not considering negative values for the value of pathlossOffset like this is because when the UE considers a plurality of UL-only TRPs, assuming that the distance between the UE and the UL-only TRP is closer than the distance between the UE and the TRP capable of uplink and downlink operation, a higher received signal quality may be assumed when receiving at the UL-only TRP during uplink transmission of the UE.
- In an embodiment, Xs and Xe may be integers including positive and negative numbers (e.g., -10 and 50 respectively), and the value of pathlossOffset may be in 1 dB units. Considering negative values for the value of pathlossOffset like this is because when the UE considers a plurality of UL-only TRPs, considering that the distance between the UE and some UL-only TRPs is farther than the distance between the UE and the TRP capable of uplink and downlink operation, even when receiving at some UL-only TRPs with low received signal quality during uplink transmission of the UE, if a plurality of UL-only TRPs receive the same signal, a diversity effect may be obtained.
- In an embodiment, Xs and Xe may be 2 and 32 respectively, and the value of pathlossOffset may be in 2 dB units. Such a range and unit of values may borrow the range and unit of differential RSRP values that the UE may report to the base station. When the UE reports L1-RSRP, which is one of the channel state information representing the received signal strength, the largest value among L1-RSRPs corresponding to the number set by higher layer signaling for the UE may be quantized to 7 bits and reported in the range from -140 dBm to 44 dBm in 1 dB units, and one or more L1-RSRP values smaller than this may be calculated and reported as differential RSRP that may be represented as a difference value compared to the largest value, and the differential RSRP value may be quantized to 4 bits and reported in the range from 2 dB to 32 dB in 2 dB units. Path loss is calculated as the difference between the transmit power value of a reference signal receivable from the base station for calculating the path loss and the RSRP value calculated by the UE, so if the path loss difference value is calculated, the range and unit of the differential RSRP value may be reused.

When using [Method 4-3], the UE does not include information related to the path loss difference value in the TCI state, so the existing TCI state structure may be reused. However, when the UE uses [Method 4-3], if a plurality of TRPs capable of uplink and downlink operation are present in a cell to which the UE is connected and a plurality of TRPs capable of only uplink reception operation also exist, in the case of [Method 4-3], the UE may assume that the path loss difference value is always applied to a specific TCI state (e.g., in multi-DCI based multi-TRP operation, a TCI state indicated through DCI transmitted in a control resource set in which coresetPoolIndex is configured as 1, or in single-DCI based multi-TRP operation, the second TCI state indicated through DCI).

During uplink multi-TRP operation, the UE may not be capable of dynamic switching between scheduling using two different TRPs capable of both uplink and downlink operation from the base station and scheduling in which at least one TRP capable of only uplink reception operation is included. In other words, the UE may assume that it operates semi-statically connected to a TRP capable of uplink reception operation in the corresponding cell. If one or more UL-only TRPs are installed in a network to which the UE is connected, a scheme in which one path loss difference value is configured as in [Method 4-3] may not be appropriate.

### [Method 4-4]

The UE may be configured with one path loss difference value by higher layer signaling from the base station. The configuration for the path loss difference value may differ per bandwidth part, or may differ per cell so that the same value is configured for all bandwidth parts in a cell. When the path loss difference value is configured, the UE may expect that a new field indicating whether to apply the path loss difference value is included in DCI.

Through the new field in DCI, the UE may distinguish whether it is a transmission to a UL-only TRP or a transmission to a TRP capable of both uplink and downlink operation through DCI from the base station. The new field may be 1 bit, and if its value is 1, the path loss difference value may be applied when determining the path loss in the transmit power for the uplink transmission and the uplink transmission may be regarded as being for a UL-only TRP, and if its value is 0, the path loss difference value may not be applied to the uplink transmission and the uplink transmission may be regarded as being for a TRP capable of both uplink and downlink operation.

Since the UE is configured with one path loss difference value and uses it, from the perspective of managing the path loss difference value, signaling exchange between the UE and the base station may be relatively simplified. Further, according to the characteristics of unified TCI state, when the UE is indicated a specific TCI state, it may be applied from a specific time and maintained until a new TCI state is indicated and applied, and through this method, the UE may be capable of dynamic switching between uplink transmission to a UL-only TRP and uplink transmission to a TRP capable of both uplink and downlink operation based on DCI without indication of a new TCI state. However, considering one path loss difference value may have a problem when considering more than one UL-only TRP.

The UE may be configured with one path loss difference value by higher layer signaling from the base station. The configuration for the path loss difference value may differ per bandwidth part, or may differ per cell so that the same value is configured for all bandwidth parts in a cell. When the path loss difference value is configured, the UE may expect that a new field indicating whether to apply the path loss difference value is included in DCI. Through the new field in DCI, the UE may distinguish whether it is a transmission to a UL-only TRP or a transmission to a TRP capable of both uplink and downlink operation through DCI from the base station, and may mean an additional offset of a specific value from the one path loss difference value configured by higher layer signaling.

The new field may be 2 bits, and if its value is 00, the path loss difference value configured by higher layer signaling may be applied when determining the path loss in the transmit power for the uplink transmission (i.e., it may be considered that no additional offset is applied from the path loss difference value configured by higher layer signaling). If the value is 01, 10, or 11, the UE may assume that the final path loss difference value may be determined by considering an additional offset from the path loss difference value configured by higher layer signaling, and may apply -3 dB, 1 dB, or 3 dB for 01, 10, or 11 respectively.

In another manner, the new field in DCI may be 2 bits, and if its value is 00, the path loss difference value may not be applied, and if its value is 11, the path loss difference value configured by higher layer signaling may be applied when determining the path loss in the transmit power for the uplink transmission (i.e., it may be considered that no additional offset is applied from the path loss difference value configured by higher layer signaling), and if its value is 01 or 10, the UE may assume that the final path loss difference value may be determined by considering an additional offset from the path loss difference value configured by higher layer signaling, and may apply -3 dB or 3 dB for 01 or 10 respectively.

Since the UE is configured with one path loss difference value and uses it while also being able to additionally compensate for the path loss difference value through DCI, when the UE has high mobility, a relatively more accurate path loss difference value may be used compared to a method using only the value configured by higher layer signaling. However, to indicate such an accurate path loss difference value, there may be a disadvantage that additional DCI overhead keeps increasing.

The UE may be configured with one or more path loss difference values by higher layer signaling from the base station. The configuration for the path loss difference value may differ per bandwidth part, or may differ per cell so that the same value is configured for all bandwidth parts in a cell. When the path loss difference value is configured, the UE may expect that a new field indicating whether to apply the path loss difference value is included in DCI.

Through the new field in DCI, the UE may distinguish whether it is a transmission to a UL-only TRP or a transmission to a TRP capable of both uplink and downlink operation through DCI from the base station. The new field may be represented in a number of bits capable of representing the number of configured path loss difference values, and a specific path loss difference value may be delivered per codepoint, and at least one of all codepoints may mean that the path loss difference value is not applied.

Since the UE may be configured with and use a plurality of path loss difference values, from the perspective of managing the path loss difference value, signaling exchange between the UE and the base station may be relatively added compared to a circumstance of managing one path loss, but considering a plurality of path loss difference values may be advantageous when considering more than one UL-only TRP.

### [Method 4-5]

The UE may consider at least one or more combined methods of [Method 4-1] to [Method 4-4].

For example, the UE may consider a method combining [Method 4-2] and [Method 4-3].
- The UE may be configured by higher layer signaling with a plurality of pathlossreferenceRSGroups as in [Method 4-2], and may recognize the association relationship between pathlossOffset, which may mean the path loss difference value, and pathlossReferenceRSList composed of one or more path loss measurement reference signals (e.g., PathlossReferenceRS-Id-r17) through pathlossreferenceRSGroup.
- The UE may assume applying the path loss difference value to a specific TCI state as in [Method 4-3]. For example, if the UE operates with multiple TRPs based on the multi-DCI scheme, the UE may not apply the path loss difference value to a TCI state indicated through DCI transmitted to the UE in a control resource set in which higher layer signaling coresetPoolIndex is configured as 0, and for a TCI state indicated through DCI transmitted to the UE in a control resource set in which higher layer signaling coresetPoolIndex is configured as 1, the UE may determine the final path loss by applying the configured path loss difference value to the path loss calculated using pathlossReferenceRS-Id-r17 indicated through the corresponding TCI state. As another example, if the UE operates with multiple TRPs based on the single-DCI scheme, the UE may not apply the path loss difference value to the first TCI state among two TCI states indicated through DCI, and for the second TCI state, the UE may determine the final path loss by applying the configured path loss difference value to the path loss calculated using pathlossReferenceRS-Id-r17 indicated through the corresponding TCI state.
- The UE may apply different path loss difference values to a specific TCI state considered in [Method 4-3] according to which pathlossreferenceRSGroup the path loss measurement reference signal indicated through the corresponding TCI state is included in, through the association relationship between pathlossOffset, which may mean the path loss difference value, and pathlossReferenceRSList composed of one or more path loss measurement reference signals (e.g., PathlossReferenceRS-Id-r17) considered in [Method 4-2]. Further, by configuring some of the path loss measurement reference signals not to be included in the pathlossreferenceRSGroup, even when the specific TCI state considered in [Method 4-3] is indicated, according to the case, the path loss difference value may not be applied.

For example, if the UE operates with multiple TRPs based on the multi-DCI scheme, and pathlossReferenceRS-Id-r17 in the TCI state indicated through DCI transmitted in a control resource set in which higher layer signaling coresetPoolIndex is configured as 1 is not included in any of the one or more configured pathlossreferenceRSGroups, since the corresponding pathlossReferenceRS-Id-r17 has no associated path loss difference value, the UE may not apply the path loss difference value even for uplink signals corresponding to the specific TCI state. As another example, if the UE operates with multiple TRPs based on the single-DCI scheme, and pathlossReferenceRS-Id-r17 in the second TCI state indicated through DCI is not included in any of the one or more configured pathlossreferenceRSGroups, since the corresponding pathlossReferenceRS-Id-r17 has no associated path loss difference value, the UE may not apply the path loss difference value even for uplink signals corresponding to the specific TCI state.
- When using such a combined method, the UE may operate a plurality of path loss difference values without changing the TCI state structure, which may be easy when receiving scheduling in a cell where a plurality of UL-only TRPs are installed, and since the path loss difference value does not always have to be applied to a specific TCI state, the constraint that scheduling for a UL-only TRP should be semi-statically included may not need to be considered, which may be advantageous for receiving flexible scheduling.

As another example, the UE may consider a method combining [Method 4-3] and [Method 4-4].
- The UE may be configured with one path loss difference value through higher layer signaling as in [Method 4-3], and may apply or not apply the path loss to a specific TCI state.
- The UE may apply an additional offset to the path loss difference value through a new field in DCI as in [Method 4-4].
- For example, the UE operates with multiple TRPs based on the multi-DCI scheme and, when calculating the path loss for determining uplink transmit power to which a TCI state indicated through DCI transmitted in a control resource set in which higher layer signaling coresetPoolIndex is configured as 1 is applied, the UE may be indicated whether to apply the path loss itself and, if applied, what additional offset is considered through a new field indicated in the same DCI. As another example, the UE operates with multiple TRPs based on the single-DCI scheme and, when calculating the path loss for determining uplink transmit power to which the second TCI state indicated through DCI is applied, the UE may be indicated whether to apply the path loss itself and, if applied, what additional offset is considered through a new field indicated in the same DCI.

The UE may be notified of at least one or more combinations of [Method 4-1] to [Method 4-5] from the base station through at least one or more combinations of higher layer signaling, MAC-CE signaling, and L1 signaling, or may expect that at least one or more combinations of [Method 4-1] to [Method 4-5] are fixedly defined in the specification. Further, if the UE is notified of a combination of one or more specific methods from the base station through at least one or more combinations of higher layer signaling, MAC-CE signaling, and L1 signaling, this may mean that the UE is not capable of supporting one or more other combinations of methods.

For example, the UE may expect that [Method 4-2] for the method of determining uplink transmit power for a TRP capable of uplink and downlink operation, or determining uplink transmit power for a TRP capable of only uplink reception operation, by being indicated the path loss difference value is fixedly defined in the specification. As another example, the UE may be notified of [Method 4-1] from the base station through at least one or more combinations of higher layer signaling, MAC-CE signaling, and L1 signaling, and in such a case, the UE may regard it as being notified by the base station that [Method 4-2] is not supported.

The UE may report to the base station as UE capability whether at least one or more combinations of [Method 4-1] to [Method 4-5] may be supported. If the UE reports as UE capability to the base station that a combination of one or more specific methods may be supported, it may be regarded as the UE reporting that support for one or more other combinations of methods is not possible. For example, the UE may report to the base station whether [Method 4-1] or [Method 4-2] may be supported. As another example, the UE may report to the base station that [Method 4-1] may be supported, and such UE capability reporting may mean that the UE may not support [Method 4-2].

The UE may consider at least one or more combinations of [Method 4-1] to [Method 4-5] to determine whether to apply the path loss difference value during dynamic grant based PUSCH transmission scheduled based on DCI, Type-2 configured grant based PUSCH transmission activated through DCI, Type-1 configured grant based PUSCH transmission configured through higher layer signaling, PUCCH transmission, SRS transmission, and PRACH transmission.

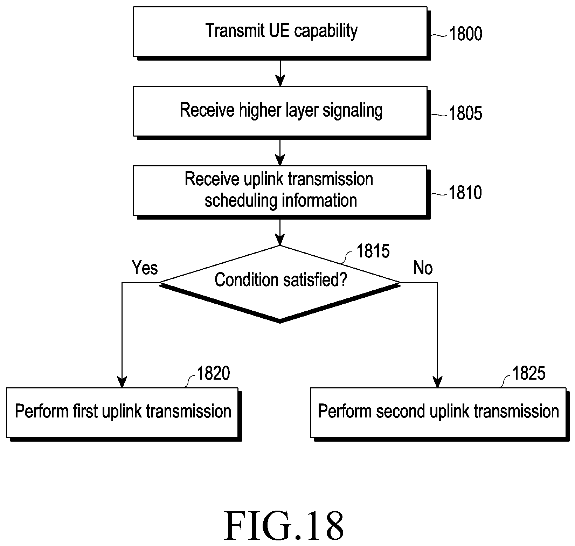

FIG. 18 is a view illustrating operation of a UE for determining uplink transmission scheme according to an embodiment of the disclosure.

Referring to FIG. 18, in step 1800, the UE may transmit UE capability (e.g., UE capability signaling) to the base station. The UE capability signaling that may be reported may include at least one or more combinations of PUSCH, PUCCH, SRS transmission and transmit power parameter related UE capability, unified TCI state operation related UE capability, and UE capability meaning support for [Method 2-1] and [Method 2-2], [Method 3-1] to [Method 3-5], [Method 4-1] to [Method 4-5]. The step 1800 may also be omitted.

In step 1805, the UE may receive higher layer signaling from the base station according to the reported UE capability. The UE may define higher layer parameters for at least one or more combinations of PUSCH, PUCCH, SRS transmission and transmit power parameter related higher layer signaling, unified TCI state operation related higher layer signaling, and higher layer signaling related to support for [Method 2-1] and [Method 2-2], [Method 3-1] to [Method 3-5], [Method 4-1] to [Method 4-5] from the base station and use one of them.

In step 1810, the UE may receive uplink transmission scheduling information from the base station. The UE may receive information on the path loss difference value through at least one or more combined methods of [Method 4-1] to [Method 4-5]. Further, the UE may be notified of at least one of dynamic grant based PUSCH transmission scheduled based on DCI, Type-2 configured grant based PUSCH transmission activated through DCI, Type-1 configured grant based PUSCH transmission configured through higher layer signaling, periodic, semi-persistent, or aperiodic PUCCH transmission, periodic, semi-persistent, or aperiodic SRS transmission, and PRACH transmission through at least one or more combinations of higher layer signaling, MAC-CE signaling, and L1 signaling.

In step 1815, the UE may determine different uplink transmission operations according to conditions of the uplink transmission scheduling information received in step 1810. If information related to the path loss difference value is included in the uplink transmission scheduling information received by the UE in step 1810, the UE may perform a first uplink transmission operation (1820). In other words, the uplink transmission operation of the UE may be understood as uplink transmission to a UL-only TRP. If information related to the path loss difference value is not included in the uplink transmission scheduling information received by the UE in step 1810, the UE may perform a second uplink transmission operation (1825). In other words, the uplink transmission operation of the UE may be understood as uplink transmission to a TRP capable of both uplink and downlink operation.

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

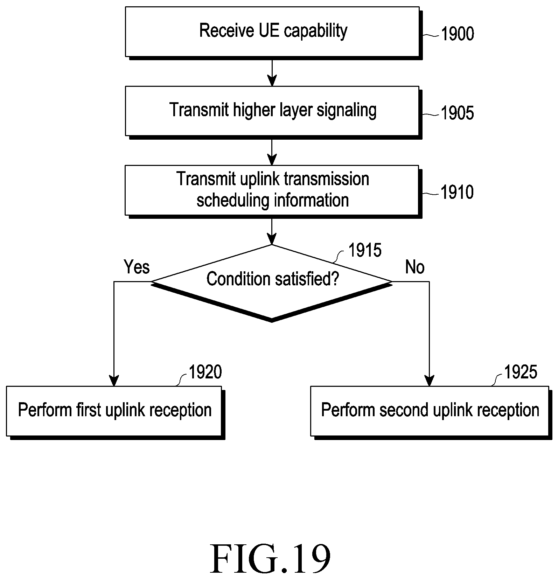

FIG. 19 is a view illustrating operation of a base station for determining uplink transmission scheme according to an embodiment of the disclosure.

Referring to FIG. 19, in step 1900, the base station may receive UE capability (e.g., UE capability signaling) from the UE. The UE capability signaling that may be reported may include at least one or more combinations of PUSCH, PUCCH, SRS transmission and transmit power parameter related UE capability, unified TCI state operation related UE capability, and UE capability meaning support for [Method 2-1] and [Method 2-2], [Method 3-1] to [Method 3-5], [Method 4-1] to [Method 4-5]. The step 1900 may also be omitted.

In step 1905, the base station may transmit higher layer signaling to the UE according to the UE capability reported by the UE. The base station may define higher layer parameters for at least one or more combinations of PUSCH, PUCCH, SRS transmission and transmit power parameter related higher layer signaling, unified TCI state operation related higher layer signaling, and higher layer signaling related to support for [Method 2-1] and [Method 2-2], [Method 3-1] to [Method 3-5], [Method 4-1] to [Method 4-5] for the UE and use one of them.

In step 1910, the base station may transmit uplink transmission scheduling information to the UE. The base station may transmit information on the path loss difference value to the UE through at least one or more combined methods of [Method 4-1] to [Method 4-5]. Further, the base station may notify the UE of at least one of dynamic grant based PUSCH transmission scheduled based on DCI, Type-2 configured grant based PUSCH transmission activated through DCI, Type-1 configured grant based PUSCH transmission configured through higher layer signaling, periodic, semi-persistent, or aperiodic PUCCH transmission, periodic, semi-persistent, or aperiodic SRS transmission, and PRACH transmission through at least one or more combinations of higher layer signaling, MAC-CE signaling, and L1 signaling.

In step 1915, the base station may determine different uplink transmission operations according to conditions of the uplink transmission scheduling information transmitted to the UE in step 1910. If information related to the path loss difference value is included in the uplink transmission scheduling information transmitted by the base station in step 1910, the base station may perform a first uplink reception operation (1920). In other words, the base station may understand that the uplink transmission operation of the UE is uplink reception at the UL-only TRP. If information related to the path loss difference value is not included in the uplink transmission scheduling information transmitted by the base station in step 1910, the base station may perform a second uplink reception operation (1925). In other words, the base station may understand that the uplink transmission operation of the UE is uplink reception at a TRP capable of both uplink and downlink operation.

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

### <Fifth Embodiment: Method for Determining Unified TCI State Type Considering UL-only TRP>

As an embodiment of the disclosure, a method for determining unified TCI state type considering UL-only TRP at a UE and a base station is described. This embodiment may operate in combination with other embodiments.

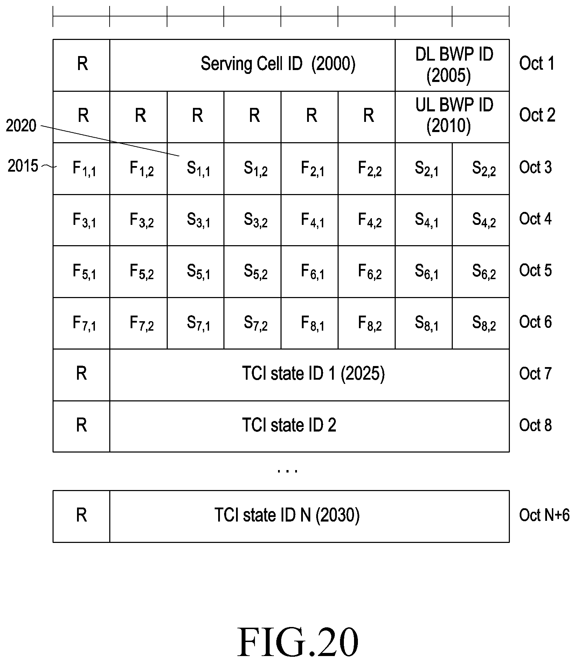

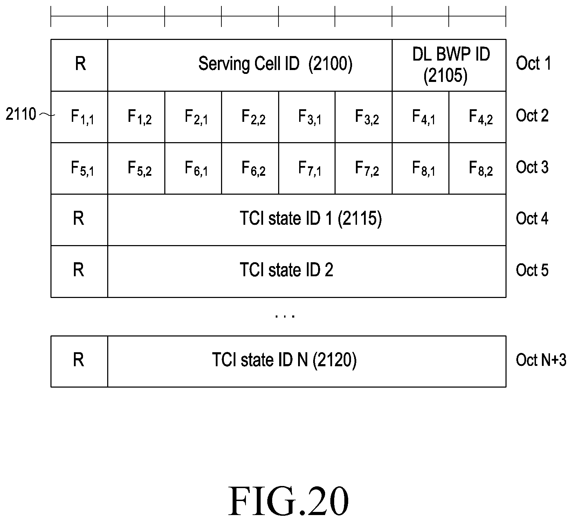

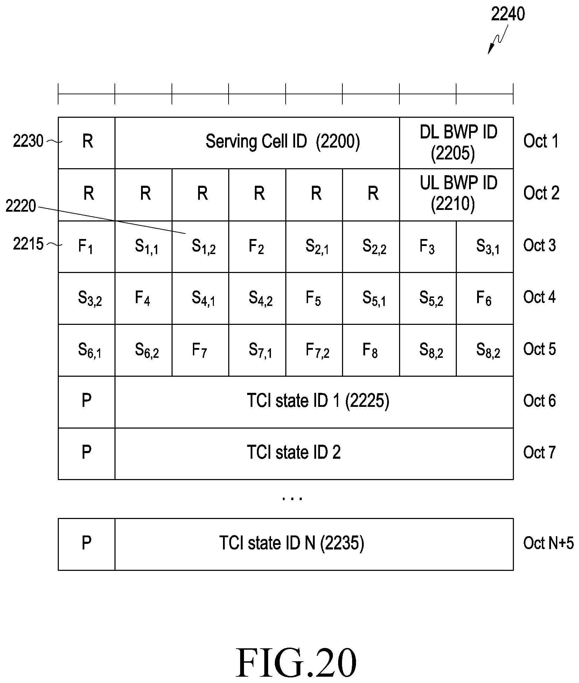

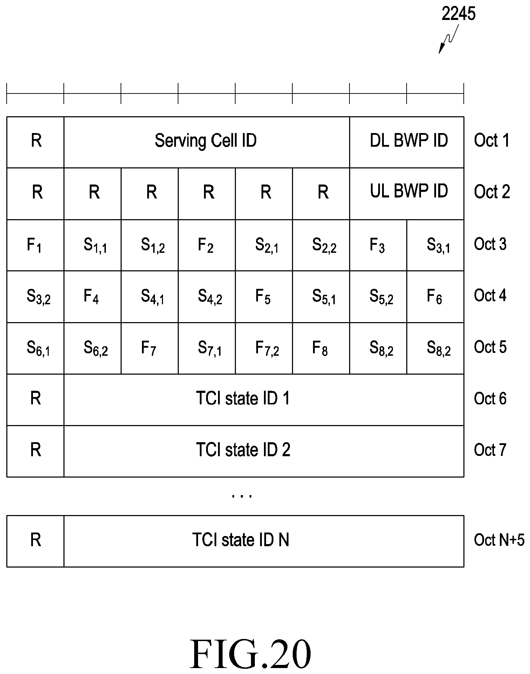

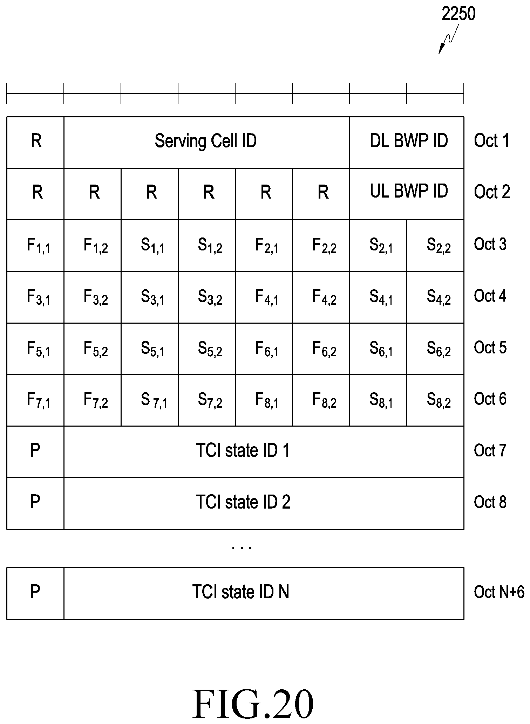

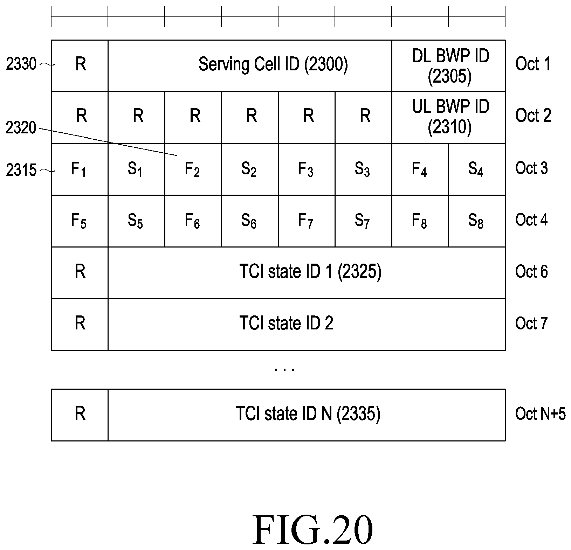

FIG. 20 is a view illustrating a MAC-CE structure for activation and indication of separate DL or UL TCI state based on a unified TCI framework for multi-TRP support according to an embodiment of the disclosure.
- Serving Cell ID 2000: This field may indicate to which serving cell the MAC-CE is to be applied. The length of this field may be 5 bits. If the serving cell indicated by this field is included in one or more of higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.
- DL BWP ID 2005: This field may indicate to which downlink bandwidth part the MAC-CE is applied, and the meaning of each codepoint of this field may correspond to each codepoint of bandwidth part indicator in DCI. The length of this field may be 2 bits.
- UL BWP ID 2010: This field may indicate to which uplink bandwidth part the MAC-CE is applied, and the meaning of each codepoint of this field may correspond to each codepoint of bandwidth part indicator in DCI. The length of this field may be 2 bits.
- F_{i,j} 2015: This field is a field indicating the presence of the jth DL TCI state in the ith codepoint of the TCI state field in DCI format 1_1 or 1_2, and j may be 1 or 2. If the corresponding field is 1, the UE may assume that the jth DL TCI state is present in the ith codepoint of the TCI state field, and if the corresponding field is 0, the UE may assume that the jth DL TCI state is not present in the ith codepoint of the TCI state field.
- S_{i,j} 2020: This field is a field indicating the presence of the jth UL TCI state in the ith codepoint of the TCI state field in DCI format 1_1 or 1_2, and j may be 1 or 2. If the corresponding field is 1, the UE may assume that the jth UL TCI state is present in the ith codepoint of the TCI state field, and if the corresponding field is 0, the UE may assume that the jth UL TCI state is not present in the ith codepoint of the TCI state field.
- TCI state ID 2025: This field may indicate a TCI state that may be identified by TCI-StateId, which is higher layer signaling. If the TCI state ID field of a specific octet means a DL TCI state, this field may be used to represent TCI-StateId expressible in 7 bits. If the TCI state ID field of a specific octet means a UL TCI state, the most significant bit (MSB) of this field may be regarded as a reserved bit, and the remaining 6 bits may be used to represent higher layer signaling UL-TCIState-Id. The maximum number of separate TCI states that may be activated may be a total of 32, with a maximum of 16 DL TCI states and a maximum of 16 UL TCI states.
- R 2030: This means a reserved bit and may be set to 0.

FIG. 21 is a view illustrating a MAC-CE structure for activation and indication of joint TCI state based on a unified TCI framework for multi-TRP support according to an embodiment of the disclosure.
- Serving Cell ID 2100: This field may indicate to which serving cell the MAC-CE is to be applied. The length of this field may be 5 bits. If the serving cell indicated by this field is included in one or more of higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.
- DL BWP ID 2105: This field may indicate to which downlink bandwidth part the MAC-CE is applied, and the meaning of each codepoint of this field may correspond to each codepoint of bandwidth part indicator in DCI. The length of this field may be 2 bits.
- F_{i,j} 2110: This field is a field indicating the presence of the jth joint TCI state in the ith codepoint of the TCI state field in DCI format 1_1 or 1_2, and j may be 1 or 2. If the corresponding field is 1, the UE may assume that the jth joint TCI state is present in the ith codepoint of the TCI state field, and if the corresponding field is 0, the UE may assume that the jth joint TCI state is not present in the ith codepoint of the TCI state field.
- TCI state ID 2115: This field is 7 bits and may indicate a TCI state identifiable by higher layer signaling TCI-StateId. The maximum number of joint TCI states that may be activated may be a maximum of 16.
- R 2120: This means a reserved bit and may be set to 0.

The UE may be configured with a maximum of 4 carrier lists by higher layer signaling from the base station. For example, the 4 carrier lists may be simultaneousU-TCI-UpdateList1, simultaneousU-TCI-UpdateList2, simultaneousU-TCI-UpdateList3, or simultaneousU-TCI-UpdateList4. If a TCI state is indicated to the UE in a specific cell, and the corresponding cell is included in a specific carrier list, and the corresponding carrier list includes other cells besides the corresponding cell, the UE may commonly apply the indicated TCI state to all cells in the corresponding carrier list.

The UE may regard all cells included in a specific carrier list as having the same multi-TRP configuration. For example, the UE may expect that all cells included in a specific carrier list operate with a single TRP. As another example, the UE may expect that all cells included in a specific carrier list operate with multi-TRP based on the single-DCI scheme. As another example, the UE may expect that all cells included in a specific carrier list operate with multi-TRP based on the multi-DCI scheme.

The UE may regard all cells included in a specific carrier list as being configured with higher layer signaling unifiedTCI-StateType-r17 to the same value. For example, the UE may expect that all cells included in a specific carrier list are configured with higher layer signaling unifiedTCI-StateType-r17 as separate. As another example, the UE may expect that all cells included in a specific carrier list are configured with higher layer signaling unifiedTCI-StateType-r17 as joint.

When the UE is configured with specific higher layer signaling or is configured with a path loss difference value from the base station to support the UL-only TRP as described above, the UE may be notified by the base station of the single-DCI based multi-TRP technique as a multi-TRP support scheme. Unlike this, to support the UL-only TRP as described above, the UE may not be notified by the base station of the multi-DCI based multi-TRP technique as a multi-TRP support scheme.

The multi-DCI based multi-TRP technique is a method in which, when connection between TRPs is not smooth and backhaul is non-ideal, each TRP indicates PDCCH to the UE in control resource sets in which different coresetPoolIndex is configured to indicate independent scheduling per each TRP to the UE. In the case of a multi-TRP environment including a UL-only TRP, there is only one TRP capable of downlink transmission and scheduling for the UL-only TRP should also be managed by a TRP capable of uplink and downlink operation. In the case of a multi-TRP environment including a UL-only TRP, the single-DCI based multi-TRP scheme capable of managing scheduling for one or more TRPs with only a single DCI may be appropriate under the assumption that connection between TRPs is smooth and backhaul is ideal. Therefore, unless otherwise mentioned in the following description, the scheme notified from the base station for the UE to support a UL-only TRP may assume the single-DCI based multi-TRP scheme.

Regarding the determination of unified TCI state type for supporting the UL-only TRP as described above and operation related to the carrier list for common TCI state application to one or more cells, the UE may consider at least one or more combinations of the following matters.

### [Method 5-1]

The UE may support separate TCI state as the type of unified TCI state to support a UL-only TRP. In other words, if the UE is configured with specific higher layer signaling or is configured with a path loss difference value from the base station to support the UL-only TRP as described above, the UE may be configured with higher layer signaling unifiedTCI-StateType-r17 as separate. The base station may indicate to the UE one DL TCI state and one UL TCI state for supporting a TRP capable of both uplink and downlink in addition to one UL TCI state for supporting a UL only TRP. In other words, the UE may receive a maximum of one DL TCI state and a maximum of two UL TCI states.

The UE may receive a MAC-CE based on FIG. 20 from the base station to receive activation information for separate TCI state for each codepoint of the TCI state field in DCI format 1_1 and 1_2. In such a case, since the UE may receive a maximum of one DL TCI state and a maximum of two UL TCI states, it may not be able to receive indication for F_{i,2} that may indicate activation for the second DL TCI state in the ith codepoint of the TCI state field in DCI in octets 3 to 6 in FIG. 20, wasting 8 bits in the MAC-CE, but there may be no need to define a new MAC-CE and assign a new ID to the new MAC-CE by reusing the existing MAC-CE.

When the UE configures the carrier list, cells supporting a UL-only TRP may be configured separately from cells not supporting a UL-only TRP. For example, if a first cell and a second cell are configured with specific higher layer signaling or are configured with a path loss difference value from the base station to support the UL-only TRP as described above in a specific cell supporting a UL-only TRP (i.e., operating with multi-TRP based on the single-DCI scheme considering a UL-only TRP), and a third cell and a fourth cell are not (i.e., operating with multi-TRP based on the single-DCI scheme not considering a UL-only TRP), the UE may include the first cell and the second cell in one carrier list, and may include the third cell and the fourth cell in another carrier list, and for example, may not include the first cell and the third cell in the same carrier list. By distinguishing cells supporting a UL-only TRP from cells not supporting a UL-only TRP when configuring the carrier list like this, the UE may be indicated information related to the path loss difference value using a TCI state through the above-described method, and may prevent the information from being applied to cells not supporting a UL-only TRP.

Further, since the UE may be indicated a second DL TCI state for cells not supporting a UL-only TRP (i.e., when all TRPs in a cell are capable of uplink and downlink operation), this may prevent such information from being applied to cells not supporting a UL-only TRP. When distinguishing cells supporting a UL-only TRP when configuring the carrier list like this, support may be possible without additional constraints or rules when applying common TCI state simultaneously. However, a maximum of 4 carrier lists may be configured and as described above there are constraints on higher layer signaling between cells in each carrier list (e.g., there is a constraint that the same single/multi TRP environment is configured, or the same unified TCI state type should be configured), so including only cells supporting a UL-only TRP in one carrier list when configuring the carrier list may be a waste of consuming one of 4.

In another manner, when configuring the carrier list, the UE may include a specific cell in one carrier if it may operate with multi-TRP based on single-DCI regardless of whether the UL-only TRP is supported. For the example, the UE may include at least one or more combinations of the first cell and the second cell (cells operating with multi-TRP based on the single-DCI scheme considering a UL-only TRP) and at least one or more combinations of the third cell and the fourth cell (cells operating with multi-TRP based on the single-DCI scheme not considering a UL-only TRP) in one carrier list. In such a case, the UE should define additional constraints or rules when applying common TCI state simultaneously to the corresponding carrier list, but in a circumstance where the maximum number of carrier lists is 4, including cells operating with multi-TRP based on single-DCI in one carrier list regardless of whether the UL-only TRP is supported, as before, may be considered an efficient signaling usage method.

Additional constraints or rules that the UE and the base station should consider for this may be at least one or more combinations of the following matters. The following matters assumed a case where the first cell, the second cell, the third cell, and the fourth cell are all included in the same carrier list in the example. The following matters assumed a case where the UE receives a MAC-CE based on FIG. 20 to receive TCI state activation for each codepoint of the TCI state field in DCI, or receives a MAC-CE to receive indication for a TCI state, or receives DCI to receive indication for a TCI state.

If when the UE receives information on the path loss difference value from the base station, the information is included in a UL TCI state (e.g., when the UE receives information on the path loss difference value based on [Method 4-1] or [Method 4-2] from the base station)
■ If at least one second UL TCI state among the TCI state activation or TCI state indication received by the UE includes path loss difference value information, the UE may apply the UL TCI state including the path loss difference value information to the first cell and the second cell without additional rules or constraints, and for the third cell and the fourth cell, the UE may apply the UL TCI state including the path loss difference value information while ignoring the path loss difference value information.
■ If the second DL TCI state is included among the TCI state activation or TCI state indication received by the UE, the corresponding TCI state activation or TCI state indication may be applied to the third cell and the fourth cell without additional rules or constraints, and may be ignored for the first cell and the second cell. In other words, for the first cell and the second cell, if two DL TCI states are activated or indicated, only the first DL TCI state among them may be applied.
■ If all second UL TCI states among the TCI state activation or TCI state indication received by the UE do not include the path loss difference value information, the UE may apply the TCI state activation or TCI state indication to the third cell and the fourth cell without additional rules or constraints, and for the first cell and the second cell, the UE may not apply and ignore the second UL TCI state, or may apply the path loss difference value linked to the path loss measurement reference signal included in the second UL TCI state and use it for the uplink transmit power calculation.
   - If when the UE receives information on the path loss difference value from the base station, the information is not included in a UL TCI state (e.g., when the UE receives information on the path loss difference value based on [Method 4-3] or [Method 4-4] from the base station)
■ If the second DL TCI state is included among the TCI state activation or TCI state indication received by the UE, the corresponding TCI state activation or TCI state indication may be applied to the third cell and the fourth cell without additional rules or constraints, and may be ignored for the first cell and the second cell. In other words, for the first cell and the second cell, if two DL TCI states are activated or indicated, only the first DL TCI state among them may be applied.
■ For all second UL TCI states among the TCI state activation or TCI state indication received by the UE, the UE may apply the corresponding TCI state activation or TCI state indication to the third cell and the fourth cell without additional rules or constraints, and for the first cell and the second cell, may not apply the second UL TCI state and ignore it, or may apply the path loss difference value associated with the path loss measurement reference signal included in the second UL TCI state and use it for uplink transmit power calculation.

### [Method 5-2]

The UE may support separate TCI state as the type of unified TCI state to support the UL-only TRP as described above. In other words, the UE may be configured with higher layer signaling unifiedTCI-StateType-r17 as separate to support the UL-only TRP as described above. The base station may indicate to the UE one DL TCI state and one UL TCI state for supporting a TRP capable of both uplink and downlink in addition to one UL TCI state for supporting a UL only TRP.

FIGS. 22A, 22B, and 22C are views illustrating a MAC-CE structure for activation and indication of separate DL or UL TCI state based on a unified TCI framework for multi-TRP support including a UL-only TRP according to an embodiment of the disclosure.
- Serving Cell ID 2200: This field may indicate to which serving cell the MAC-CE is to be applied. The length of this field may be 5 bits. If the serving cell indicated by this field is included in one or more of higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.
- DL BWP ID 2205: This field may indicate to which downlink bandwidth part the MAC-CE is applied, and the meaning of each codepoint of this field may correspond to each codepoint of bandwidth part indicator in DCI. The length of this field may be 2 bits.
- UL BWP ID 2210: This field may indicate to which uplink bandwidth part the MAC-CE is applied, and the meaning of each codepoint of this field may correspond to each codepoint of bandwidth part indicator in DCI. The length of this field may be 2 bits.
- Fᵢ 2215: This field is a field indicating the presence of the DL TCI state in the ith codepoint of the TCI state field in DCI format 1_1 or 1_2. If the field is 1, the UE may assume that the DL TCI state is present in the ith codepoint of the TCI state field, and if the field is 0, the UE may assume that the DL TCI state is not present in the ith codepoint of the TCI state field. Through the field, the UE may receive activation for one DL TCI state in one TCI state codepoint.
- S_{i,j} 2220: This field is a field indicating the presence of the jth UL TCI state in the ith codepoint of the TCI state field in DCI format 1_1 or 1_2, and j may be 1 or 2. If the field is 1, the UE may assume that the jth UL TCI state is present in the ith codepoint of the TCI state field, and if the field is 0, the UE may assume that the jth UL TCI state is not present in the ith codepoint of the TCI state field.
- TCI state ID 2225: This field may indicate a TCI state that may be identified by TCI-StateId, which is higher layer signaling. If the TCI state ID field of a specific octet means a DL TCI state, this field may be used to represent TCI-StateId expressible in 7 bits. If the TCI state ID field of a specific octet means a UL TCI state, the most significant bit (MSB) of this field may be regarded as a reserved bit, and the remaining 6 bits may be used to represent higher layer signaling UL-TCIState-Id. The maximum number of separate TCI states that may be activated may be a total of 32, with a maximum of 16 DL TCI states and a maximum of 16 UL TCI states.
- R 2230: This means a reserved bit and may be set to 0.
- P 2235: If the TCI state in the same octet as this field is a UL TCI state, although information on the path loss difference value is not explicitly included in the UL TCI state, this field may have the meaning of activating whether to apply the path loss difference value associated by higher layer signaling with the path loss measurement reference signal included in the UL TCI state when receiving the corresponding UL TCI state.

If the value of this field is 1, the UE may apply the path loss difference value associated by higher layer signaling with the path loss measurement reference signal included in the UL TCI state when receiving the UL TCI state to determine uplink transmit power. In other words, applying the path loss difference value associated by higher layer signaling with the path loss measurement reference signal included in the UL TCI state may be regarded as being activated. If the value of this field is 0, the UE may not apply the path loss difference value associated by higher layer signaling with the path loss measurement reference signal included in the UL TCI state when receiving the UL TCI state, and may determine uplink transmit power considering only the path loss measured by the path loss measurement reference signal. In other words, applying the path loss difference value associated by higher layer signaling with the path loss measurement reference signal included in the UL TCI state may be regarded as not being activated.

FIG. 22 has a total of 2 parts changed compared to FIG. 20, a first changed part 2215 that saves 8 bits by constraining the number of DL TCI states, and a second changed part 2235 that uses a reserved field in each octet including a TCI state ID field to activate whether to apply the path loss difference value associated with the path loss measurement reference signal included in the UL TCI state when the TCI state ID field in the corresponding octet is a UL TCI state. As a MAC-CE to consider in a cell supporting a UL-only TRP, the UE may consider one of a MAC-CE 2240 considering both the first changed part and the second changed part, a MAC-CE 2245 considering only the first changed part, or a MAC-CE 2250 considering only the second changed part. In the following description, receiving a MAC-CE based on FIG. 22 by the UE may mean receiving one of the 3 MAC-CEs 2240, 2245, 2250.

Further, if when the UE receives information on the path loss difference value from the base station, the information is included in a UL TCI state (e.g., when the UE receives information on the path loss difference value based on [Method 4-1] or [Method 4-2] from the base station), the UE may receive the MAC-CE 2245 of FIG. 22B. Further, if when the UE receives information on the path loss difference value from the base station, the information is not included in a UL TCI state (e.g., when the UE receives information on the path loss difference value based on [Method 4-3] or [Method 4-4] from the base station), the UE may receive the MAC-CE 2240 of FIG. 22A or the MAC-CE 2250 of FIG. 22C.

The UE may receive a MAC-CE based on FIG. 22A, FIG. 22B, or FIG. 22C from the base station to obtain activation information for separate TCI state for each codepoint of the TCI state field in DCI format 1_1 and 1_2.

When the UE configures the carrier list, cells supporting a UL-only TRP may be configured separately from cells not supporting a UL-only TRP. For example, if a first cell and a second cell are configured with specific higher layer signaling or are configured with a path loss difference value from the base station to support the UL-only TRP as described above in a specific cell supporting a UL-only TRP (i.e., operating with multi-TRP based on the single-DCI scheme considering a UL-only TRP), and a third cell and a fourth cell are not (i.e., operating with multi-TRP based on the single-DCI scheme not considering a UL-only TRP), the UE may include the first cell and the second cell in one carrier list, and may include the third cell and the fourth cell in another carrier list, and for example, may not include the first cell and the third cell in the same carrier list.

In another manner, when configuring the carrier list, the UE may include a specific cell in one carrier if it may operate with multi-TRP based on single-DCI regardless of whether the UL-only TRP is supported. For the example, the UE may include at least one or more combinations of the first cell and the second cell (cells operating with multi-TRP based on the single-DCI scheme considering a UL-only TRP) and at least one or more combinations of the third cell and the fourth cell (cells operating with multi-TRP based on the single-DCI scheme not considering a UL-only TRP) in one carrier list. In such a case, the UE should define additional constraints or rules when applying common TCI state simultaneously to the corresponding carrier list, but in a circumstance where the maximum number of carrier lists is 4, including cells operating with multi-TRP based on single-DCI in one carrier list regardless of whether the UL-only TRP is supported, as before, may be considered an efficient signaling usage method. Additional constraints or rules that the UE and the base station should consider for this may be at least one or more combinations of the following matters.

The following matters assumed a case where the first cell, the second cell, the third cell, and the fourth cell are all included in the same carrier list in the example. The following matters assumed a case where the UE receives a MAC-CE based on FIG. 22 to receive TCI state activation for each codepoint of the TCI state field in DCI, or receives a MAC-CE to receive indication for a TCI state, or receives DCI to receive indication for a TCI state.
- If when the UE receives information on the path loss difference value from the base station, the information is included in a UL TCI state (e.g., when the UE receives information on the path loss difference value based on [Method 4-1] or [Method 4-2] from the base station)
   ■ If at least one second UL TCI state among the TCI state activation or TCI state indication received by the UE includes path loss difference value information, the UE may apply the UL TCI state including the path loss difference value information to the first cell and the second cell without additional rules or constraints, and for the third cell and the fourth cell, the UE may apply the UL TCI state including the path loss difference value information while ignoring the path loss difference value information.
   ■ If the TCI state activation or TCI state indication received by the UE includes a second DL TCI state (e.g., when using a MAC-CE structure such as 22-50), the UE may apply the TCI state activation or TCI state indication to the third cell and the fourth cell without additional rules or constraints, and may ignore it for the first cell and the second cell. In other words, for the first cell and the second cell, if two DL TCI states are activated or indicated, only the first DL TCI state among them may be applied.
   ■ If all second UL TCI states among the TCI state activation or TCI state indication received by the UE do not include the path loss difference value information, the UE may apply the TCI state activation or TCI state indication to the third cell and the fourth cell without additional rules or constraints, and for the first cell and the second cell, the UE may not apply and ignore the second UL TCI state, or may apply the path loss difference value linked to the path loss measurement reference signal included in the second UL TCI state and use it for the uplink transmit power calculation.
- If when the UE receives information on the path loss difference value from the base station, the information is not included in a UL TCI state (e.g., when the UE receives information on the path loss difference value based on [Method 4-3] or [Method 4-4] from the base station)
   ■ If the TCI state activation or TCI state indication received by the UE includes a second DL TCI state (e.g., when using a MAC-CE structure such as 2250), the UE may apply the TCI state activation or TCI state indication to the third cell and the fourth cell without additional rules or constraints, and may ignore it for the first cell and the second cell. In other words, for the first cell and the second cell, if two DL TCI states are activated or indicated, only the first DL TCI state among them may be applied.

For all second UL TCI states among the TCI state activation or TCI state indication received by the UE, the UE may apply the TCI state activation or TCI state indication to the third cell and the fourth cell without additional rules or constraints, and for the first cell and the second cell, the UE may not apply and ignore the second UL TCI state, or may apply the path loss difference value linked to the path loss measurement reference signal included in the second UL TCI state and use it for the uplink transmit power calculation.

### [Method 5-3]

The UE may support joint TCI state as the type of unified TCI state to support the UL-only TRP as described above. In other words, if the UE is configured with specific higher layer signaling or is configured with a path loss difference value from the base station to support the UL-only TRP as described above, the UE may be configured with higher layer signaling unifiedTCI-StateType-r17 as joint. The base station may indicate to the UE one joint TCI state for supporting a TRP capable of both uplink and downlink and one joint TCI state for supporting a UL only TRP. In other words, the UE may receive a maximum of two joint TCI states.

If the UE is configured with specific higher layer signaling or is configured with a path loss difference value from the base station to support the UL-only TRP as described above, and operates in FR1, the UE may ignore qcl-Type1, which is higher layer signaling configured in the second joint TCI state, since it is a parameter applied to downlink channels.

If the UE is configured with specific higher layer signaling or is configured with a path loss difference value from the base station to support the UL-only TRP as described above, and operates in FR2, the UE may ignore qcl-Type1, which is higher layer signaling configured in the second joint TCI state, since it is a parameter applied to downlink channels, and for qcl-Type2, may consider at least one of the following matters.
- In an embodiment, the UE may use an SRS resource as the source RS of qcl-Type2. In other words, when performing uplink transmission to a UL-only TRP, if the UE is indicated a joint TCI state in which an SRS resource is configured as the source RS of qcl-Type2, the UE may apply the transmit filter used when transmitting the corresponding source RS SRS resource to uplink transmission to the UL-only TRP. In such a case, using an uplink reference signal as the source RS of qcl-Type2 despite being a joint TCI state, the UE may escape from the constraint that should receive DL TCI state and UL TCI state using the separate TCI framework if the uplink and downlink transmit/receive beams are the same for a TRP capable of both uplink and downlink, but constraint matters on applying the TCI state may be needed when the source RS is not a downlink reference signal for a joint TCI state indicated due to a cell that is not one supporting a UL only TRP when applying TCI state simultaneously within the above-described carrier list.
- In an embodiment, the UE may be configured with a downlink reference signal (e.g., CSI-RS or SSB) as the source RS of qcl-Type2 as before. When the UE performs uplink transmission to a UL only TRP, being configured with an index of a downlink reference signal as the source RS of qcl-Type2 may mean a virtual reference signal index, and may actually be interpreted as an associated SRS resource index. In other words, the source RS configured as a downlink reference signal may be reinterpreted as an SRS resource associated therewith when the UE applies the corresponding TCI state to a cell operating as a UL only TRP.

For example, if the UE is configured with a first CSI-RS resource as the source RS of qcl-Type2 in the second joint TCI state, and if the UE is configured with a third SRS resource as an uplink reference signal associated with the corresponding first CSI-RS resource, the UE may apply the transmit filter used when transmitting the third SRS resource when performing uplink transmission to the UL only TRP. In such a case, application is possible to both cells supporting or not supporting a UL only TRP when applying TCI state simultaneously within the above-described carrier list, but instead there may be a constraint that the association between the uplink reference signal and the downlink reference signal should be configured by higher layer signaling in advance, and as the number of transmit/receive beams operated by the UE and the base station increases, the amount of information on such associations may increase.

The UE may receive a MAC-CE based on FIG. 21 from the base station to receive activation information for joint TCI state for each codepoint of the TCI state field in DCI format 1_1 and 1_2. In such a case, the UE may receive a maximum of two joint TCI states, and there may be no need to define a new MAC-CE and assign a new ID to the new MAC-CE by reusing the existing MAC-CE.

When the UE configures the carrier list, cells supporting a UL-only TRP may be configured separately from cells not supporting a UL-only TRP. For example, if a first cell and a second cell are configured with specific higher layer signaling or are configured with a path loss difference value from the base station to support the UL-only TRP as described above in a specific cell supporting a UL-only TRP (i.e., operating with multi-TRP based on the single-DCI scheme considering a UL-only TRP), and a third cell and a fourth cell are not (i.e., operating with multi-TRP based on the single-DCI scheme not considering a UL-only TRP), the UE may include the first cell and the second cell in one carrier list, and may include the third cell and the fourth cell in another carrier list, and for example, may not include the first cell and the third cell in the same carrier list.

In another manner, when configuring the carrier list, the UE may include a specific cell in one carrier if it may operate with multi-TRP based on single-DCI regardless of whether the UL-only TRP is supported. For the example, the UE may include at least one or more combinations of the first cell and the second cell (cells operating with multi-TRP based on the single-DCI scheme considering a UL-only TRP) and at least one or more combinations of the third cell and the fourth cell (cells operating with multi-TRP based on the single-DCI scheme not considering a UL-only TRP) in one carrier list. Additional constraints or rules that the UE and the base station should consider for this may be at least one or more combinations of the following matters. The following matters assumed a case where the first cell, the second cell, the third cell, and the fourth cell are all included in the same carrier list in the example. The following matters assumed a case where the UE receives a MAC-CE based on FIG. 21 to receive TCI state activation for each codepoint of the TCI state field in DCI, or receives a MAC-CE to receive indication for a TCI state, or receives DCI to receive indication for a TCI state.
- If when the UE receives information on the path loss difference value from the base station, the information is included in a joint TCI state (e.g., when the UE receives information on the path loss difference value based on [Method 4-1] or [Method 4-2] from the base station)
   ■ If at least one second joint TCI state among the TCI state activation or TCI state indication received by the UE includes path loss difference value information, the UE may apply the joint TCI state including the path loss difference value information to the first cell and the second cell without additional rules or constraints, and for the third cell and the fourth cell, may apply the joint TCI state including the path loss difference value information while ignoring the path loss difference value information. When the UE applies the corresponding joint TCI state to the first cell and the second cell, qcl-Type1 configured in the corresponding joint TCI state may be ignored, and if qcl-Type2 is present, it may be applied if the source RS is an SRS resource, and if the source RS is a downlink reference signal, an SRS resource associated with the corresponding downlink reference signal may be regarded as the source RS and applied. When the UE applies the corresponding joint TCI state to the third cell and the fourth cell, qcl-Type1 configured in the corresponding joint TCI state may be applied as is, and if qcl-Type2 is present, if the source RS is an SRS resource, this may be ignored, or an associated downlink reference signal may be identified and applied, and if the source RS is a downlink reference signal, it may be applied as is.
   ■ If all second joint TCI states among the TCI state activation or TCI state indication received by the UE do not include path loss difference value information, the UE may apply the corresponding TCI state activation or TCI state indication to the third cell and the fourth cell without additional rules or constraints, and for the first cell and the second cell, may not apply the second UL TCI state and ignore it, or may apply the path loss difference value associated with the path loss measurement reference signal included in the second UL TCI state and use it for uplink transmit power calculation. When the UE applies the corresponding joint TCI state to the first cell and the second cell, qcl-Type1 configured in the corresponding joint TCI state may be ignored, and if qcl-Type2 is present, it may be applied if the source RS is an SRS resource, and if the source RS is a downlink reference signal, an SRS resource associated with the corresponding downlink reference signal may be regarded as the source RS and applied. When the UE applies the corresponding joint TCI state to the third cell and the fourth cell, qcl-Type1 configured in the corresponding joint TCI state may be applied as is, and if qcl-Type2 is present, if the source RS is an SRS resource, this may be ignored, or an associated downlink reference signal may be identified and applied, and if the source RS is a downlink reference signal, it may be applied as is.
- If when the UE receives information on the path loss difference value from the base station, the information is not included in a UL TCI state (e.g., when the UE receives information on the path loss difference value based on [Method 4-3] or [Method 4-4] from the base station, or when configuring the reserved bit 2120 in the octet where the TCI state field is present in FIG. 21 to have the same meaning as the P bit 2235 in FIG. 22, and through the bit 2120, the UE may be activated to apply the path loss difference value)
   ■ For all second joint TCI states among the TCI state activation or TCI state indication received by the UE, the UE may apply the TCI state activation or TCI state indication to the third cell and the fourth cell without additional rules or constraints, and for the first cell and the second cell, may not apply the second UL TCI state and ignore it, or may apply the path loss difference value associated with the path loss measurement reference signal included in the second UL TCI state and use it for uplink transmit power calculation. When the UE applies the joint TCI state to the first cell and the second cell, qcl-Type1 configured in the joint TCI state may be ignored, and if qcl-Type2 is present, it may be applied if the source RS is an SRS resource, and if the source RS is a downlink reference signal, an SRS resource associated with the corresponding downlink reference signal may be regarded as the source RS and applied. When the UE applies the corresponding joint TCI state to the third cell and the fourth cell, qcl-Type1 configured in the corresponding joint TCI state may be applied as is, and if qcl-Type2 is present, if the source RS is an SRS resource, this may be ignored, or an associated downlink reference signal may be identified and applied, and if the source RS is a downlink reference signal, it may be applied as is.

### [Method 5-4]

The UE may support a mode (e.g., called mixed mode) in which joint TCI state and separate TCI state are combined as the type of unified TCI state to support the UL-only TRP as described above. The name mixed mode is only one example, and the intent for using the name may be to operate one joint TCI state and one UL TCI state. In other words, if the UE is configured with specific higher layer signaling or is configured with a path loss difference value from the base station to support the UL-only TRP as described above, the UE may be configured with higher layer signaling unifiedTCI-StateType-r17 as mix. The base station may indicate to the UE one joint TCI state for supporting a TRP capable of both uplink and downlink and one separate UL TCI state for supporting a UL only TRP. In other words, the UE may receive a maximum of two TCI states of different types.

FIG. 23 is a view illustrating a MAC-CE structure for activation and indication of joint TCI state and UL TCI state based on a unified TCI framework for multi-TRP support including a UL-only TRP according to an embodiment of the disclosure.
- Serving Cell ID 2300: This field may indicate to which serving cell the MAC-CE is to be applied. The length of this field may be 5 bits. If the serving cell indicated by this field is included in one or more of higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.
- DL BWP ID 2305: This field may indicate to which downlink bandwidth part the MAC-CE is applied, and the meaning of each codepoint of this field may correspond to each codepoint of bandwidth part indicator in DCI. The length of this field may be 2 bits.
- UL BWP ID 2310: This field may indicate to which uplink bandwidth part the MAC-CE is applied, and the meaning of each codepoint of this field may correspond to each codepoint of bandwidth part indicator in DCI. The length of this field may be 2 bits.
- Fᵢ 2315: This field is a field indicating the presence of the joint TCI state in the ith codepoint of the TCI state field in DCI format 1_1 or 1_2. If the field is 1, the UE may assume that the joint TCI state is present in the ith codepoint of the TCI state field, and if the field is 0, the UE may assume that the joint TCI state is not present in the ith codepoint of the TCI state field. Through the field, the UE may receive activation for one joint TCI state in one TCI state codepoint.
- Sᵢ 2320: This field is a field indicating the presence of the UL TCI state in the ith codepoint of the TCI state field in DCI format 1_1 or 1_2. If the field is 1, the UE may assume that the UL TCI state is present in the ith codepoint of the TCI state field, and if the field is 0, the UE may assume that the UL TCI state is not present in the ith codepoint of the TCI state field.
- TCI state ID 2325: This field may indicate a TCI state that may be identified by TCI-StateId, which is higher layer signaling. If the TCI state ID field of a specific octet means a joint TCI state, this field may be used to represent TCI-StateId expressible in 7 bits. If the TCI state ID field of a specific octet means a UL TCI state, the most significant bit (MSB) of this field may be regarded as a reserved bit, and the remaining 6 bits may be used to represent higher layer signaling UL-TCIState-Id. The maximum number of TCI states that may be activated may be a total of 32, with a maximum of 16 joint TCI states and a maximum of 16 UL TCI states.
- R 2330: This means a reserved bit and may be set to 0.
- P 2335: If the TCI state in the same octet as this field is a UL TCI state, although information on the path loss difference value is not explicitly included in the UL TCI state, this field may have the meaning of activating whether to apply the path loss difference value associated by higher layer signaling with the path loss measurement reference signal included in the UL TCI state when receiving the corresponding UL TCI state. If the value of this field is 1, the UE may apply the path loss difference value associated by higher layer signaling with the path loss measurement reference signal included in the UL TCI state when receiving the UL TCI state to determine uplink transmit power. In other words, applying the path loss difference value associated by higher layer signaling with the path loss measurement reference signal included in the UL TCI state may be regarded as being activated. If the value of this field is 0, the UE may not apply the path loss difference value associated by higher layer signaling with the path loss measurement reference signal included in the UL TCI state when receiving the UL TCI state, and may determine uplink transmit power considering only the path loss measured by the path loss measurement reference signal. In other words, applying the path loss difference value associated by higher layer signaling with the path loss measurement reference signal included in the UL TCI state may be regarded as not being activated.

The UE may receive a MAC-CE based on FIG. 23 from the base station to receive activation information for a maximum of one joint TCI state and a maximum of one UL TCI state for each codepoint of the TCI state field in DCI format 1_1 and 1_2.

When the UE configures the carrier list, cells supporting a UL-only TRP may be configured separately from cells not supporting a UL-only TRP. For example, if a first cell and a second cell are configured with specific higher layer signaling or are configured with a path loss difference value from the base station to support the UL-only TRP as described above in a specific cell supporting a UL-only TRP (i.e., operating with multi-TRP based on the single-DCI scheme considering a UL-only TRP and configured with higher layer signaling unifiedTCI-StateType-r17 as mix), and a third cell and a fourth cell are not (i.e., operating with multi-TRP based on the single-DCI scheme not considering a UL-only TRP and configured with higher layer signaling unifiedTCI-StateType-r17 as joint or separate), the UE may include the first cell and the second cell in one carrier list, and may include the third cell and the fourth cell in another carrier list, and for example, may not include the first cell and the third cell in the same carrier list.

In another manner, when configuring the carrier list, the UE may include a specific cell in one carrier if it may operate with multi-TRP based on single-DCI regardless of whether the UL-only TRP is supported. For the example, the UE may include at least one or more combinations of the first cell and the second cell (operating with multi-TRP based on the single-DCI scheme considering a UL-only TRP and configured with higher layer signaling unifiedTCI-StateType-r17 as mix) and at least one or more combinations of the third cell and the fourth cell (operating with multi-TRP based on the single-DCI scheme not considering a UL-only TRP and configured with higher layer signaling unifiedTCI-StateType-r17 as joint or separate) in one carrier list. In such a case, the UE should define additional constraints or rules when applying common TCI state simultaneously to the corresponding carrier list, but in a circumstance where the maximum number of carrier lists is 4, including cells operating with multi-TRP based on single-DCI in one carrier list regardless of whether the UL-only TRP is supported, as before, may be considered an efficient signaling usage method.

Additional constraints or rules that the UE and the base station should consider for this may be at least one or more combinations of the following matters. The following matters assumed a case where the first cell, the second cell, the third cell, and the fourth cell are all included in the same carrier list in the example. The following matters assumed a case where the UE receives a MAC-CE based on FIG. 23 to receive TCI state activation for each codepoint of the TCI state field in DCI, or receives a MAC-CE to receive indication for a TCI state, or receives DCI to receive indication for a TCI state.
- If when the UE receives information on the path loss difference value from the base station, the information is included in a UL TCI state (e.g., when the UE receives information on the path loss difference value based on [Method 4-1] or [Method 4-2] from the base station)
   ■ If at least one UL TCI state among the TCI state activation or TCI state indication received by the UE includes path loss difference value information, the UE may apply the UL TCI state including the path loss difference value information to the first cell and the second cell without additional rules or constraints. If the third cell and the fourth cell operate with joint TCI state, the UE may ignore the activated or indicated UL TCI state including the path loss difference value information from the base station, or if the source RS configured in qcl-Type2 in the UL TCI state is a downlink reference signal, may apply information on the corresponding qcl-Type2 to both uplink and downlink, and may apply uplink related information (e.g., path loss measurement reference signal, power control parameter, etc.) in the corresponding UL TCI state to uplink, except for the path loss difference value information. If the third cell and the fourth cell operate with separate TCI state, the UE may apply information in the activated or indicated UL TCI state including the path loss difference value information from the base station except for the path loss difference value information, and may ignore the indicated joint TCI state.
- If all UL TCI states among the TCI state activation or TCI state indication received by the UE do not include path loss difference value information, for the first cell and the second cell, the second UL TCI state may not be applied and ignored, or the path loss difference value associated with the path loss measurement reference signal included in the second UL TCI state may be applied and used for uplink transmit power calculation. If the third cell and the fourth cell operate with separate TCI state, the UE may apply the indicated UL TCI state without additional rules and constraints, and the indicated joint TCI state may be ignored or may be applied to at least one of downlink or uplink. If the third cell and the fourth cell operate with joint TCI state, the UE may apply the indicated joint TCI state without additional rules and constraints, and the UE may ignore the indicated UL TCI state, or if the source RS configured in qcl-Type2 in the UL TCI state is a downlink reference signal, may apply information on the corresponding qcl-Type2 to both uplink and downlink, and may apply uplink related information (e.g., path loss measurement reference signal, power control parameter, etc.) in the corresponding UL TCI state to uplink.
- If when the UE receives information on the path loss difference value from the base station, the information is not included in a UL TCI state (e.g., when the UE receives information on the path loss difference value based on [Method 4-3] or [Method 4-4] from the base station)
   ■ For all UL TCI states among the TCI state activation or TCI state indication received by the UE, for the first cell and the second cell, the second UL TCI state may not be applied and ignored, or the path loss difference value associated with the path loss measurement reference signal included in the second UL TCI state may be applied and used for uplink transmit power calculation. If the third cell and the fourth cell operate with separate TCI state, the UE may apply the indicated UL TCI state without additional rules and constraints, and the indicated joint TCI state may be ignored or may be applied to at least one of downlink or uplink. If the third cell and the fourth cell operate with joint TCI state, the UE may apply the indicated joint TCI state without additional rules and constraints, and the UE may ignore the indicated UL TCI state, or if the source RS configured in qcl-Type2 in the UL TCI state is a downlink reference signal, may apply information on the corresponding qcl-Type2 to both uplink and downlink, and may apply uplink related information (e.g., path loss measurement reference signal, power control parameter, etc.) in the corresponding UL TCI state to uplink.

### [Method 5-5]

The UE may be notified of at least one or more combined methods of [Method 5-1] to [Method 5-4] from the base station through at least one or more combinations of higher layer signaling, MAC-CE signaling, and L1 signaling, or may expect them to be fixedly defined in the specification. For example, the UE may expect that one of [Method 5-1] and [Method 5-2] is configured by higher layer signaling. As another example, the UE may expect that [Method 5-1] is fixedly defined in the specification.

The UE may be notified of at least one or more combinations of [Method 5-1] to [Method 5-5] from the base station through at least one or more combinations of higher layer signaling, MAC-CE signaling, and L1 signaling, or may expect that at least one or more combinations of [Method 5-1] to [Method 5-5] are fixedly defined in the specification. Further, if the UE is notified of a combination of one or more specific methods from the base station through at least one or more combinations of higher layer signaling, MAC-CE signaling, and L1 signaling, this may mean that the UE is not capable of supporting one or more other combinations of methods.

For example, the UE may expect that [Method 5-2] for the determination of unified TCI state type for supporting the UL-only TRP as described above and operation related to the carrier list for common TCI state application to one or more cells is fixedly defined in the specification. As another example, the UE may be notified of [Method 5-1] from the base station through at least one or more combinations of higher layer signaling, MAC-CE signaling, and L1 signaling, and in such a case, the UE may regard it as being notified by the base station that [Method 5-2] is not supported.

The UE may report to the base station as UE capability whether at least one or more combinations of [Method 5-1] to [Method 5-5] may be supported. If the UE reports as UE capability to the base station that a combination of one or more specific methods may be supported, it may be regarded as the UE reporting that support for one or more other combinations of methods is not possible. For example, the UE may report to the base station whether [Method 5-1] or [Method 5-2] may be supported. As another example, the UE may report to the base station that [Method 5-1] may be supported, and such UE capability reporting may mean that the UE may not support [Method 5-2].

The UE may consider at least one or more combinations of [Method 4-1] to [Method 4-5] to determine whether to apply the path loss difference value during dynamic grant based PUSCH transmission scheduled based on DCI, Type-2 configured grant based PUSCH transmission activated through DCI, Type-1 configured grant based PUSCH transmission configured through higher layer signaling, PUCCH transmission, SRS transmission, and PRACH transmission.

The UE may also consider the above-described matters in a cell operating with a single TRP. In other words, although a plurality of TRPs are present in a specific cell, from the perspective of the UE, transmission/reception may be performed using only one TRP for specific scheduling. The UE may consider at least one or more combinations of the following matters as conditions for a cell operating with a single TRP.
- The UE may be configured with only one SRS resource set in which higher layer signaling usage is configured as codebook or non-codebook from the base station.
- The UE may be configured with only one coresetPoolIndex, which is higher layer signaling, from the base station, or may not be configured with it.
- The UE may not receive a MAC-CE based on FIG. 20 or FIG. 21 from the base station, and may receive a MAC-CE based on FIG. 6.

In other words, the base station may deliver scheduling to the UE about from which TRP to receive downlink and to which TRP to transmit uplink, and this may be interpreted as a method of selecting a TRP through a TCI state indicated to the UE. Among UL TCI states indicated to the UE, one corresponding to a UL-only TRP may have a path loss difference value explicitly included in the corresponding UL TCI state and indicated, or may be implicitly indicated to use the path loss difference value associated by higher layer signaling with the path loss measurement reference signal included in the corresponding UL TCI state, according to which of [Method 4-1] to [Method 4-5] the UE operates with.

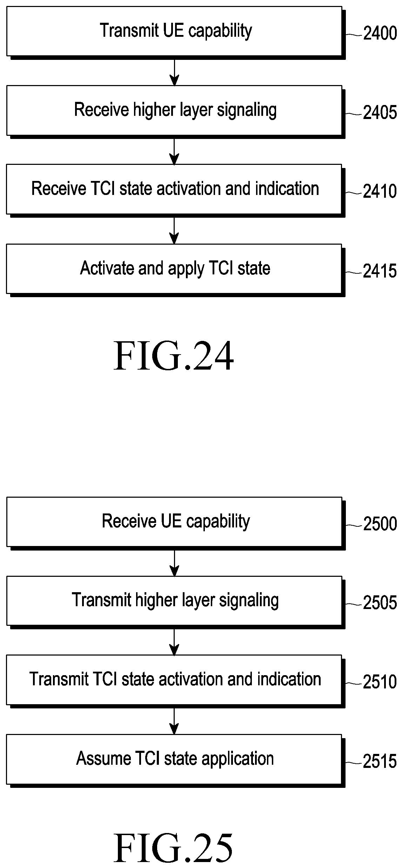

FIG. 24 is a view illustrating operation of a UE for applying TCI state activation and indication according to an embodiment of the disclosure.

Referring to FIG. 24, in step 2400, the UE may transmit UE capability (e.g., UE capability signaling) to the base station. The UE capability signaling that may be reported may include at least one or more combinations of PUSCH, PUCCH, SRS transmission and transmit power parameter related UE capability, unified TCI state operation related UE capability, unified TCI state based TCI state simultaneous application to a plurality of cells related UE capability, and UE capability meaning support for [Method 2-1] and [Method 2-2], [Method 3-1] to [Method 3-5], [Method 4-1] to [Method 4-5], [Method 5-1] to [Method 5-5]. The step 2400 may also be omitted.

In step 2405, the UE may receive higher layer signaling from the base station according to the reported UE capability. The UE may define higher layer parameters for at least one or more combinations of PUSCH, PUCCH, SRS transmission and transmit power parameter related higher layer signaling, unified TCI state operation related higher layer signaling, unified TCI state based TCI state simultaneous application to a plurality of cells related higher layer signaling, and higher layer signaling related to support for [Method 2-1] and [Method 2-2], [Method 3-1] to [Method 3-5], [Method 4-1] to [Method 4-5], [Method 5-1] to [Method 5-5] from the base station and use one of them.

In step 2410, the UE may receive TCI state activation and indication from the base station. The UE may assume a case where it receives a MAC-CE to receive TCI state activation for each codepoint of the TCI state field in DCI, or receives a MAC-CE to receive indication for a TCI state, or receives DCI to receive indication for a TCI state.

In step 2415, the UE may apply the TCI state activation and indication received in step 2410 through a method considering at least one or more combinations of [Method 5-1] to [Method 5-5].

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

FIG. 25 is a view illustrating operation of a base station for applying TCI state activation and indication according to an embodiment of the disclosure.

Referring to FIG. 25, in step 2500, the base station may receive UE capability (e.g., UE capability signaling) from the UE. The UE capability signaling that may be reported may include at least one or more combinations of PUSCH, PUCCH, SRS transmission and transmit power parameter related UE capability, unified TCI state operation related UE capability, unified TCI state based TCI state simultaneous application to a plurality of cells related UE capability, and UE capability meaning support for [Method 2-1] and [Method 2-2], [Method 3-1] to [Method 3-5], [Method 4-1] to [Method 4-5], [Method 5-1] to [Method 5-5]. The step 2500 may also be omitted.

In step 2505, the base station may transmit higher layer signaling to the UE according to the UE capability reported by the UE. The base station may define higher layer parameters for at least one or more combinations of PUSCH, PUCCH, SRS transmission and transmit power parameter related higher layer signaling, unified TCI state operation related higher layer signaling, unified TCI state based TCI state simultaneous application to a plurality of cells related higher layer signaling, and higher layer signaling related to support for [Method 2-1] and [Method 2-2], [Method 3-1] to [Method 3-5], [Method 4-1] to [Method 4-5], [Method 5-1] to [Method 5-5] for the UE and use one of them.

In step 2510, the base station may transmit TCI state activation and indication to the UE. The base station may assume a case where it transmits a MAC-CE to notify the UE of TCI state activation for each codepoint of the TCI state field in DCI, or transmits a MAC-CE to notify of indication for a TCI state, or transmits DCI to notify of indication for a TCI state.

In step 2515, the base station may assume that the UE applies the TCI state activation and indication received in step 2510 through a method considering at least one or more combinations of [Method 5-1] to [Method 5-5].

The above-described flowchart illustrates an exemplary method that may be implemented according to the principles of the disclosure, and various modifications may be made to the method illustrated in the flowchart herein. For example, although illustrated as a series of steps, various steps in each figure may overlap, occur in parallel, occur in a different order, or occur multiple times. In another example, a step may be omitted or replaced with another step.

### [UE/Base Station Structure]

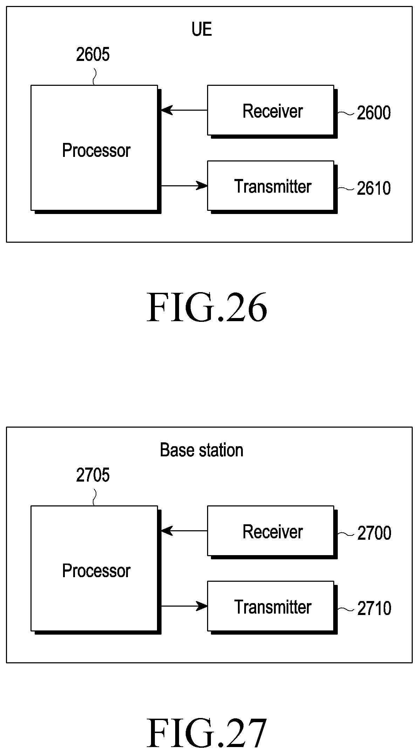

FIG. 26 is a view illustrating a structure of a UE according to an embodiment of the disclosure.

Referring to FIG. 26, the UE may include a transceiver including a receiver 2600 and a transmitter 2610, memory (not illustrated), and a processor 2605 (e.g., a controller). According to the communication method of the UE described above, the transceiver 2600, 2610, the memory, and the processor 2605 of the UE may operate. However, the components of the UE are not limited thereto. For example, the UE may include more or fewer components than the above-described components. Further, the transceiver, memory, and processor may be implemented in the form of one chip.

The transceiver 2600, 2610 may transmit/receive a signal to/from the base station. The signal may include control information and data. To this end, the transceiver 2600, 2610 may include a radio frequency (RF) transmitter that up-converts and amplifies a frequency of a transmitted signal, and an RF receiver that low-noise amplifies a received signal and down-converts a frequency thereof. However, this is only an embodiment of the transceiver 2600, 2610, and the components of the transceiver 2600, 2610 are not limited to the RF transmitter and the RF receiver.

The transceiver 2600, 2610 may receive a signal through a wireless channel and output the signal to the processor 2605, and may transmit a signal output from the processor 2605 through the wireless channel.

The memory may store programs and data necessary for the operation of the UE. The memory may store control information or data that is included in the signal transmitted/received by the UE. The memory may include a storage medium, such as ROM, RAM, hard disk, CD-ROM, and DVD, or a combination of storage media. There may be provided a plurality of memories.

The processor 2605 may control a series of processes so that the UE operates according to the above-described embodiment. For example, the processor may control the components of the UE to receive a DCI composed of two layers and receive a plurality of PDSCHs simultaneously. There may be a plurality of processors 2605, and the processor 2605 may perform an operation of controlling the components of the UE by executing a program stored in the memory.

FIG. 27 is a view illustrating a structure of a base station according to an embodiment of the disclosure.

Referring to FIG. 27, the base station may include a transceiver including a receiver 2700 and a transmitter 2710, memory (not illustrated), and a processor 2705 (e.g., a controller). According to the communication method of the base station described above, the transceiver 2700, 2710, the memory, and the processor 2705 of the base station may operate. However, the components of the base station are not limited thereto. For example, the base station may include more or fewer components than the above-described components. Further, the transceiver, memory, and processor may be implemented in the form of one chip.

The transceiver 2700, 2710 may transmit/receive a signal to/from the UE. The signal may include control information and data. To this end, the transceiver 2700, 2710 may include a radio frequency (RF) transmitter that up-converts and amplifies a frequency of a transmitted signal, and an RF receiver that low-noise amplifies a received signal and down-converts a frequency thereof. However, this is only an embodiment of the transceiver 2700, 2710, and the components of the transceiver 2700, 2710 are not limited to the RF transmitter and the RF receiver.

The transceiver 2700, 2710 may receive a signal through a wireless channel and output the signal to the processor 2705, and may transmit a signal output from the processor 2705 through the wireless channel.

The memory may store programs and data necessary for the operation of the base station. The memory may store control information or data that is included in the signal transmitted/received by the base station. The memory may include a storage medium, such as ROM, RAM, hard disk, CD-ROM, and DVD, or a combination of storage media. There may be provided a plurality of memories.

The processor 2705 may control a series of processes so that the base station operates according to the above-described embodiment of the disclosure. For example, the processor 2705 may control each component of the base station to configure two-layer DCIs including allocation information for a plurality of PDSCHs and transmit the DCIs. There may be a plurality of processors 2705, and the processor 2705 may perform an operation of controlling the components of the base station by executing a program stored in the memory.

The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural expression is selected to be suitable for the presented circumstance for convenience of description, and the disclosure is not limited to a singular or plural component, and even a component represented in plural may be configured as singular, or a component represented in singular may be configured as plural.

The embodiments herein are provided merely for better understanding of the present invention, and the present invention should not be limited thereto or thereby. In other words, it is apparent to one of ordinary skill in the art that various changes may be made thereto without departing from the scope of the disclosure. Further, the embodiments may be practiced in combination. For example, the base station and the UE may be operated in a combination of parts of an embodiment and another embodiment. For example, some of the first and second embodiments of the disclosure may partially be combined and be operated by the base station and the UE. Further, although the above-described embodiments are suggested based on the FDD LTE system, other modifications based on the technical spirit of the above-described embodiments may be implemented in other systems, such as TDD LTE systems or 5G or NR systems.

In the drawings illustrating methods of the present invention, the order of description is not necessarily identical to the order of execution, and some operations may be performed in a different order or simultaneously.

Some of the components shown in the drawings illustrating methods according to embodiments may be omitted in such an extent as not to impair the gist or essence of the disclosure.

The methods in the disclosure may be performed in a combination of all or some of the embodiments described herein in such an extent as not to impair the gist or essence of the disclosure.

Various embodiments of the disclosure have been described above. The foregoing description of the disclosure is merely an example, and embodiments of the disclosure are not limited thereto. It will be appreciated by one of ordinary skill in the art that the present disclosure may be implemented in other various specific forms without changing the essence or technical spirit of the present disclosure. It should be noted that the scope of the present invention is defined by the appended claims rather than the described description of the embodiments and include all modifications or changes made to the claims or equivalents of the claims.

## Claims

1. A method of a user equipment (UE) for uplink transmission in a wireless communication system, the method comprising:
receiving, from a base station through higher layer signaling, information for the UE to support a transmit/receive point (TRP) supporting only an uplink reception function (UL-only TRP);
receiving, from the base station, transmission configuration indicator (TCI) state information related to the UL-only TRP; and
transmitting an uplink signal based on the information for the UE to support the UL-only TRP and the TCI state information.

2. The method of claim 1, further comprising using a separate TCI state scheme among unified TCI states to support the UL-only TRP.

3. The method of claim 1, further comprising using a joint TCI state scheme among unified TCI states to support the UL-only TRP based on the UE operating in frequency range 1 (FR1).

4. The method of claim 1, further comprising:
receiving, from the base station, information related to a method for determining uplink transmit power related to a plurality of TRPs;
transmitting an uplink signal to the plurality of TRPs;
receiving, from the base station, signaling indicating update of path loss related information; and
performing uplink transmission to the UL-only TRP among the TRPs based on the signaling.

5. The method of claim 1, further comprising:
receiving uplink transmission scheduling information from the base station;
determining whether information related to a difference value of path loss is included in the uplink transmission scheduling information;
performing a first uplink transmission based on the information related to the difference value of path loss being included in the uplink transmission scheduling information; and
performing a second uplink transmission based on the information related to the difference value of path loss not being included in the uplink transmission scheduling information.

6. The method of claim 1, further comprising receiving, from the base station, a TCI state activation indication related to the UL-only TRP.

7. A method of a base station for scheduling uplink transmission in a wireless communication system, the method comprising:
transmitting, to a UE through higher layer signaling, information for the UE to support a transmit/receive point (TRP) supporting only an uplink reception function (UL-only TRP);
transmitting, to the UE, transmission configuration indicator (TCI) state information related to the UL-only TRP; and
receiving an uplink signal through the UL-only TRP based on the TCI state information.

8. The method of claim 7, further comprising:
transmitting, to the UE, information related to a method for determining uplink transmit power related to a plurality of TRPs;
receiving uplink signals from the UE through the plurality of TRPs; and
transmitting, to the UE, signaling indicating update of path loss related information after receiving the uplink signals.

9. A user equipment (UE) for uplink transmission in a wireless communication system, comprising:
a transceiver; and
a controller, wherein the controller is configured to:
receive, from a base station through higher layer signaling, information for the UE to support a transmit/receive point (TRP) supporting only an uplink reception function (UL-only TRP);
receive, from the base station, transmission configuration indicator (TCI) state information related to the UL-only TRP; and
control to transmit an uplink signal based on the information for the UE to support the UL-only TRP and the TCI state information.

10. The UE of claim 9, wherein the controller is configured to use a separate TCI state scheme among unified TCI states to support the UL-only TRP.

11. The UE of claim 9, wherein the controller is configured to use a joint TCI state scheme among unified TCI states to support the UL-only TRP based on the UE operating in frequency range 1 (FR1).

12. The UE of claim 9, wherein the controller is configured to:
receive, from the base station, information related to a method for determining uplink transmit power related to a plurality of TRPs;
control to transmit an uplink signal to the plurality of TRPs;
receive, from the base station, signaling indicating update of path loss related information; and
perform uplink transmission to the UL-only TRP among the TRPs based on the signaling.

13. The UE of claim 9, wherein the controller is configured to:
receive uplink transmission scheduling information from the base station;
determine whether information related to a difference value of path loss is included in the uplink transmission scheduling information;
perform a first uplink transmission based on the information related to the difference value of path loss being included in the uplink transmission scheduling information; and
perform a second uplink transmission based on the information related to the difference value of path loss not being included in the uplink transmission scheduling information.

14. The UE of claim 9, wherein the controller is configured to receive, from the base station, a TCI state activation indication related to the UL-only TRP.

15. A base station for scheduling uplink transmission in a wireless communication system, comprising:
a transceiver; and
a controller, wherein the controller is configured to:
control to transmit, to a UE through higher layer signaling, information for the UE to support a transmit/receive point (TRP) supporting only an uplink reception function (UL-only TRP);
control to transmit, to the UE, transmission configuration indicator (TCI) state information related to the UL-only TRP; and
receive an uplink signal through the UL-only TRP based on the TCI state information.
